# EUROPEAN PATENT APPLICATION

(11) **EP 4 841 900 A1**
(43) Date of publication of application: **18.11.2026**
(21) Application number: 24916627.3
(22) Date of filing: 05.12.2024
(51) Int. Cl.: H04B 7/04

(54) **INFORMATION TRANSMISSION METHOD AND APPARATUS, DEVICE, SYSTEM, AND COMPUTER-READABLE STORAGE MEDIUM**

(30) Priority: 08.01.2024 CN 202410031098
(71) Applicant: Datang Mobile Communications Equipment Co., Ltd., Beijing 100085 (CN)
(72) Inventor: YE, Lingyun, Beijing 100085 (CN); SONG, Lei, Beijing 100085 (CN); HUANG, Qiuping, Beijing 100085 (CN); LI, Hui, Beijing 100085 (CN); LUO, Yajuan, Beijing 100085 (CN)
(74) Representative: Studio Torta S.p.A.
(86) International application number: PCT/CN2024/137180
(87) International publication number: WO 2025/148580

(57) **Abstract**

The present application relates to an information transmission method and apparatus, a device, a system, and a computer-readable storage medium. The method comprises: a network-side device determining antenna ports respectively corresponding to a plurality of CSI-RS resources, each CSI-RS resource corresponding to a different antenna port; and transmitting CSI-RS's to a UE on the antenna ports corresponding to the plurality of CSI-RS resources, the CSI-RS's being used by the UE to generate a CSI report on the basis of the CSI-RS's.

## Description

### CROSS REFERENCE OF RELATED APPLICATION

The present disclosure claims a priority to Chinese Patent Application No. 2024100310980, filed on January 8, 2024, and entitled "INFORMATION TRANSMISSION METHOD, APPARATUS, DEVICE, SYSTEM, AND COMPUTER-READABLE STORAGE MEDIUM", which is incorporated herein by reference in its entirety.

### FIELD

The present disclosure relates to the field of communication technology, and in particular, to an information transmission method, an apparatus, a device, a system and a computer-readable storage medium.

### BACKGROUND

In a communication system, channel state information (CSI) needs to be acquired using a reference signal. In a new radio (NR) system, a downlink reference signal is a CSI reference signal (CSI-RS).

In the related art, a network device sends a CSI-RS to a user equipment (UE) on an antenna port corresponding to a CSI-RS resource. The UE performs a channel measurement based on the CSI-RS transmitted by the network device and then feeds back a measurement result to the network device, so that the network device can learn the channel state information and optimize wireless communication quality.

However, with the rapid development of massive multiple-input multiple-output (MIMO) technology, the above CSI-RS transmission method cannot be better applied to the channel measurement process in a massive MIMO scenario.

### SUMMARY

In a first aspect, an embodiment of the present disclosure provides an information transmission method. The information transmission method is applied to a network device, and the method includes:
determining antenna ports respectively corresponding to a plurality of CSI-RS resources, where the plurality of CSI-RS resources each correspond to different antenna ports; and
sending CSI-RSs to a UE through the antenna ports respectively corresponding to the plurality of CSI-RS resources, where the CSI-RSs are configured for the UE to generate a CSI report based on the CSI-RSs.

In a second aspect, an embodiment of the present disclosure provides an information transmission method. The information transmission method is applied to a UE, and the method includes:
receiving CSI-RSs sent by a network device, where the CSI-RSs are sent by the network device through antenna ports respectively corresponding to a plurality of CSI-RS resources, and the plurality of CSI-RS resources each correspond to different antenna ports; and
determining the antenna ports according to the CSI-RSs, and generating a CSI report according to the antenna ports and the CSI-RSs.

In a third aspect, an embodiment of the present disclosure provides an information transmission apparatus. The information transmission apparatus is applied to a network device, and the apparatus includes:
a determination module configured to determine antenna ports respectively corresponding to a plurality of CSI-RS resources, where the plurality of CSI-RS resources each correspond to different antenna ports; and
a transmission module configured to send CSI-RSs to a UE through the antenna ports respectively corresponding to the plurality of CSI-RS resources, where the CSI-RSs are configured for the UE to generate a CSI report based on the CSI-RSs.

In a fourth aspect, an embodiment of the present disclosure provides an information transmission apparatus. The information transmission apparatus is applied to a UE, and the apparatus includes:
a receiving module configured to receive CSI-RSs sent by a network device, where the CSI-RSs are sent by the network device through antenna ports respectively corresponding to a plurality of CSI-RS resources, and the plurality of CSI-RS resources each correspond to different antenna ports; and
a processing module configured to determine the antenna ports according to the CSI-RSs and generate a CSI report according to the antenna ports and the CSI-RSs.

In a fifth aspect, an embodiment of the present disclosure provides a network device. The network device includes a memory, a transceiver, and a processor:
the memory is configured to store a computer program; the transceiver is configured to send and receive data under control of the processor; and the processor is configured to read the computer program in the memory and perform the following operations:
determining antenna ports respectively corresponding to a plurality of CSI-RS resources, where the plurality of CSI-RS resources each correspond to different antenna ports; and
controlling the transceiver to send CSI-RSs to a UE through the antenna ports respectively corresponding to the plurality of CSI-RS resources, where the CSI-RSs are configured for the UE to generate a CSI report based on the CSI-RSs.

In a sixth aspect, an embodiment of the present disclosure provides a user equipment. The user equipment includes a memory, a transceiver, and a processor:
the memory is configured to store a computer program; the transceiver is configured to send and receive data under control of the processor; and the processor is configured to read the computer program in the memory and perform the following operations:
controlling the transceiver to receive CSI-RSs sent by a network device, where the CSI-RSs are sent by the network device through antenna ports respectively corresponding to a plurality of CSI-RS resources, and the plurality of CSI-RS resources each correspond to different antenna ports; and
determining the antenna ports according to the CSI-RSs, and generating a CSI report according to the antenna ports and the CSI-RSs.

In a seventh aspect, an embodiment of the present disclosure provides an information transmission system. The information transmission system includes a network device and a UE.

The network device is configured to perform steps of the method according to the first aspect; and
the UE is configured to perform steps of the method according to the second aspect.

In an eighth aspect, an embodiment of the present disclosure provides a computer-readable storage medium. The computer-readable storage medium stores a computer program thereon, and the computer program, when executed by a processor, implements steps of the method according to the first aspect or the second aspect.

In a ninth aspect, an embodiment of the present disclosure provides a computer program product. The computer program product includes a computer program, and the computer program, when executed by a processor, implements steps of the method according to the first aspect or the second aspect.

In a tenth aspect, an embodiment of the present disclosure provides a chip. The chip includes a programmable logic circuit and/or program instructions, and when the chip runs, the steps of the method according to the first aspect or the second aspect are implemented.

In the above information transmission method, apparatus, device, system, and computer-readable storage medium, the network device determines antenna ports respectively corresponding to a plurality of CSI-RS resources, where the plurality of CSI-RS resources each correspond to different antenna ports, and then, the network device sends CSI-RSs to a UE through the antenna ports respectively corresponding to the plurality of CSI-RS resources, the CSI-RSs being used for the UE to generate a CSI report based on the CSI-RSs. In this way, since the number of antennas is large in a massive MIMO scenario, the large number of antennas form a large antenna array to improve communication performance between the network device and the UE. In the current NR system, one CSI-RS resource corresponds to a maximum of 32 antenna ports. Therefore, the method in the related art in which the network device sends CSI-RSs to a UE on antenna ports corresponding to one CSI-RS resource can only support generating one CSI report based on a CSI-RS resource corresponding to a maximum of 32 antenna ports, and the CSI report includes information such as a precoding matrix indicator (PMI) of less than or equal to 32 antenna ports. However, in the massive MIMO scenario, as the number of antennas increases, the above method in the related art will be unable to support generating one CSI report based on a CSI-RS resource corresponding to more than 32 antenna ports. In the embodiments of the present disclosure, the network device determines antenna ports respectively corresponding to a plurality of CSI-RS resources, and the plurality of CSI-RS resources each correspond to different antenna ports. Each of the plurality of CSI-RS resources can be, for example, an existing CSI-RS resource that can correspond to a maximum of 32 antenna ports. The network device sends CSI-RSs to the UE through the antenna ports respectively corresponding to the plurality of CSI-RS resources, and the UE then performs channel measurement based on the CSI-RSs transmitted by the network device to generate a CSI report. This is equivalent to using a plurality of existing CSI-RS resources (each CSI-RS resource can correspond to a maximum of 32 antenna ports) aggregated into one CSI-RS resource (the number of antenna ports corresponding to this CSI-RS resource is inevitably greater than 32) for channel measurement, thereby enabling generation of one CSI report based on a CSI-RS resource corresponding to more than 32 antenna ports, where the CSI report includes information such as a PMI of more than 32 antenna ports. Therefore, the embodiments of the present disclosure can support the channel measurement process in the massive MIMO scenario.

The above description is only an overview of the technical solutions of the present disclosure. In order to more clearly understand the technical means of the present disclosure, it can be implemented according to the content of the specification. Furthermore, to make the above and other purposes, features, and advantages of the present disclosure more obvious and understandable, specific implementations of the present disclosure are particularly cited below.

### BRIEF DESCRIPTION OF THE DRAWINGS

By reading the detailed description of the following implementations, various other advantages and benefits will become clear and understandable to those of ordinary skill in the art. The drawings are only for the purpose of illustrating implementations and are not to be considered as limiting the present disclosure. Moreover, throughout all the drawings, the same reference numerals are used to denote the same components. In the drawings:
FIG. 1 is an application environment diagram of an information transmission method in an embodiment;
FIG. 2 is a schematic flowchart of an information transmission method in an embodiment;
FIG. 3 is a schematic flowchart of a network device determining respective antenna ports in another embodiment;
FIG. 4 is a schematic diagram of antenna port indexes of antenna ports respectively corresponding to two CSI-RS resources in another embodiment;
FIG. 5 is a schematic diagram of antenna port indexes of antenna ports respectively corresponding to two CSI-RS resources in another embodiment;
FIG. 6 is a schematic diagram of antenna port indexes of antenna ports respectively corresponding to three CSI-RS resources in another embodiment;
FIG. 7 is a schematic diagram of antenna port indexes of antenna ports respectively corresponding to two CSI-RS resources in another embodiment;
FIG. 8 is a schematic diagram of antenna port indexes of 64 antenna ports;
FIG. 9 is a schematic diagram of antenna port indexes of two 32-antenna-port antenna panels;
FIG. 10 is a schematic flowchart of an information transmission method in another embodiment;
FIG. 11 is a schematic flowchart of an information transmission method in another embodiment;
FIG. 12 is a schematic flowchart of an information transmission method in another embodiment;
FIG. 13 is a schematic diagram of antenna port indexes of antenna ports respectively corresponding to two CSI-RS resources in another embodiment;
FIG. 14 is a structural block diagram of an information transmission apparatus in an embodiment;
FIG. 15 is a structural block diagram of an information transmission apparatus in another embodiment;
FIG. 16 is a schematic structural diagram of a network device in an embodiment;
FIG. 17 is a schematic structural diagram of a user equipment (UE) in another embodiment; and
FIG. 18 is a schematic structural diagram of a chip in an embodiment.

### DETAILED DESCRIPTION

Embodiments of the technical solutions of the present disclosure will be described in detail below with reference to the accompanying drawings. The following embodiments are only used to more clearly illustrate the technical solutions of the present disclosure, and therefore are only used as examples and cannot be used to limit the protection scope of the present disclosure.

Unless otherwise defined, all technical and scientific terms used herein have the same meaning as commonly understood by those skilled in the technical field to which the present disclosure belongs. The terms used herein are only for the purpose of describing specific embodiments and are not intended to limit the present disclosure. The terms "include" and "have" and any variations thereof in the specification and claims of the present disclosure and the above description of the drawings are intended to cover non-exclusive inclusion.

In the description of the embodiments of the present disclosure, the technical terms "first," "second," etc. are only used to distinguish different objects and cannot be understood as indicating or implying relative importance or implicitly indicating the number of indicated technical features, a specific order, or a primary and secondary relationship. In the description of the embodiments of the present disclosure, "a plurality of" means two or more, unless otherwise explicitly and specifically defined.

Reference herein to "an embodiment" means that a particular feature, structure, or characteristic described in connection with the embodiment can be included in at least one embodiment of the present disclosure. The appearance of this phrase in various places in the specification does not necessarily refer to the same embodiment, nor is it an independent or alternative embodiment mutually exclusive with other embodiments. Those skilled in the art understand explicitly and implicitly that the embodiments described herein can be combined with other embodiments.

In the description of the embodiments of the present disclosure, the term "and/or" is merely an association relationship describing associated objects, indicating that three relationships may exist. For example, A and/or B can represent three situations: A exists alone, both A and B exist, and B exists alone. In addition, the character "/" herein generally indicates an "or" relationship between associated objects.

In the description of the embodiments of the present disclosure, the term "a plurality of" refers to two or more (including two). Similarly, "a plurality of groups" refers to two or more groups (including two groups), and "a plurality of pieces" refers to two or more pieces (including two pieces).

In the description of the embodiments of the present disclosure, the technical terms such as "center," "longitudinal," "transverse," "length," "width," "thickness," "up," "down," "front," "back," "left," "right," "vertical," "horizontal," "top," "bottom," "inside," "outside," "clockwise," "counterclockwise," "axial," "radial," "circumferential," etc., indicating orientations or positional relationships are based on the orientations or positional relationships shown in the accompanying drawings. They are only for the convenience of describing the embodiments of the present disclosure and simplifying the description, and do not indicate or imply that the referred apparatus or element must have a specific orientation, be constructed and operated in a specific orientation. Therefore, they cannot be understood as limitations on the embodiments of the present disclosure.

In the description of the embodiments of the present disclosure, unless otherwise clearly specified and defined, the technical terms such as "mounted," "connected," "coupled," "fixed," etc. should be understood in a broad sense. For example, it can be a fixed connection, a detachable connection, or integrated; it can be a mechanical connection or an electrical connection; it can be directly connected or indirectly connected through an intermediary, or it can be the internal communication between two elements or the interaction relationship between two elements. For those of ordinary skill in the art, the specific meanings of the above terms in the embodiments of the present disclosure can be understood according to specific circumstances.

In a communication system, channel state information needs to be acquired using a reference signal. In an NR system, a downlink reference signal is a CSI-RS. In the related art, a network device sends a CSI-RS to a UE on an antenna port corresponding to one CSI-RS resource. The UE performs channel measurement based on the CSI-RS transmitted by the network device and then feeds back a CSI report to the network device, so that the network device can learn the channel state information and optimize wireless communication quality.

In the current NR system, one CSI-RS resource corresponds to a maximum of 32 antenna ports. Therefore, the above method in which the network device sends a CSI-RS to a UE on an antenna port corresponding to one CSI-RS resource can only support using a CSI-RS resource corresponding to a maximum of 32 antenna ports for channel measurement.

In a massive MIMO scenario, the number of antennas is large, and the large number of antennas form a large antenna array to improve communication performance between the network device and the UE. As the number of antennas increases, it is necessary to support using a CSI-RS resource corresponding to more than 32 antenna ports for channel measurement. However, the above method in which the network device sends a CSI-RS to a UE on an antenna port corresponding to one CSI-RS resource cannot support using a CSI-RS resource corresponding to more than 32 antenna ports for channel measurement, and thus cannot be better applied to the channel measurement process in the massive MIMO scenario.

From the perspective of antenna ports, in the current NR system, the number of antenna ports corresponding to one CSI-RS resource is 1, 2, 4, 8, 12, 16, 24, or 32.

A CSI report is configured through a higher layer parameter CSI-ReportConfig. If a parameter codebookType in the CSI-ReportConfig is configured as 'typeII', 'typeII-PortSelection', 'typeII-r16', 'typeII-PortSelection-r16', or 'typeII-PortSelection-r17', there can only be one CSI-RS resource in each CSI-RS resource set in the resource configuration for channel measurement.

The UE sends a CSI-RS on an antenna port *p* corresponding to one CSI-RS resource, and *p* is numbered using the following formula:
$p = 3000 + s + j ∗ L$
$j = 0 , 1 , … , \frac{N}{L} - 1$
$s = 0 , 1 , … , L - 1$
where *L* is a quantity of resource elements (REs) included in a code division multiplexing (CDM) group corresponding to the CSI-RS resource, *L* ∈ {1, 2, 4, 8}, N is the number of antenna ports corresponding to the CSI-RS resource, *j* is an index of the CDM group, and s is an index of an RE within one CDM group.

Taking the quantity of antenna ports corresponding to the CSI-RS resource being 32 as an example, according to the above formula, antenna port indexes of the 32 antenna ports corresponding to the CSI-RS resource are 0-31.

One CSI-RS resource is configured with a resource mapping through CSI-RS-Resource Mapping, including: a frequency domain position indication, the number of antenna ports corresponding to the CSI-RS resource, a time domain position indication, a CDM type, a density, and a PRB offset.

The frequency domain position indication indicates a position of a subcarrier occupied by the CSI-RS resource within one physical resource block (PRB) through a parameter bitmap, and the bitmap is configured by a higher layer parameter frequency Domain Allocation. The time domain position indication includes parameters *l*₀ and *l*₁, where *l*₀ ∈ {0, 1, ..., 13}, *l*₁ ∈ {2, 3, ..., 12}, and *l*₀ and *l*₁ are configured by higher layer parameters first OFDM Symbol In Time Domain and first OFDM Symbol In Time Domain 2.

CDM types include cdm8-FD2-TD4, cdm4-FD2-TD2, fd-CDM2, or noCDM. fd-CDM2 implements multiplexing of 2 antenna ports on 2 REs corresponding to 2 subcarriers in the frequency domain and 1 symbol in the time domain; cdm4-FD2-TD2 implements multiplexing of 4 antenna ports on 4 REs corresponding to 2 subcarriers in the frequency domain and 2 symbols in the time domain; cdm8-FD2-TD4 implements multiplexing of 8 antenna ports on 8 REs corresponding to 2 subcarriers in the frequency domain and 4 symbols in the time domain; and noCDM means that the CSI-RS resource only occupies one RE and no code division multiple access technology is used.

Densities of the CSI-RS resource include 1, 0.5, and 3. When the density is 0.5, the CSI-RS resource supports PRB offsets of odd-numbered PRBs and even-numbered PRBs.

All antenna ports corresponding to the CSI-RS resource are within 1 slot and 1 PRB, and the distribution of REs occupied thereby within (1 slot, 1 PRB) supports configurations in the following table:

| column | antenna port | density | CDM type | (*k̅*,*l̅*) | *j* | *k'* | *l'* |
|---|---|---|---|---|---|---|---|
| 1 | 1 | 3 | noC DM | (*k*₀,*l*₀),(*k*₀ *+* 4,*l*₀),(*k*₀ + 8,*l*₀) | 0, 0, 0 | 0 | 0 |
| 2 | 1 | 1, 0.5 | noC DM | (*k*₀,*l*₀) | 0 | 0 | 0 |
| 3 | 2 | 1, 0.5 | fd-CDM 2 | (*k*₀,*l*₀) | 0 | 0, 1 | 0 |
| 4 | 4 | 1 | fd-CDM 2 | (*k*₀,*l*₀),(*k*₀ + 2,*l*₀) | 0, 1 | 0, 1 | 0 |
| 5 | 4 | 1 | fd-CDM 2 | (*k*₀,*l*₀),(*k*₀,*l*₀ +1) | 0, 1 | 0, 1 | 0 |
| 6 | 8 | 1 | fd-CDM 2 | (*k*₀,*l*₀),(*k*₁,*l*₀),(*k*₂,*l*₀),(*k*₃,*l*₀) | 0, 1, 2, 3 | 0, 1 | 0 |
| 7 | 8 | 1 | fd-CDM 2 | (*k*₀,*l*₀),(*k*₁,*l*₀),(*k₀*,*l₀* + 1),(*k*₁,*l*₀ +1) | 0, 1, 2, 3 | 0, 1 | 0 |
| 8 | 8 | 1 | cdm4 FD2-TD2 | (*k*₀,*l*₀),(*k*₁,*l*₀) | 0, 1 | 0, 1 | 0, 1 |
| 9 | 12 | 1 | fd-CDM 2 | (*k*₀,*l*₀),(*k*₁,*l*₀),(*k*₂,*l*₀),(*k*₃,*l*₀),(*k*₄,*l*₀), (*k*₅,*l*₀) | 0, 1, 2, 3, 4, 5 | 0, 1 | 0 |
| 10 | 12 | 1 | cdm4 FD2-TD2 | (*k*₀,*l*₀),(*k*₁,*l*₀),(*k*₂,*l*₀) | 0, 1, 2 | 0, 1 | 0, 1 |
| 11 | 16 | 1, 0.5 | fd-CDM 2 | (*k*₀,*l*₀),(*k*₁,*l*₀),(*k*₂,*l*₀),(*k*₃,*l*₀),(*k*₀,*l*₀ + 1), (*k*₁*,l*₀ *+* 1), (*k*₂,*l*₀ +1),(*k*₃,*l*₀ +1) | 0, 1, 2, 3, 4, 5, 6, 7 | 0, 1 | 0 |
| 12 | 16 | 1, 0.5 | cdm4 FD2-TD2 | (*k*₀,*l*₀),(*k*₁,*l*₀),(*k*₂*,l*₀),(*k*₃,*l*₀) | 0, 1, 2, 3 | 0, 1 | 0, 1 |
| 13 | 24 | 1, 0.5 | fd-CDM 2 | (*k*₀,*l*₀),(*k*₁,*l*₀),(*k*₂,*l*₀),(*k*₀,*l*₀ +1), (*k*₁,*l*₀ +1),(*k*₂,*l*₀ + 1)*,*(*k*₀,*l*₁),(*k*₁,*l*₁), (*k*₂,*l*₁),(*k₀,l*₁+ 1),(*k*₁,*l*₁ +1),(*k*₂,*l*₁ +1) | 0, 1, 2, 3, 4, 5, 6, 7, 8, 9, 10, 11 | 0, 1 | 0 |
| 14 | 24 | 1, 0.5 | cdm4 FD2-TD2 | (*k*₀,*l*₀),(*k*₁,*l*₀),(*k*₂,*l*₀),(*k*₀,*l*₁),(*k*₁,*l*₁), (*k*₂,*l*₁) | 0, 1, 2, 3, 4, 5 | 0, 1 | 0, 1 |
| 15 | 24 | 1, 0.5 | cdm8 FD2-TD4 | (*k*₀,*l*₀),(*k*₁,*l*₀),(*k*₂,*l*₀) | 0, 1, 2 | 0, 1 | 0, 1 , 2, 3 |
| 16 | 32 | 1, 0.5 | fd-CDM 2 | (*k*₀,*l*₀),(*k*₁,*l*₀),(*k*₂,*l*₀),(*k*₃,*l*₀),(*k*₀,*l*₀ + 1), (*k*₁,*l*₀ *+* 1), (*k*₂,*l*₀ + 1),(*k*₃,*l*₀ *+* 1),(*k*₀,*l*₁),(*k*₁,*l*₁), (*k*₂,*l*₁),(*k*₃,*l*₁),(*k*₀,*l*₁ +1)(*k*₁,*l*₁ +1),(*k*₂,*l*₁, +1), (*k₃*,*l*₁ +1) | 0, 1, 2, 3, 4, 5, 6, 7, 8, 9, 10, 11, 12, 13, 14, 15 | 0, 1 | 0 |
| 17 | 32 | 1, 0.5 | cdm4 FD2-TD2 | (*k*₀,*l*₀),(*k*₁,*l*₀),(*k*₂,*l*₀),(*k*₃,*l*₀),(*k*₀,*l*₁), (*k*₁,*l*₁),(*k*₂,*l*₁) | 0, 1, 2, 3, 4, 5, 6, 7 | 0, 1 | 0, 1 |
| 18 | 32 | 1, 0.5 | cdm8 FD2-TD4 | (*k*₀,*l*₀),(*k₁*,*l*₀),(*k*₂,*l*₀),(*k*₃,*l*₀) | 0, 1, 2, 3 | 0, 1 | 0, 1 , 2, 3 |

where *k* represents a starting position of one CDM group in the frequency domain, and *l̅* represents a starting position of one CDM group in the time domain.

Each CSI-RS resource indicates a bandwidth position occupied by the CSI-RS through a parameter freqBand, and is specifically configured through an initial RB position and a bandwidth size. The configuration is indicated in units of 4 RBs, where a reference point of the initial resource block (RB) position starts from common resource block (CRB) 0, and the bandwidth size needs to meet a minimum bandwidth requirement, i.e., $min \left\{24, {N}_{RB}^{BWPi}\right\}$, and ${N}_{RB}^{BWPi}$ is a bandwidth size configured for the CSI-RS. Each CSI-RS resource defines a bandwidth part (BWP) identity (ID) where the CSI-RS is located through a parameter bwp-Id.

The above method only supports numbering of respective antenna ports corresponding to one CSI-RS resource. As described above, assuming that the number of antenna ports corresponding to one CSI-RS resource is 32, through calculation, antenna port indexes of the 32 antenna ports corresponding to the CSI-RS resource are 0-31. However, if it is necessary to support using a CSI-RS resource corresponding to more than 32 antenna ports for channel measurement, for example, using a plurality of existing CSI-RS resources (each CSI-RS resource corresponding to 32 antenna ports) aggregated into one CSI-RS resource (the number of antenna ports corresponding to this CSI-RS resource is greater than 32) for channel measurement, then, according to the antenna port numbering method in the above method, the antenna port indexes of the 32 antenna ports corresponding to each CSI-RS resource are all 0-31, that is, the respective antenna ports corresponding to each CSI-RS resource are the same, and thus it cannot support using a CSI-RS resource corresponding to more than 32 antenna ports for channel measurement.

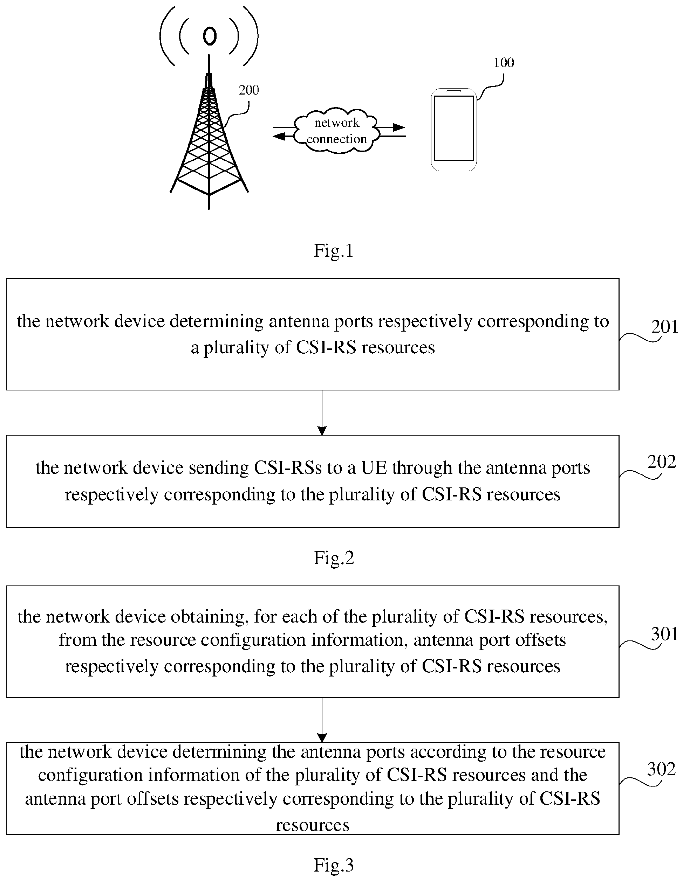

FIG. 1 is a schematic diagram of an implementation environment of an information transmission method provided by an embodiment of the present disclosure. A UE 100 communicates with a network device 200 through a network, and the network device 200 may be a base station.

The UE 100 may be, but is not limited to, various personal computers, laptop computers, smart phones, tablet computers, Internet of Things devices, and portable wearable devices. The Internet of Things devices may be smart speakers, smart televisions, smart air conditioners, smart in-vehicle devices, smart cars, etc. The portable wearable devices may be smart watches, smart bracelets, head-mounted devices, etc. The base station may be a base station in various forms, which is not limited here.

The technical solutions of the present disclosure and how the technical solutions of the present disclosure solve the above technical problems will be described in detail below with reference to specific embodiments. The following specific embodiments may be combined with each other, and the same or similar concepts or processes may not be described again in some embodiments. The embodiments of the present disclosure will be described below with reference to the accompanying drawings.

In an embodiment, as shown in FIG. 2, an information transmission method is provided, which is described by taking the method applied to the network device 200 in FIG. 1 as an example, and includes the following steps:
Step 201: the network device determining antenna ports respectively corresponding to a plurality of CSI-RS resources.

Based on configuration of the CSI-RS resources, in a case where the network device determines that CSI-RSs need to be transmitted, the network device determines antenna ports respectively corresponding to a plurality of CSI-RS resources. In the embodiment of the present disclosure, the plurality of CSI-RS resources each correspond to different antenna ports.

Taking the plurality of CSI-RS resources being two CSI-RS resources as an example, exemplarily, assuming that the two CSI-RS resources respectively correspond to 32 antenna ports, the network device determines that the antenna ports corresponding to the first CSI-RS resource are antenna ports 0-31 (0-31 are respective antenna port indexes of the antenna ports), and the network device determines that the antenna ports corresponding to the second CSI-RS resource are antenna ports 32-63 (32-63 are respective antenna port indexes of the antenna ports). It can be seen that the plurality of CSI-RS resources respectively correspond to different antenna ports.

Exemplarily, assuming that the first CSI-RS resource corresponds to 16 antenna ports and the second CSI-RS resource corresponds to 32 antenna ports, the network device determines that the antenna ports corresponding to the first CSI-RS resource are antenna ports 0-15 (0-15 are respective antenna port indexes of the antenna ports), and the network device determines that the antenna ports corresponding to the second CSI-RS resource are antenna ports 16-47 (16-47 are respective antenna port indexes of the antenna ports). It can be seen that the plurality of CSI-RS resources respectively correspond to different antenna ports.

In the embodiment of the present disclosure, each CSI-RS resource may be a resource structure of an existing CSI-RS resource, and the number of antenna ports corresponding to each CSI-RS resource may be 1, 2, 4, 8, 12, 16, 24, or 32. Through the implementation of step 201, the network device makes the plurality of CSI-RS resources respectively correspond to different antenna ports, that is, the antenna ports respectively corresponding to the CSI-RS resources are not repeated, thereby being able to implement joint numbering of the antenna ports respectively corresponding to the plurality of CSI-RS resources. This is equivalent to using a plurality of existing CSI-RS resources (each CSI-RS resource corresponding to a maximum of 32 antenna ports) aggregated into one CSI-RS resource (the number of antenna ports corresponding to this CSI-RS resource is greater than 32).

Hereinafter, a method for the network device to determine the antenna ports respectively corresponding to the plurality of CSI-RS resources in step 201 is introduced by way of example.

In the embodiment of the present disclosure, the network device may determine the antenna ports according to resource configuration information of the plurality of CSI-RS resources and/or respective resource indexes of the plurality of CSI-RS resources.

Exemplarily, the network device may determine the resource configuration information of the plurality of CSI-RS resources through a higher layer parameter, which may be, for example, CSI-ResourceConfig. The resource configuration information may include, for example, parameters such as the number of antenna ports corresponding to each CSI-RS resource, a time domain position indication, a frequency domain position indication, a CDM group type corresponding to each CSI-RS resource, and a density.

In a possible implementation of step 201, the network device may determine the antenna ports respectively corresponding to the plurality of CSI-RS resources according to the resource configuration information. In another possible implementation of step 201, the network device may further determine the antenna ports according to resource configuration information of the plurality of CSI-RS resources and respective resource indexes of the plurality of CSI-RS resources.

Taking the network device determining the antenna ports respectively corresponding to the plurality of CSI-RS resources according to the above resource configuration information as an example, in some embodiments, the network device may substitute relevant parameters in the resource configuration information into a preset formula, and calculate antenna port indexes of the antenna ports respectively corresponding to the plurality of CSI-RS resources through the formula; in some embodiments, the network device may further input relevant parameters in the resource configuration information into a pre-trained model, and output the antenna port indexes of the antenna ports respectively corresponding to the plurality of CSI-RS resources through the model.

In other possible implementations of step 201, the antenna port indexes of the antenna ports respectively corresponding to the plurality of CSI-RS resources may also be calculated by other devices instead of the network device, and the network device acquires the antenna port indexes of the antenna ports respectively corresponding to the plurality of CSI-RS resources from the other devices, thereby determining the antenna ports respectively corresponding to the plurality of CSI-RS resources. Here, there is no limitation on the specific method for the network device to determine the antenna ports respectively corresponding to the plurality of CSI-RS resources.

Step 202: the network device sending CSI-RSs to a UE through the antenna ports respectively corresponding to the plurality of CSI-RS resources.

After the network device determines the antenna ports respectively corresponding to the plurality of CSI-RS resources, the network device performs a resource mapping, and sends CSI-RSs to the UE through the antenna ports respectively corresponding to the plurality of CSI-RS resources. In other words, the network device respectively maps the CSI-RSs onto the plurality of CSI-RS resources for transmission according to respective antenna port indexes of the antenna ports.

The CSI-RSs transmitted respectively by the network device through the antenna ports are used for the UE to generate a CSI report based on the CSI-RSs.

The UE receives the CSI-RSs respectively sent by the network device on the antenna ports, and the UE determines the antenna ports according to the respective CSI-RSs, that is, the UE determines the antenna ports to which the REs occupied by the respective CSI-RSs are mapped. The method for the UE to determine the respective antenna port indexes of the antenna ports is similar to the method for the network device to determine the antenna ports respectively corresponding to the plurality of CSI-RS resources in the above step 201. Then, the UE generates one CSI report according to the antenna ports and the CSI-RSs. Rows of a precoding matrix indicator (PMI) in the CSI report correspond one-to-one to the antenna ports.

In the above embodiment, the network device determines antenna ports respectively corresponding to a plurality of CSI-RS resources, where the plurality of CSI-RS resources each correspond to different antenna ports, and then, the network device sends CSI-RSs to a UE through the antenna ports respectively corresponding to the plurality of CSI-RS resources, the CSI-RSs being used for the UE to generate a CSI report based on the CSI-RSs. In this way, since the number of antennas is large in a massive MIMO scenario, the large number of antennas form a large antenna array to improve communication performance between the network device and the UE. In the current NR system, one CSI-RS resource corresponds to a maximum of 32 antenna ports. Therefore, the method in the related art in which the network device sends CSI-RSs to a UE on antenna ports corresponding to one CSI-RS resource can only support generating one CSI report based on a CSI-RS resource corresponding to a maximum of 32 antenna ports, and the CSI report includes information such as a PMI of less than or equal to 32 antenna ports. However, in the massive MIMO scenario, as the number of antennas increases, the above method in the related art will be unable to support generating one CSI report based on a CSI-RS resource corresponding to more than 32 antenna ports. In the embodiment of the present disclosure, the network device determines antenna ports respectively corresponding to a plurality of CSI-RS resources, and the plurality of CSI-RS resources each correspond to different antenna ports. Each of the plurality of CSI-RS resources can be, for example, an existing CSI-RS resource that can correspond to a maximum of 32 antenna ports. The network device sends CSI-RSs to the UE through the antenna ports respectively corresponding to the plurality of CSI-RS resources, and the UE then performs channel measurement based on the CSI-RSs transmitted by the network device to generate a CSI report. This is equivalent to using a plurality of existing CSI-RS resources (each CSI-RS resource can correspond to a maximum of 32 antenna ports) aggregated into one CSI-RS resource (the number of antenna ports corresponding to this CSI-RS resource is inevitably greater than 32) for channel measurement, thereby enabling generation of one CSI report based on a CSI-RS resource corresponding to more than 32 antenna ports, where the CSI report includes information such as a PMI of more than 32 antenna ports. Therefore, the embodiment of the present disclosure can support the channel measurement process in the massive MIMO scenario.

In an embodiment, based on the embodiment shown in FIG. 2, hereinafter, the process of the network device determining the antenna ports according to resource configuration information of the plurality of CSI-RS resources and/or respective resource indexes of the plurality of CSI-RS resources is exemplarily introduced in several possible implementations.
1) Antenna port indexes of the antenna ports respectively corresponding to the plurality of CSI-RS resources are consecutive positive integers, that is, the antenna port indexes of the antenna ports to which the REs occupied respectively by the CSI-RS resources are mapped are consecutive and are all positive integers.

In this implementation, it is further divided into the following several possible implementations:
1.1) Referring to FIG. 3, the network device may perform steps 301 and 302 shown in FIG. 3 to implement the process of determining the antenna ports according to resource configuration information of the plurality of CSI-RS resources and/or respective resource indexes of the plurality of CSI-RS resources:
Step 301: the network device obtaining, for each of the plurality of CSI-RS resources, from the resource configuration information, antenna port offsets respectively corresponding to the plurality of CSI-RS resources.

In this embodiment, the plurality of CSI-RS resources are respectively configured with antenna port offsets. The antenna port offset may refer to an offset of an antenna port index of an antenna port, and the antenna port offsets respectively corresponding to the plurality of CSI-RS resources are different in this embodiment.

In this embodiment, the quantity of antenna ports, the CDM group type, and the quantity of CDM groups respectively corresponding the plurality of CSI-RS resources may be the same or different. For example, taking the plurality of CSI-RS resources including three CSI-RS resources as an example, in some embodiments, the quantity of antenna ports corresponding to each CSI-RS resource is all 32; in some embodiments, the quantity of antenna ports corresponding to one CSI-RS resource is 32, and the quantity of antenna ports corresponding to each of the other two CSI-RS resources is 16; in some embodiments, the quantity of antenna ports corresponding to one CSI-RS resource is 32, the quantity of antenna ports corresponding to another CSI-RS resource is 16, and the quantity of antenna ports corresponding to the remaining CSI-RS resource is 8, and so on.

Hereinafter, two possible configuration methods for the antenna port offset are introduced.

First, a difference between the antenna port offsets respectively corresponding to any two CSI-RS resources among the plurality of CSI-RS resources is related to the quantity of antenna ports respectively corresponding to the two CSI-RS resources.

Exemplarily, continuing to take the plurality of CSI-RS resources including three CSI-RS resources as an example:
Assuming that the quantity of antenna ports corresponding to one CSI-RS resource is 32, the quantity of antenna ports corresponding to another CSI-RS resource is 16, and the quantity of antenna ports corresponding to the remaining CSI-RS resource is 8, the antenna port offset corresponding to the CSI-RS resource corresponding to 32 antenna ports is 0, the antenna port offset corresponding to the CSI-RS resource corresponding to 16 antenna ports is 32, and the antenna port offset corresponding to the CSI-RS resource corresponding to 8 antenna ports is 48.

Assuming that the quantity of antenna ports corresponding to one CSI-RS resource is 32, and the quantity of antenna ports corresponding to each of the other two CSI-RS resources is 16, the antenna port offset corresponding to the CSI-RS resource corresponding to 32 antenna ports is 0, the antenna port offset corresponding to one CSI-RS resource corresponding to 16 antenna ports is 32, and the antenna port offset corresponding to the other CSI-RS resource corresponding to 16 antenna ports is 48.

Assuming that the quantity of antenna ports corresponding to each of the three CSI-RS resources is all 32, the antenna port offset corresponding to one CSI-RS resource corresponding to 32 antenna ports is 0, the antenna port offset corresponding to another CSI-RS resource corresponding to 32 antenna ports is 32, and the antenna port offset corresponding to the third CSI-RS resource corresponding to 32 antenna ports is 64.

In this way, after arranging the plurality of antenna port offsets in ascending order, the absolute value of a difference between two adjacent antenna port offsets is equal to the quantity of antenna ports corresponding to the CSI-RS resource corresponding to the smallest antenna port offset among the two antenna port offsets, and the minimum value of the plurality of antenna port offsets is 0.

In this antenna port offset configuration method, the antenna port offset corresponding to each CSI-RS resource can be flexibly configured and does not depend on other configuration information of each CSI-RS resource. During the configuration process, one CSI-RS resource can be arbitrarily selected from the plurality of CSI-RS resources first, and the antenna port offset corresponding to the selected CSI-RS resource is configured as 0. Then, another CSI-RS resource is arbitrarily selected from the remaining CSI-RS resources for which the antenna port offset has not been configured, and the antenna port offset corresponding to the second selected CSI-RS resource is configured as the quantity of antenna ports corresponding to the first CSI-RS resource. Then, another CSI-RS resource is arbitrarily selected from the remaining CSI-RS resources for which the antenna port offset has not been configured, and the antenna port offset corresponding to the third selected CSI-RS resource is configured as a sum of the quantity of antenna ports corresponding to the first CSI-RS resource and the quantity of antenna ports corresponding to the second CSI-RS resource. This antenna port offset configuration method has simple implementation logic, is easy to implement and promote, and has a small amount of computation and low consumption of computing resources.

Second, the antenna port offsets respectively corresponding to the plurality of CSI-RS resources are related to respective resource indexes of the plurality of CSI-RS resources (the resource index refers to a index preset for each of the plurality of CSI-RS resources, for example, the resource index of the first CSI-RS resource among the plurality of CSI-RS resources is 1, and the resource index of the k-th CSI-RS resource among the plurality of CSI-RS resources is k).

Exemplarily, for the plurality of CSI-RS resources, a resource index k is preset for each CSI-RS resource, *k* = 0,1,..., *K -* 1, where K is the resource number of the plurality of CSI-RS resources. The antenna port offset corresponding to the CSI-RS resource of each resource index may be a sum of the quantities of antenna ports corresponding to the respective CSI-RS resources of resource indexes prior to this resource sequence number.

For example, among the plurality of CSI-RS resources, the antenna port offset corresponding to the CSI-RS resource with resource index 0 is 0, the antenna port offset corresponding to the CSI-RS resource with resource index 1 is the quantity of antenna ports corresponding to the CSI-RS resource with resource index 0, the antenna port offset corresponding to the CSI-RS resource with resource index 2 is a sum of the quantity of antenna ports corresponding to the CSI-RS resource with resource index 0 and the quantity of antenna ports corresponding to the CSI-RS resource with resource index 1, and so on.

If a formula is used to express this process, exemplarily, referring to Formula 1, the network device may calculate the antenna port offset Δ*p* corresponding to each CSI-RS resource through Formula 1:
$Δ p = \left\{\begin{matrix}0 , k = 0 \\ {\sum }_{i = 0}^{k - 1} {N}_{i} , k = 1 , … , K - 1\end{matrix}\right.$ Formula 1
where *k* is the resource index of the CSI-RS resource, K is the resource number of the plurality of CSI-RS resources, and *Nₖ* is the quantity of antenna ports corresponding to the k-th CSI-RS resource.

In this antenna port offset configuration method, after a resource index is set for each CSI-RS resource, the antenna port offset corresponding to the first CSI-RS resource is 0, and the antenna port offset corresponding to each subsequent CSI-RS resource can be conveniently obtained by quickly summing the quantities of antenna ports corresponding to one or more CSI-RS resources with resource indexes prior to the resource index of this CSI-RS resource. The implementation process is simple and the amount of computation is small.

In this way, the network device configures a corresponding antenna port offset for each CSI-RS resource respectively.

Step 302: the network device determining the antenna ports according to the resource configuration information of the plurality of CSI-RS resources and the antenna port offsets respectively corresponding to the plurality of CSI-RS resources.

Next, the network device determines respectively the antenna ports according to the remaining information in the above resource configuration information other than the antenna port offsets corresponding respectively to the CSI-RS resources and the antenna port offset corresponding respectively to the CSI-RS resources.

In a possible implementation of step 302, for each CSI-RS resource, the network device determines an antenna port p corresponding to the CSI-RS resource according to a first formula, and the first formula is:
$p = δ + s + j ∗ L + Δ p$
where *δ* is a preset constant, s *=* 0,1,*...,L - 1, L* is a quantity of REs included in a CDM group corresponding to the CSI-RS resource, $j = 0 , 1 , … , \frac{N}{L} - 1$, N is the number of antenna ports corresponding to the CSI-RS resource, Δ*p* is an antenna port offset corresponding to the CSI-RS resource, and *s* , *j , L* and Δ*p* are obtained based on the resource configuration information.

Exemplarily, *δ* may be 3000. Of course, during implementation, *δ* may also take other values according to actual needs. *p* = 3000 + *s + j* * *L* is a formula for determining an antenna port *p* corresponding to one CSI-RS resource in the related art. In this embodiment, Δ*p* is added on the basis of this formula, that is, for each of the plurality of CSI-RS resources in this embodiment, a method for determining antenna ports corresponding to one CSI-RS resource in the related art may be first adopted to calculate respective antenna port indexes of antenna ports corresponding to the CSI-RS resource. Then, the antenna port offset corresponding to the CSI-RS resource is added to the respective antenna port indexes of the antenna ports corresponding to the CSI-RS resource, finally obtaining the antenna port indexes of the antenna ports respectively corresponding to the plurality of CSI-RS resources in this embodiment, that is, the network device determines the antenna ports respectively corresponding to the plurality of CSI-RS resources.

Hereinafter, through diagrams, the antenna ports respectively corresponding to the plurality of CSI-RS resources determined by the network device in this embodiment are shown.

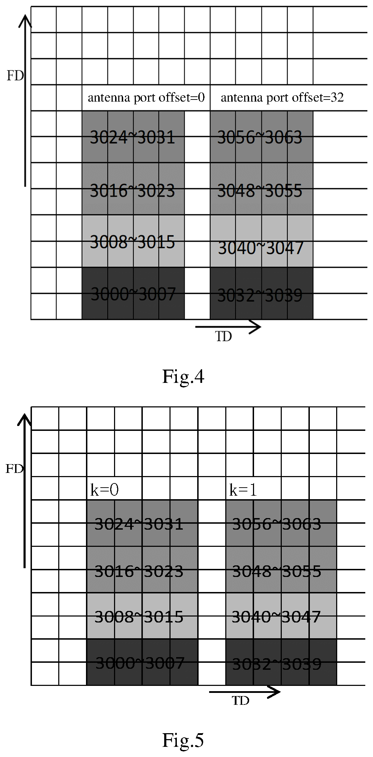

Assuming that the plurality of CSI-RS resources are 2 CSI-RS resources, the quantity of antenna ports corresponding to each CSI-RS resource is 32, the CDM group type corresponding to each CSI-RS resource is cdm8-FD2-TD4, the quantity of CDM groups corresponding to each CSI-RS resource is 4, and the quantity of REs included in each CDM group corresponding to each CSI-RS resource is 8, and the antenna port offsets corresponding to the 2 CSI-RS resources are 0 and 32 respectively. Referring to FIG. 4, FIG. 4 shows the antenna port indexes of the antenna ports respectively corresponding to the 2 CSI-RS resources determined by the network device adopting the implementation of this embodiment.

As shown in FIG. 4, the antenna port offset corresponding to the first CSI-RS resource in the time domain (Time Domain, TD) is 0, and the antenna port indexes of the 32 antenna ports corresponding to the first CSI-RS resource are 3000, 3001, 3002, ..., 3031 in sequence. The antenna ports corresponding to the first CSI-RS resource are different. The antenna port offset corresponding to the second CSI-RS resource in the time domain (Time Domain, TD) is 32, and the antenna port indexes of the 32 antenna ports corresponding to the second CSI-RS resource are 3032, 3033, 3034, ..., 3063 in sequence. The antenna ports corresponding to the second CSI-RS resource are different, and the antenna ports corresponding to the first CSI-RS resource are also different from the antenna ports corresponding to the second CSI-RS resource.

After the network device determines the antenna ports respectively corresponding to the plurality of CSI-RS resources according to the implementation of 1.1), the network device sends CSI-RSs to the UE through the antenna ports respectively corresponding to the plurality of CSI-RS resources.

The UE receives the CSI-RSs transmitted by the network device on the respective antenna ports, and the UE determines the antenna ports according to the respective CSI-RSs, that is, the UE determines the antenna ports to which the REs occupied by the respective CSI-RSs are mapped. The method for the UE to determine the respective antenna port indexes of the antenna ports is similar to the method for the network device to determine the antenna ports respectively corresponding to the plurality of CSI-RS resources according to the implementation of 1.1). Then, the UE generates one CSI report according to the respective antenna ports and the CSI-RSs.

It should be noted that the form of the first formula does not constitute a limitation on the implementation corresponding to the first formula. Any solution that shares the same idea as determining the respective antenna ports expressed by the first formula should be within the protection scope of the present disclosure. For example, for each CSI-RS resource, the network device may also directly use the antenna port p corresponding to the CSI-RS resource plus the antenna port offset corresponding to the CSI-RS resource, where *p = δ + s + j* * *L,* and the meanings of *δ*, *s, j,* and *L* are as described above and will not be repeated here.

In the above embodiment, by configuring a corresponding antenna port offset for each CSI-RS resource, and combining with the existing related art, the antenna ports respectively corresponding to the plurality of CSI-RS resources can be determined. Compared with the related art, this implementation has little impact on existing protocols.

In another possible implementation of step 302, the network device may send the resource configuration information of the plurality of CSI-RS resources and the antenna port offsets respectively corresponding to the plurality of CSI-RS resources to another device, and the other device determines the respective antenna ports according to the resource configuration information of the plurality of CSI-RS resources and the antenna port offsets respectively corresponding to the plurality of CSI-RS resources. The network device directly acquires the antenna port indexes of the antenna ports corresponding to each CSI-RS resource from the other device, thereby determining the antenna ports respectively corresponding to each CSI-RS resource. Here, there is no limitation on the specific implementation method of step 302.

1.2) For each CSI-RS resource, the network device determines an antenna port p corresponding to the CSI-RS resource according to a second formula, so as to implement the process of determining the antenna ports according to resource configuration information of the plurality of CSI-RS resources and/or respective resource indexes of the plurality of CSI-RS resources. The second formula is:
$p = δ + s + j ∗ L + k ∗ N$
where *δ* is a preset constant, *k* is the resource index of the CSI-RS resource, *k =* 0,1,*..., K - 1, K* is the resource number of the plurality of CSI-RS resources, *s =* 0,1,*..., L - 1, L is* a quantity of REs included in a CDM group corresponding to the CSI-RS resource, $j = 0 , 1 , … , \frac{N}{L} - 1$ , *N* is the number of antenna ports corresponding to the CSI-RS resource, and *s, j, L and N* are obtained based on the resource configuration information.

Similar to the above implementation of 1.1), *δ* may be 3000. Of course, during implementation, *δ* may also take other values according to actual needs. *p* = 3000 *+ s + j* * *L* is a formula for determining an antenna port *p* corresponding to one CSI-RS resource in the related art.

The difference between this embodiment and the above implementation of 1.1) is that in this embodiment, the quantity of antenna ports, the CDM group type, and the quantity of CDM groups corresponding to respective CSI-RS resources are all the same. In this embodiment, *k* * *N* is added on the basis of the above formula in the related art, where *k* is the resource index of the CSI-RS resource, *k* = 0,1,..., *K -* 1, and *N* is the quantity of antenna ports corresponding to one CSI-RS resource (the quantities of antenna ports corresponding to the respective CSI-RS resources are the same). Then, for the CSI-RS resource with *k* = 0 among the plurality of CSI-RS resources, since 0 * *N* = 0, the method for determining antenna ports corresponding to a CSI-RS resource in the related art is still adopted to calculate the respective antenna port indexes of the antenna ports corresponding to the CSI-RS resource with *k* = 0. For the CSI-RS resource with *k =* 1 among the plurality of CSI-RS resources, since 1 * *N = N*, the method for determining antenna ports corresponding to one CSI-RS resource in the related art is adopted to calculate the respective antenna port indexes of the antenna ports corresponding to the CSI-RS resource with *k =* 1, and *N* needs to be added to the respective antenna port indexes of the antenna ports to obtain the final respective antenna port indexes of the antenna ports corresponding to the CSI-RS resource with *k* = 1. For the CSI-RS resource with *k* = 2 among the plurality of CSI-RS resources, since 2 * *N =* 2*N,* the method for determining antenna ports corresponding to one CSI-RS resource in the related art is adopted to calculate the respective antenna port indexes of the antenna ports corresponding to the CSI-RS resource with *k* = 2, and 2*N* needs to be added to the respective antenna port indexes of the antenna ports to obtain the final respective antenna port indexes of the antenna ports corresponding to the CSI-RS resource with *k* = 2, and so on, finally obtaining the antenna port indexes of the antenna ports respectively corresponding to the plurality of CSI-RS resources in this embodiment, that is, the network device determines the antenna ports respectively corresponding to the plurality of CSI-RS resources.

Hereinafter, through diagrams, the antenna ports respectively corresponding to the plurality of CSI-RS resources determined by the network device in this embodiment are shown.

Assuming that the plurality of CSI-RS resources are 2 CSI-RS resources, the quantity of antenna ports corresponding to each CSI-RS resource is 32, the CDM group type corresponding to each CSI-RS resource is cdm8-FD2-TD4, the quantity of CDM groups corresponding to each CSI-RS resource is 4, and the quantity of REs included in each CDM group corresponding to each CSI-RS resource is 8, and the resource indexes corresponding to the 2 CSI-RS resources are *k =* 0 and *k* = 1 respectively. Referring to FIG. 5, FIG. 5 shows the antenna port indexes of the antenna ports respectively corresponding to the 2 CSI-RS resources determined by the network device adopting the implementation of this embodiment.

As shown in FIG. 5, the antenna port indexes of the 32 antenna ports corresponding to the CSI-RS resource with *k* = 0 are 3000, 3001, 3002, ..., 3031 in sequence, and the antenna ports corresponding to the CSI-RS resource with *k* = 0 are different. When *k* = 1, *k* * *N* = 32, then the 32 antenna ports corresponding to the CSI-RS resource with *k* = 1 are numbered starting from 3000+32=3032, and the antenna port indexes of the 32 antenna ports corresponding to the CSI-RS resource with *k* = 1 are 3032, 3033, 3034, ..., 3063 in sequence. The antenna ports corresponding to the CSI-RS resource with *k* = 1 are different, and the antenna ports corresponding to the CSI-RS resource with *k* = 0 are also different from the antenna ports corresponding to the CSI-RS resource with *k* = 1.

After the network device determines the antenna ports respectively corresponding to the plurality of CSI-RS resources according to the implementation of 1.2), the network device sends CSI-RSs to the UE through the antenna ports respectively corresponding to the plurality of CSI-RS resources.

The UE receives the CSI-RSs which are respectively sent by the network device on the antenna ports, and the UE determines the antenna ports according to the respective CSI-RSs, that is, the UE determines the antenna ports to which the REs occupied by the respective CSI-RSs are mapped. The method for the UE to determine the respective antenna port indexes of the antenna ports is similar to the method for the network device to determine the antenna ports respectively corresponding to the plurality of CSI-RS resources according to the implementation of 1.2). Then, the UE generates one CSI report according to the respective antenna ports and the CSI-RSs.

It should be noted that the form of the second formula does not constitute a limitation on the implementation corresponding to the second formula. Any solution that shares the same idea as determining the respective antenna ports expressed by the second formula should be within the protection scope of the present disclosure. For example, for each CSI-RS resource, the network device may also directly use the antenna port p corresponding to the CSI-RS resource plus *k* * *N* corresponding to the CSI-RS resource, where *p* = *δ + s + j* * *L* , and the meanings of *δ*, *s, j, L,* and *N* are as described above and will not be repeated here.

In the above embodiment, after setting a resource index for each CSI-RS resource, the variation of the antenna port index that needs to be added for the antenna port corresponding to each CSI-RS resource is determined through *k* * *N,* and then combined with the existing related art, the antenna ports respectively corresponding to the plurality of CSI-RS resources can be determined. Compared with the related art, this implementation has little impact on existing protocols.

1.3) For each CSI-RS resource, the network device determines an antenna port p corresponding to the CSI-RS resource according to a third formula, so as to implement the process of determining the antenna ports according to resource configuration information of the plurality of CSI-RS resources and/or respective resource indexes of the plurality of CSI-RS resources. The third formula is:
$p = δ + {s}_{k} + {j}_{k} ∗ {L}_{k} + {\sum }_{i = 0}^{k - 1} {N}_{i}$
where *δ* is a preset constant, *k* is the resource index of the CSI-RS resource, *k =* 0,1,*..., K* - 1, *K* is the resource number of the plurality of CSI-RS resources, *sₖ* = 0,1,..., *Lₖ - 1, Lₖ* is a quantity of REs included in a CDM group corresponding to the k-th CSI-RS resource among the plurality of CSI-RS resources, ${j}_{k} = 0 , 1 , … , \frac{{N}_{k}}{{L}_{k}} - 1$, *Nᵢ* is the number of antenna ports corresponding to the i-th CSI-RS resource among the plurality of CSI-RS resources, and *sₖ, jₖ, Lₖ* and *Nᵢ* are obtained based on the resource configuration information.

Similar to the above embodiments, *δ* may be 3000. Of course, during implementation, *δ* may also take other values according to actual needs.

The difference between this embodiment and the above implementation of 1.2) is that the quantity of antenna ports, the CDM group type, and the quantity of CDM groups corresponding to each of the plurality of CSI-RS resources may be the same or different. Therefore, the calculations of *sₖ, jₖ,* and *Lₖ* are all related to the specific resource situation of the k-th CSI-RS resource. Moreover, for the k-th CSI-RS resource, after calculating the respective antenna port indexes of the antenna ports corresponding to the k-th CSI-RS resource according to *p* = *δ + sₖ + jₖ * Lₖ,* it is also necessary to add ${\sum }_{i = 0}^{k - 1} {N}_{i}$ to the respective antenna port indexes of the antenna ports corresponding to the k-th CSI-RS resource, that is, to add the quantities of antenna ports respectively corresponding to the previous k-1 CSI-RS resources.

It should be noted that when *k* = 0, the 0th CSI-RS resource only needs to calculate the respective antenna port indexes of the antenna ports corresponding to the 0th CSI-RS resource according to *p* = *δ + sₖ + jₖ* * *Lₖ,* that is, *k* ≥ 1 in the second formula.

Then, for the CSI-RS resource with *k* = 0 among the plurality of CSI-RS resources, only the formula *p* = *δ + sₖ + jₖ* * *Lₖ* is adopted to calculate the respective antenna port indexes of the antenna ports corresponding to the CSI-RS resource with *k* = 0. For the CSI-RS resource with *k* = 1 among the plurality of CSI-RS resources, when adopting the formula *p* = *δ + sₖ + jₖ* * *Lₖ* to calculate the respective antenna port indexes of the antenna ports corresponding to the CSI-RS resource with *k* = 1, *N*₀ needs to be added to the respective antenna port indexes of the antenna ports, where *N*₀ is the quantity of antenna ports corresponding to the CSI-RS resource with *k* = 0, to obtain the final respective antenna port indexes of the antenna ports corresponding to the CSI-RS resource with *k* = 1. For the CSI-RS resource with *k* = 2 among the plurality of CSI-RS resources, when adopting the formula *p* = *δ* + *sₖ + jₖ* * *Lₖ* to calculate the respective antenna port indexes of the antenna ports corresponding to the CSI-RS resource with *k* = 2, *N*₀ *+ N*₁ needs to be added to the respective antenna port indexes of the antenna ports, where *N*₀ is the quantity of antenna ports corresponding to the CSI-RS resource with *k* = 0, and *N*₁ is the quantity of antenna ports corresponding to the CSI-RS resource with *k* = 1, to obtain the final respective antenna port indexes of the antenna ports corresponding to the CSI-RS resource with *k* = 2, and so on, finally obtaining the antenna port indexes of the antenna ports respectively corresponding to the plurality of CSI-RS resources in this embodiment, that is, the network device determines the antenna ports respectively corresponding to the plurality of CSI-RS resources.

Hereinafter, through diagrams, the antenna ports respectively corresponding to the plurality of CSI-RS resources determined by the network device in this embodiment are shown.

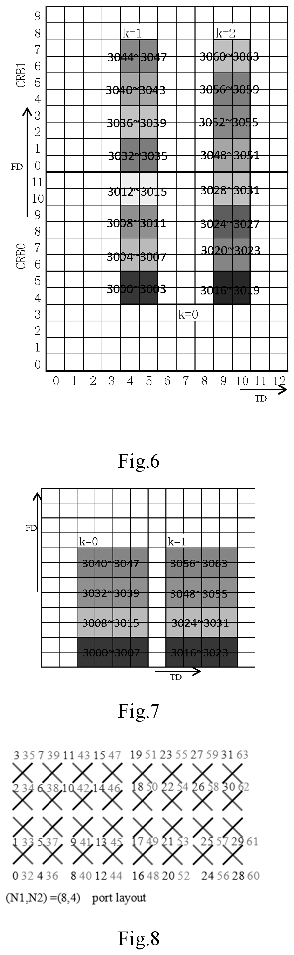

Assuming that the plurality of CSI-RS resources are 3 CSI-RS resources, the quantity of antenna ports corresponding to the CSI-RS resource with *k* = 0 is 32, and the quantity of antenna ports corresponding to the CSI-RS resource with *k* = 1 and the quantity of antenna ports corresponding to the CSI-RS resource with *k* = 2 are both 16. Referring to FIG. 6, FIG. 6 shows the antenna port indexes of the antenna ports respectively corresponding to the 3 CSI-RS resources determined by the network device adopting the implementation of this embodiment.

As shown in FIG. 6, the antenna port indexes of the 32 antenna ports corresponding to the CSI-RS resource with *k* = 0 are 3000, 3001, 3002, ..., 3031 in sequence, and the antenna ports corresponding to the CSI-RS resource with *k* = 0 are different. When *k = 1, N*₀ = 32, then the 16 antenna ports corresponding to the CSI-RS resource with *k* = 1 are numbered starting from 3000+32=3032, and the antenna port indexes of the 16 antenna ports corresponding to the CSI-RS resource with *k* = 1 are 3032, 3033, 3034, ..., 3047 in sequence, and the antenna ports corresponding to the CSI-RS resource with *k* = 1 are different. When *k* = *2, N*₀ *+ N*₁ = 48, then the 16 antenna ports corresponding to the CSI-RS resource with *k* = 2 are numbered starting from 3000+48=3048, and the antenna port indexes of the 16 antenna ports corresponding to the CSI-RS resource with *k* = 2 are 3048, 3049, 3050, ..., 3063 in sequence, and the antenna ports corresponding to the CSI-RS resource with *k* = 2 are different, and the antenna ports corresponding to the CSI-RS resource with *k* = 0, the antenna ports corresponding to the CSI-RS resource with *k =* 1, and the antenna ports corresponding to the CSI-RS resource with *k* = 2 are also different from each other.

After the network device determines the antenna ports respectively corresponding to the plurality of CSI-RS resources according to the implementation of 1.3), the network device sends CSI-RSs to the UE through the antenna ports respectively corresponding to the plurality of CSI-RS resources.

The UE receives the CSI-RSs which are respectively sent by the network device on the antenna ports, and the UE determines the respective antenna ports according to the respective CSI-RSs, that is, the UE determines the antenna ports to which the REs occupied by the respective CSI-RSs are mapped. The method for the UE to determine the respective antenna port indexes of the antenna ports is similar to the method for the network device to determine the antenna ports respectively corresponding to the plurality of CSI-RS resources according to the implementation of 1.3). Then, the UE generates one CSI report according to the respective antenna ports and the CSI-RSs.

In the above embodiment, regardless of whether the quantity of antenna ports, the CDM group type, and the quantity of CDM groups corresponding to each of the plurality of CSI-RS resources are the same or different, the antenna ports respectively corresponding to the plurality of CSI-RS resources can be determined, having a wide application range and higher implementation flexibility.

Above, the process of the network device determining the antenna ports according to resource configuration information of the plurality of CSI-RS resources and/or respective resource indexes of the plurality of CSI-RS resources is exemplarily introduced in a case where the antenna port indexes of the antenna ports respectively corresponding to the plurality of CSI-RS resources are consecutive positive integers.

Hereinafter, other possible implementations of the network device determining the antenna ports according to resource configuration information of the plurality of CSI-RS resources and/or respective resource indexes of the plurality of CSI-RS resources are introduced.

2) A plurality of antenna ports corresponding to each CSI-RS resource are divided into two groups. Antenna port indexes of the plurality of antenna ports in each group are consecutive positive integers. The plurality of antenna ports in each group correspond to the same polarization direction of an antenna, and different groups correspond to different polarization directions of the antenna.

In this implementation, it is further divided into the following several possible implementations:
2.1) For each CSI-RS resource, the network device determines an antenna port p corresponding to the CSI-RS resource according to a fourth formula, so as to implement the process of determining the antenna ports according to resource configuration information of the plurality of CSI-RS resources and/or respective resource indexes of the plurality of CSI-RS resources. The fourth formula is:
$p = δ + s + \left(j+\left(\left⌊\frac{j}{2}\right⌋+k\right)∗\frac{\frac{N}{L}}{2}\right) ∗ L$
where *δ* is a preset constant, *k* is the resource index of the CSI-RS resource, *k =* 0,1,..., *K - 1, K* is the resource number of the plurality of CSI-RS resources, s *=* 0,1,..., *L - 1, L is* a quantity of REs included in a CDM group corresponding to the CSI-RS resource, $j = 0 , 1 , … , \frac{N}{L} - 1$ , *N* is the number of antenna ports corresponding to the CSI-RS resource, and *s, j, L and N* are obtained based on the resource configuration information.

In this embodiment, the quantity of antenna ports, the CDM group type, and the quantity of CDM groups corresponding to each of the plurality of CSI-RS resources are all the same.

Similar to the above embodiments, *δ* may be 3000. Of course, during implementation, *δ* may also take other values according to actual needs. For each CSI-RS resource of each resource index among the plurality of CSI-RS resources, the network device substitutes the resource index of the CSI-RS resource, and *s, j, L,* and *N* in the resource configuration information into the fourth formula, and calculates the respective antenna port indexes of the antenna ports corresponding to each CSI-RS resource. It should be noted that, taking the quantity of CDM groups being 4 (*j* = 0,1,2,3) and the quantity of REs included in a CDM group being 8 (*s* = 0,1,2,3,4,5,6,7) as an example, in the process of substituting into the above first formula to the fifth formula for calculation, the network device may first substitute *s* = 0 and *j* = 0 to calculate the antenna port to which the first RE in the first CDM group is mapped. Next, the network device may first substitute *s* = 1 and *j* = 0 to calculate the antenna port to which the second RE in the first CDM group is mapped. After the antenna ports to which the 8 REs in the first CDM group are mapped are calculated, the network device then substitutes *s* = 0 and *j* = 1 to calculate the antenna port to which the first RE in the second CDM group is mapped, and so on, until the antenna ports to which the respective REs in the respective CDM groups are mapped are calculated, and the network device then determines the antenna ports corresponding to the CSI-RS resource.

Hereinafter, through diagrams, the antenna ports respectively corresponding to the plurality of CSI-RS resources determined by the network device in this embodiment are shown.

Assuming that the plurality of CSI-RS resources are 2 CSI-RS resources, the quantity of antenna ports corresponding to each CSI-RS resource is 32, the CDM group type corresponding to each CSI-RS resource is cdm8-FD2-TD4, the quantity of CDM groups corresponding to each CSI-RS resource is 4, and the quantity of REs included in each CDM group corresponding to each CSI-RS resource is 8, and the resource indexes corresponding to the 2 CSI-RS resources are *k =* 0 and *k* = 1 respectively. Referring to FIG. 7, FIG. 7 shows the antenna port indexes of the antenna ports respectively corresponding to the 2 CSI-RS resources determined by the network device adopting the implementation of this embodiment.

As shown in FIG. 7, the antenna port indexes of the plurality of antenna ports in the first group corresponding to the CSI-RS resource with *k* = 0 are 3000, 3001, 3002, ..., 3015 in sequence; the antenna port indexes of the plurality of antenna ports in the second group corresponding to the CSI-RS resource with *k* = 0 are 3032, 3033, 3034, ..., 3047 in sequence; the antenna port indexes of the plurality of antenna ports in the first group corresponding to the CSI-RS resource with *k* = 1 are 3016, 3017, 3018, ..., 3031 in sequence; the antenna port indexes of the plurality of antenna ports in the second group corresponding to the CSI-RS resource with *k =* 1 are 3048, 3049, 3050, ..., 3063 in sequence. That is, the antenna port indexes of the plurality of antenna ports in the first group are consecutive positive integers (3000, 3001, 3002, ..., 3015, 3016, 3017, 3018, ..., 3031), and the antenna port indexes of the plurality of antenna ports in the second group are consecutive positive integers (3032, 3033, 3034, ..., 3047, 3048, 3049, 3050, ..., 3063).

In this embodiment, the absolute value of the difference between the smallest antenna port indexes of the two groups of antenna ports corresponding to each CSI-RS resource is equal to half of the total number of antenna ports corresponding to the plurality of CSI-RS resources. For example, continuing to refer to FIG. 7, the smallest antenna port indexes of the two groups of antenna ports corresponding to the CSI-RS resource with *k* = 0 are 3000 and 3032 respectively, and the absolute value of the difference between the two is equal to 32. Half of the total number (64) of antenna ports corresponding to the 2 CSI-RS resources in FIG. 7 is also equal to 32.

In this embodiment, the antenna ports corresponding to the CSI-RS resource with *k* = 0 are different, the antenna ports corresponding to the CSI-RS resource with *k* = 1 are different, and the antenna ports corresponding to the CSI-RS resource with *k* = 0 are also different from the antenna ports corresponding to the CSI-RS resource with *k* = 1.

After the network device determines the antenna ports respectively corresponding to the plurality of CSI-RS resources according to the implementation of 2.1), the network device sends CSI-RSs to the UE through the antenna ports respectively corresponding to the plurality of CSI-RS resources.

The UE receives the CSI-RSs which are respectively sent by the network device on the antenna ports, and the UE determines the respective antenna ports according to the respective CSI-RSs, that is, the UE determines the antenna ports to which the REs occupied by the respective CSI-RSs are mapped. The method for the UE to determine the respective antenna port indexes of the antenna ports is similar to the method for the network device to determine the antenna ports respectively corresponding to the plurality of CSI-RS resources according to the implementation of 2.1). Then, the UE generates one CSI report according to the respective antenna ports and the CSI-RSs.

In the above embodiment, by dividing a plurality of antenna ports corresponding to each CSI-RS resource into two groups, where the antenna port indexes of the plurality of antenna ports in each group are consecutive positive integers, it can be better applied to a single-panel antenna scenario and improve antenna performance in the single-panel antenna scenario. The principle of improving antenna performance in the single-panel antenna scenario will be described below.

2.2) For each CSI-RS resource, the network device determines an antenna port p corresponding to the CSI-RS resource according to a fifth formula, so as to implement the process of determining the antenna ports according to resource configuration information of the plurality of CSI-RS resources and/or respective resource indexes of the plurality of CSI-RS resources. The fifth formula is:
$p = \left\{\begin{matrix}δ + s + j ∗ L + \frac{N}{2} ∗ k , j = 0 , … , \frac{N}{2 L} - 1 \\ δ + s + j ∗ L + \frac{N}{2} ∗ \left(k+K-1\right) , j = \frac{N}{2 L} , … , \frac{N}{L} - 1\end{matrix}\right.$

δ is a preset constant, k is a resource index of the CSI-RS resource, k=0,1,...,K-1, K is the number of the plurality of CSI-RS resources, s=0,1,...,L-1, L is a quantity of REs in a CDM group corresponding to the CSI-RS resource, j=0,1,...,(N/L)-1, N is the number of antenna ports corresponding to the CSI-RS resource, and s, j, L and N are obtained based on the resource configuration information_{∘}

In this embodiment, the quantity of antenna ports, the CDM group type, and the quantity of CDM groups corresponding to each of the plurality of CSI-RS resources are all the same.

Similar to the above embodiments, *δ* may be 3000. Of course, during implementation, *δ* may also take other values according to actual needs. For each CSI-RS resource of each resource index among the plurality of CSI-RS resources, the network device substitutes the resource index of the CSI-RS resource, and *s, j, L,* and *N* from the resource configuration information into the fifth formula, calculates the respective antenna port indexes of the antenna ports corresponding to each CSI-RS resource. The substitution calculation method can refer to the relevant description above, until the antenna ports to which the respective REs in the respective CDM groups are mapped are calculated, and the network device then determines the antenna ports corresponding to the CSI-RS resource.

The effect of the antenna ports respectively corresponding to the plurality of CSI-RS resources determined by the network device in this embodiment is consistent with the effect of the antenna ports respectively corresponding to the plurality of CSI-RS resources determined by the network device in the implementation of 2.1). Reference can be made to FIG. 7. As shown in FIG. 7, the antenna port indexes of the plurality of antenna ports in the first group corresponding to the CSI-RS resource with *k* = 0 are 3000, 3001, 3002, ......, 3015 in sequence; the antenna port indexes of the plurality of antenna ports in the second group corresponding to the CSI-RS resource with *k* = 0 are 3032, 3033, 3034, ......, 3047 in sequence; the antenna port indexes of the plurality of antenna ports in the first group corresponding to the CSI-RS resource with *k* = 1 are 3016, 3017, 3018, ......, 3031 in sequence; the antenna port indexes of the plurality of antenna ports in the second group corresponding to the CSI-RS resource with *k* = 1 are 3048, 3049, 3050, ......, 3063 in sequence. That is, the antenna port indexes of the plurality of antenna ports in the first group are consecutive positive integers (3000, 3001, 3002, ......, 3015, 3016, 3017, 3018, ......, 3031), and the antenna port indexes of the plurality of antenna ports in the second group are consecutive positive integers (3032, 3033, 3034, ......, 3047, 3048, 3049, 3050, ......, 3063).

Similarly, in this embodiment, the absolute value of the difference between the smallest antenna port indexes of the two groups of antenna ports corresponding to each CSI-RS resource is equal to a half of the total number of antenna ports corresponding to the plurality of CSI-RS resources.

In this embodiment, the antenna ports corresponding to the CSI-RS resource with *k* = 0 are different, the antenna ports corresponding to the CSI-RS resource with *k* = 1 are different, and the antenna ports corresponding to the CSI-RS resource with *k* = 0 are also different from the antenna ports corresponding to the CSI-RS resource with *k* = 1.

After the network device determines the antenna ports respectively corresponding to the plurality of CSI-RS resources according to the implementation of 2.2), the network device sends CSI-RSs to the UE through the antenna ports respectively corresponding to the plurality of CSI-RS resources.

The UE receives the CSI-RSs which are respectively sent by the network device on the antenna ports, and the UE determines the respective antenna ports according to the respective CSI-RSs, that is, the UE determines the antenna ports to which the REs occupied by the respective CSI-RSs are mapped. The method for the UE to determine the respective antenna port indexes of the antenna ports is similar to the method for the network device to determine the antenna ports respectively corresponding to the plurality of CSI-RS resources according to the implementation of 2.2). Then, the UE generates one CSI report according to the respective antenna ports and the CSI-RSs.

In the above embodiment, by dividing a plurality of antenna ports corresponding to each CSI-RS resource into two groups, where the antenna port indexes of the plurality of antenna ports in each group are consecutive positive integers, it can be better applied to a single-panel antenna scenario and improve antenna performance in the single-panel antenna scenario.

Hereinafter, preferred application scenarios for the above implementation of 1) (i.e., the plurality of antenna ports corresponding to each CSI-RS resource are not divided into groups) and the above implementation of 2) (i.e., the plurality of antenna ports corresponding to each CSI-RS resource are divided into two groups) are introduced.

The structure of a Type I single-panel codebook in the existing NR system implies that the antenna port indexes of the antenna ports corresponding to a CSI-RS resource are consecutively numbered according to one polarization direction first, and then continued to be consecutively numbered for the other polarization direction. For example, please refer to FIG. 8. FIG. 8 is a schematic diagram of antenna port indexes of 64 antenna ports. The respective antenna port indexes of the antenna ports in FIG. 8 are 3000 plus the numbers in FIG. 8.

For the single-panel antenna scenario, if the implementation in 1) above is adopted, all antenna ports corresponding to each of the plurality of CSI-RS resources correspond to the same polarization direction. In this case, if a certain CSI-RS resource among the plurality of CSI-RS resources is configured for the UE to use, the UE selects an optimal PMI from a dual-polarization designed codebook based on the CSI-RS of the same polarization direction. Since the dual-polarization designed codebook may not match a single-polarization measurement channel, a PMI mismatch may occur, thereby causing a decrease in antenna performance.

However, if the implementation in 2) above is adopted, a plurality of antenna ports corresponding to each CSI-RS resource are divided into two groups. Half of all antenna ports corresponding to each of the plurality of CSI-RS resources correspond to one polarization direction, and the other half correspond to the other polarization direction. In this way, if a certain CSI-RS resource among the plurality of CSI-RS resources is configured for the UE to use, the UE selects an optimal PMI from a dual-polarization designed codebook based on the CSI-RSs of two polarization directions. The dual-polarization designed codebook matches a dual-polarization measurement channel. Therefore, the implementation in 2) above can be better applied to the single-panel antenna scenario and improve antenna performance in the single-panel antenna scenario. In the single-panel antenna scenario, the implementation in 2) above can achieve sharing with the existing CSI-RS resource corresponding to a maximum of 32 antenna ports in the existing system.

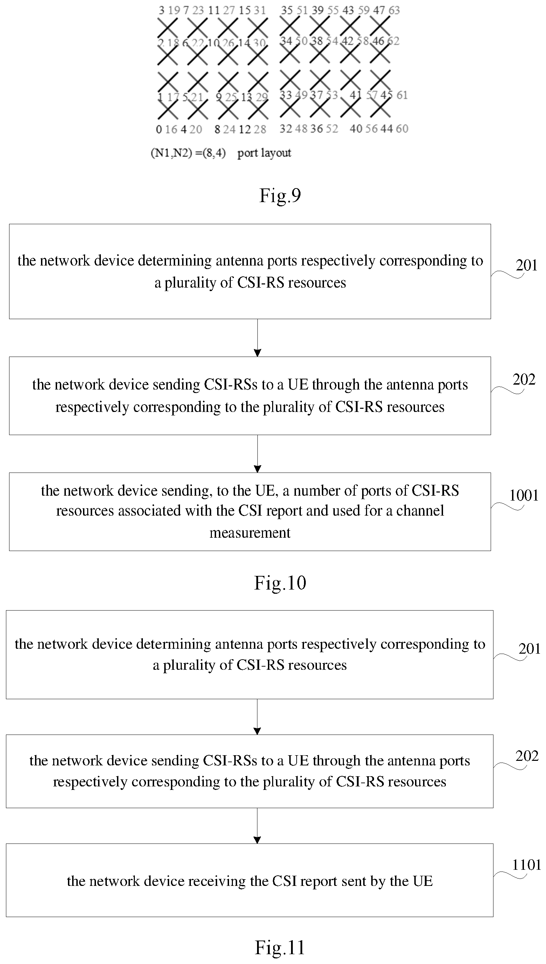

The structure of a Type I multi-panel codebook in the existing NR system implies that half of the antenna ports of each antenna panel are one polarization direction, and the other half of the antenna ports are the other polarization direction. The antenna port indexes of the antenna ports corresponding to a CSI-RS resource are consecutively numbered in an order of first one polarization direction of one antenna panel, then the other polarization direction, and then one polarization direction of another antenna panel, and then the other polarization direction. For example, for 2 antenna panels, please refer to FIG. 9. FIG. 9 is a schematic diagram of antenna port indexes of 32 antenna ports in 2 antenna panels. The respective antenna port indexes of the antenna ports in FIG. 9 are 3000 plus the numbers in FIG. 9.

For the multi-panel antenna scenario, if the implementation in 1) above is adopted, half of all antenna ports corresponding to each of the plurality of CSI-RS resources correspond to one polarization direction, and the other half correspond to the other polarization direction. In this way, if a certain CSI-RS resource among the plurality of CSI-RS resources is configured for the UE to use, the UE selects an optimal PMI from a dual-polarization designed codebook based on the CSI-RSs of two polarization directions. The dual-polarization designed codebook matches a dual-polarization measurement channel.

If the implementation in 2) above is adopted, all antenna ports corresponding to each of the plurality of CSI-RS resources are of the same polarization direction. In this way, if a certain CSI-RS resource among each of the plurality of CSI-RS resources is configured for the UE to use, the UE selects an optimal PMI from a dual-polarization designed codebook based on the CSI-RS of the same polarization direction. Since the dual-polarization designed codebook may not match a single-polarization measurement channel, a PMI mismatch may occur, thereby causing a decrease in antenna performance. Therefore, the implementation in 1) above is applicable to the multi-panel antenna scenario. In the multi-panel antenna scenario, the implementation in 1) above can achieve sharing with the existing CSI-RS resource corresponding to a maximum of 32 antenna ports in the existing system.

In addition, it should be noted that the embodiment of the present disclosure divides a plurality of antenna ports corresponding to each CSI-RS resource into two groups instead of four groups or eight groups. This is because antenna ports only have two polarization directions. Dividing a plurality of antenna ports corresponding to each CSI-RS resource into two groups is to ensure that half of the antenna ports corresponding to each CSI-RS resource are one polarization direction, and the corresponding other half of the antenna ports are the other polarization direction, thereby being able to adapt to the single-panel antenna scenario and improve antenna performance.

It is mentioned in some of the above embodiments that the process of the network device determining the antenna ports respectively corresponding to the plurality of CSI-RS resources needs to be implemented by utilizing the respective resource indexes of the plurality of CSI-RS resources. Hereinafter, a method for the network device to determine the respective resource indexes of the plurality of CSI-RS resources is exemplarily described.

In a possible implementation, the information transmission method of this embodiment further includes the following step A1:
Step A1: the network device determining the respective resource indexes of the plurality of CSI-RS resources according to respective resource IDs of the plurality of CSI-RS resources.

In some embodiments, the network device may sort the plurality of CSI-RS resources in an ascending order or a descending order of the respective resource IDs of the plurality of CSI-RS resources to obtain a sorted sequence, and the network device takes position indexes of the CSI-RS resources in the sorted sequence as the resource indexes of the CSI-RS resources, so as to implement the process of step A1.

That is, the network device arranges the plurality of CSI-RS resources in ascending order of their resource IDs. In this way, according to the ascending order of the resource IDs, the respective resource indexes k of the respective CSI-RS resources are 0, 1, ..., K-1 in sequence.

Alternatively, the network device arranges the plurality of CSI-RS resources in descending order of their resource IDs. In this way, according to the descending order of the resource IDs, the respective resource indexes k of the respective CSI-RS resources are 0, 1, ..., K-1 in sequence.

In some embodiments, the network device may also input the respective resource IDs of the plurality of CSI-RS resources into a pre-trained artificial intelligence model, and predict and output the respective resource indexes of the plurality of CSI-RS resources through the artificial intelligence model. Here, there is no limitation on the specific implementation method of step A1.

In another possible implementation, the information transmission method of this embodiment further includes the following step A2:
Step A2: the network device determining the respective resource indexes of the plurality of CSI-RS resources according to both frequency-domain positions and time-domain positions respectively occupied by the plurality of CSI-RS resources.

In an exemplary implementation of step A2, the network device may first sort the plurality of CSI-RS resources in the frequency domain in an ascending order of CRB indexes and subcarrier indexes respectively corresponding to the CSI-RS resources, and then continue to sort the plurality of CSI-RS resources in the time domain in an ascending order of slot indexes respectively corresponding to the CSI-RS resources, to obtain a first sorting result, and determine the respective resource indexes of the plurality of CSI-RS resources according to the first sorting result. That is, the network device sequentially numbers the respective CSI-RS resources in an order of first frequency domain (CRB indexes and subcarrier indexes in ascending order) and then time domain (slot indexes in ascending order), and the respective resource indexes k of the respective CSI-RS resources are 0, 1, ..., K-1 in sequence.

In another exemplary implementation of step A2, the network device may also first sort the plurality of CSI-RS resources in the time domain in an ascending order of slot indexes respectively corresponding to the CSI-RS resources, and then continue to sort the plurality of CSI-RS resources in the frequency domain in an ascending order of CRB indexes and subcarrier indexes respectively corresponding to the CSI-RS resources, to obtain a second sorting result, and determine the respective resource indexes of the plurality of CSI-RS resources according to the second sorting result. That is, the network device sequentially numbers the respective CSI-RS resources in an order of first time domain (slot indexes in ascending order) and then frequency domain (CRB indexes and subcarrier indexes in ascending order), and the respective resource indexes k of the respective CSI-RS resources are 0, 1, ..., K-1 in sequence.

The network device sends CSI-RSs to the UE on the determined antenna ports respectively corresponding to the plurality of CSI-RS resources.

The UE receives the CSI-RSs which are respectively sent by the network device on the antenna ports, and the UE determines the respective antenna ports according to the respective CSI-RSs. Similar to the process of the network device determining the antenna ports respectively corresponding to the plurality of CSI-RS resources, the UE may also need to utilize the respective resource indexes of the plurality of CSI-RS resources to determine the antenna ports to which the REs occupied by the respective CSI-RSs are mapped. The method for the UE to determine the respective resource indexes of the plurality of CSI-RS resources is similar to the method for the above network device to determine the respective resource indexes of the plurality of CSI-RS resources. After the UE determines the respective antenna ports, the UE generates a CSI report according to the respective antenna ports and the CSI-RSs.

In this way, after determining the respective resource indexes of the plurality of CSI-RS resources according to any of the above implementations, the network device then determines the respective antenna ports according to the resource configuration information of the plurality of CSI-RS resources and/or the resource index of each CSI-RS resource, so as to implement using a CSI-RS resource corresponding to more than 32 antenna ports for channel measurement, thereby being able to support the channel measurement process in the massive MIMO scenario.

Based on any of the above embodiments, referring to FIG. 10, the information transmission method of this embodiment further includes step 1001 shown in FIG. 10:
Step 1001: the network device sending, to the UE, a number of ports of CSI-RS resources associated with the CSI report and used for a channel measurement.

The number of ports is equal to the total number of antenna ports corresponding to the plurality of CSI-RS resources.

Exemplarily, the network device may calculate the number of ports X using the following formula 2:
$X = {\sum }_{k = 0}^{K - 1} {N}_{k}$ Formula 2
where *k* is the resource index of the CSI-RS resource, *K* is the resource number of the plurality of CSI-RS resources, and *Nₖ* is the quantity of antenna ports corresponding to the k-th CSI-RS resource among the plurality of CSI-RS resources.

In the embodiment of the present disclosure, the number of ports X of the CSI-RS resource used for a channel measurement can be obtained through any of the following methods:
Method 1: The number of ports is configured through a preset field in configuration information of the CSI report.

Exemplarily, the number of ports X=2**N*₁**N*₂ can be determined by (*N*₁,*N*₂) included in CodebookConfig in the CSI report configured by the higher layer parameter CSI-ReportConfig.

Here, *N*₁ represents the quantity of antenna ports in a first dimension of one polarization direction among physical antenna ports; *N*₂ represents the quantity of antenna ports in a second dimension of one polarization direction among the physical antenna ports.

Exemplarily, (*N*₁,*N₂*) and corresponding (*O*₁, *O*₂) support at least one of the following configurations, where *O*₁ is an oversampling factor in the first dimension of one polarization direction among the physical antenna ports, and *O*₂ is an oversampling factor in the second dimension of one polarization direction among the physical antenna ports.

| Quantity of physical antenna ports | (*N*₁,*N*₂) | (*O*₁,*O*₂) |
|---|---|---|
| 48 | (6,4) | (4,4) |
| | (12,2) | (4,4) |
| | (24,1) | (4,1) |
| 64 | (8,4) | (4,4) |
| | (16,2) | (4,4) |
| | (32,1) | (4,1) |
| 96 | (8,6) | (4,4) |
| | (12,4) | (4,4) |
| | (24,2) | (4,4) |
| | (48,1) | (4,1) |
| 128 | (8,8) | (4,4) |
| | (16,4) | (4,4) |
| | (32,2) | (4,4) |
| | (64,1) | (4,1) |

Method 2: The number of ports is configured through a preset field in resource configuration information of the CSI-RS resource associated with the CSI report and used for a channel measurement.

That is, a higher layer parameter is newly added in the resource configuration information of the CSI-RS resource used for a channel measurement to indicate the number of ports X.

After the UE receives the number of ports of the CSI-RS resources associated with the CSI report and used for a channel measurement sent by the network device, the process of the UE determining the antenna ports according to the CSI-RSs may specifically be that the UE determines the respective antenna ports according to the number of ports and the CSI-RSs. The indication method of the number of ports is flexible and can improve the implementation flexibility of the embodiment of the present disclosure.

Based on any of the above embodiments, referring to FIG. 11, the information transmission method of this embodiment further includes step 1101 shown in FIG. 11:
Step 1101: the network device receiving the CSI report sent by the UE.

The CSI report is generated by the UE based on successfully received CSI-RSs.

In this embodiment, if a CSI-RS in at least one CSI-RS resource among the plurality of CSI-RS resources cannot be transmitted, for example, due to reasons such as a conflict exists in a configured time-frequency resource position or it is not an available DL subframe, the UE can also support the channel measurement this time.

Exemplarily, in this case, the UE supports at least one of the following CSI report reporting methods:
The UE generates a CSI report based on successfully received CSI-RSs, and rows of a PMI in the CSI report correspond one-to-one to the respective antenna ports corresponding to K' CSI-RS resources, where K' is less than the resource quantity K of the above plurality of CSI-RS resources.

The UE does not report the CSI report this time.

In other possible implementations, if a CSI-RS in at least one CSI-RS resource among the plurality of CSI-RS resources cannot be transmitted, the UE may also not support the channel measurement this time.

The above embodiment provides an implementation mode of the information transmission method of the embodiment of the present disclosure under the situation that a CSI-RS in at least one CSI-RS resource among the plurality of CSI-RS resources cannot be transmitted. By considering various possible situations in the implementation process, the implementation reliability of the information transmission method of the embodiment of the present disclosure can be improved.

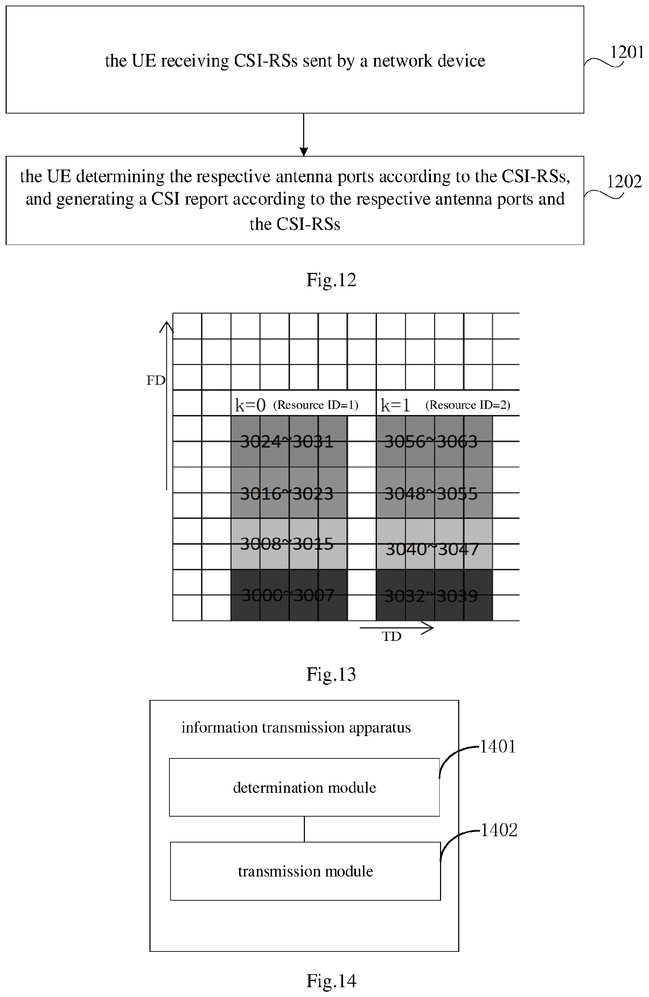

In an embodiment, an information transmission method is provided. The information transmission method is applied to a UE. Referring to FIG. 12, the method includes step 1201 and step 1202 shown in FIG. 12:

Step 1201: the UE receiving CSI-RSs sent by a network device.

The CSI-RSs are sent by a network device, wherein the CSI-RSs are sent by the network device through antenna ports respectively corresponding to a plurality of CSI-RS resources. Each CSI-RS resource corresponds to different antenna ports.

Step 1202: the UE determining the respective antenna ports according to the CSI-RSs, and generating a CSI report according to the respective antenna ports and the CSI-RSs.

In an embodiment, the information transmission method of this embodiment further includes the following steps:
The UE receives a number of ports of CSI-RS resources associated with the CSI report and used for a channel measurement sent by the network device, the number of ports being equal to the total number of antenna ports corresponding to the plurality of CSI-RS resources;
Correspondingly, the UE determining the antenna ports according to the CSI-RSs includes:
The UE determines the respective antenna ports according to the number of ports and the CSI-RSs.

In an embodiment, the process of the UE determining the antenna ports according to the CSI-RSs is implemented through the following steps:
The UE determines the respective antenna ports according to resource configuration information of the plurality of CSI-RS resources corresponding to the CSI-RSs and/or a resource index of each CSI-RS resource.

In an embodiment, respective antenna port indexes of the antenna ports are consecutive positive integers.

In an embodiment, the process of the UE determining the respective antenna ports according to the resource configuration information of the plurality of CSI-RS resources corresponding to the CSI-RSs and/or the resource index of each CSI-RS resource is implemented through the following steps:
For each CSI-RS resource, the UE obtains an antenna port offset corresponding to the CSI-RS resource from the resource configuration information.

The UE determines the respective antenna ports according to the resource configuration information of the plurality of CSI-RS resources and the antenna port offsets respectively corresponding to the plurality of CSI-RS resources.

In an embodiment, the process of the UE determining the antenna ports according to the resource configuration information of the plurality of CSI-RS resources and the antenna port offsets respectively corresponding to the plurality of CSI-RS resources is implemented through the following steps:
For each CSI-RS resource, the UE determines an antenna port p corresponding to the CSI-RS resource according to a first formula, and the first formula is:
$p = δ + s + j ∗ L + Δ p$
where *δ* is a preset constant, s *=* 0,1,...,*L - 1,* L is a quantity of REs included in a CDM group corresponding to the CSI-RS resource, $j = 0 , 1 , … , \frac{N}{L} - 1$, N is the number of antenna ports corresponding to the CSI-RS resource, Δ*p* is an antenna port offset corresponding to the CSI-RS resource, and *s , j* , *L and* Δ*p* are obtained based on the resource configuration information.

In an embodiment, the antenna port offsets respectively corresponding to the plurality of CSI-RS resources are different, and a difference between the antenna port offsets respectively corresponding to two CSI-RS resources is related to the number of antenna ports corresponding to the two CSI-RS resources; or, the antenna port offsets respectively corresponding to the plurality of CSI-RS resources are different, and the antenna port offsets respectively corresponding to the plurality of CSI-RS resources are related to the respective resource indexes of the plurality of CSI-RS resources.

In an embodiment, the process of the UE determining the respective antenna ports according to the resource configuration information of the plurality of CSI-RS resources corresponding to the CSI-RSs and/or the resource index of each CSI-RS resource is implemented through the following steps:
For each CSI-RS resource, the UE determines an antenna port p corresponding to the CSI-RS resource according to a second formula, and the second formula is:
$p = δ + s + j ∗ L + k ∗ N$
where *δ* is a preset constant, *k* is the resource index of the CSI-RS resource, *k =* 0,1,..., *K - 1, K* is the resource number of the plurality of CSI-RS resources, *s =* 0,1,..., *L - 1, L is* a quantity of REs included in a CDM group corresponding to the CSI-RS resource, $j = 0 , 1 , … , \frac{N}{L} - 1$ , *N* is the number of antenna ports corresponding to the CSI-RS resource, and *s, j, L* and *N* are obtained based on the resource configuration information.

In an embodiment, the process of the UE determining the respective antenna ports according to the resource configuration information of the plurality of CSI-RS resources corresponding to the CSI-RSs and/or the resource index of each CSI-RS resource is implemented through the following steps, including:

For each CSI-RS resource, the UE determines an antenna port p corresponding to the CSI-RS resource according to a third formula, and the third formula is:
$p = δ + {s}_{k} + {j}_{k} ∗ {L}_{k} + {\sum }_{i = 0}^{k - 1} {N}_{i}$
where *δ* is a preset constant, *k* is the resource index of the CSI-RS resource, *k =* 0,1,*..., K* - 1, *K* is the resource number of the plurality of CSI-RS resources, *sₖ* = 0,1,..., *Lₖ - 1, Lₖ* is a quantity of REs included in a CDM group corresponding to the k-th CSI-RS resource among the plurality of CSI-RS resources, ${j}_{k} = 0 , 1 , … , \frac{{N}_{k}}{{L}_{k}} - 1$, *Nᵢ* is the number of antenna ports corresponding to the i-th CSI-RS resource among the plurality of CSI-RS resources, and *sₖ, jₖ, Lₖ* and *Nᵢ* are obtained based on the resource configuration information.

In an embodiment, a plurality of antenna ports corresponding to each CSI-RS resource are divided into two groups, and antenna port indexes of the plurality of antenna ports in each group are consecutive positive integers.

In an embodiment, an absolute value of a difference between the smallest antenna port indexes of the two groups of antenna ports corresponding to each CSI-RS resource is equal to one half of the total number of antenna ports corresponding to the plurality of CSI-RS resources.

In an embodiment, the process of the UE determining the respective antenna ports according to the resource configuration information of the plurality of CSI-RS resources corresponding to the CSI-RSs and/or the resource index of each CSI-RS resource is implemented through the following steps:
For each CSI-RS resource, the UE determines an antenna port p corresponding to the CSI-RS resource according to a fourth formula, and the fourth formula is:
$p = δ + s + \left(j+\left(\left⌊\frac{j}{2}\right⌋+k\right)∗\frac{\frac{N}{L}}{2}\right) ∗ L$
where *δ* is a preset constant, *k* is the resource index of the CSI-RS resource, *k =* 0,1,...*, K* - 1, *K* is the resource number of the plurality of CSI-RS resources, *s =* 0,1,.*.., L - 1, L is* a quantity of REs included in a CDM group corresponding to the CSI-RS resource, $j = 0 , 1 , … , \frac{N}{L} - 1$ , *N* is the number of antenna ports corresponding to the CSI-RS resource, and *s, j, L* and *N* are obtained based on the resource configuration information.

In an embodiment, the process of the UE determining the respective antenna ports according to the resource configuration information of the plurality of CSI-RS resources corresponding to the CSI-RSs and/or the resource index of each CSI-RS resource is implemented through the following steps:
For each CSI-RS resource, the UE determines an antenna port p corresponding to the CSI-RS resource according to a fifth formula, and the fifth formula is:
$p = \left\{\begin{matrix}δ + s + j ∗ L + \frac{N}{2} ∗ k , j = 0 , … , \frac{N}{2 L} - 1 \\ δ + s + j ∗ L + \frac{N}{2} ∗ \left(k+K-1\right) , j = \frac{N}{2 L} , … , \frac{N}{L} - 1\end{matrix}\right.$
where *δ* is a preset constant, *k* is the resource index of the CSI-RS resource, *k =* 0,1,..., *K* - 1, *K* is the resource number of the plurality of CSI-RS resources, *s =* 0,1,..., *L - 1,* L is a quantity of REs included in a CDM group corresponding to the CSI-RS resource, $j = 0 , 1 , … , \frac{N}{L} - 1$ , *N* is the number of antenna ports corresponding to the CSI-RS resource, and *s, j, L and N* are obtained based on the resource configuration information.

In an embodiment, the number of ports is configured through a preset field in configuration information of the CSI report, or the number of ports is configured through a preset field in resource configuration information of the CSI-RS resource associated with the CSI report and used for a channel measurement.

In an embodiment, the information transmission method of this embodiment further includes the following steps:
The UE determines the respective resource indexes of the plurality of CSI-RS resources according to respective resource IDs of the plurality of CSI-RS resources.

In an embodiment, the process of the UE determining the respective resource indexes of the plurality of CSI-RS resources according to the respective resource IDs of the plurality of CSI-RS resources is implemented through the following steps:
The UE sorts the plurality of CSI-RS resources in an ascending order or a descending order of the respective resource IDs of the plurality of CSI-RS resources to obtain a sorted sequence;
The UE takes position indexes of the CSI-RS resources in the sorted sequence as the resource indexes of the CSI-RS resources.

In an embodiment, the information transmission method of this embodiment further includes the following steps:
The UE determines the respective resource indexes of the plurality of CSI-RS resources according to both frequency-domain positions and time-domain positions respectively occupied by the plurality of CSI-RS resources.

In an embodiment, the process of the UE determining the respective resource indexes of the plurality of CSI-RS resources based on the frequency domain positions and the time domain positions occupied by the respective CSI-RS resources can be implemented through the following steps:
The UE first sorts the plurality of CSI-RS resources in the frequency domain in an ascending order of CRB indexes and subcarrier indexes respectively corresponding to the CSI-RS resources, and then continues to sort the plurality of CSI-RS resources in the time domain in an ascending order of slot indexes respectively corresponding to the CSI-RS resources, to obtain a first sorting result, and determines the respective resource indexes of the plurality of CSI-RS resources according to the first sorting result; or, the UE first sorts the plurality of CSI-RS resources in the time domain in an ascending order of slot indexes respectively corresponding to the CSI-RS resources, and then continues to sort the plurality of CSI-RS resources in the frequency domain in an ascending order of CRB indexes and subcarrier indexes respectively corresponding to the CSI-RS resources, to obtain a second sorting result, and determines the respective resource indexes of the plurality of CSI-RS resources according to the second sorting result.

Regarding the relevant limitations and beneficial effects of the information transmission method applied in the UE, reference can be made to the above relevant content of the information transmission method applied to the network device, which will not be repeated here.

Hereinafter, through several examples, several possible implementations of the information transmission method of the embodiments of the present disclosure are described by way of example.

### Example 1:

The network device configures one CSI report through the higher layer parameter CSI-ReportConfig, where (*N*₁,*N*₂) included in the CSI-ReportConfig = (8, 4), that is, the number of ports of the CSI-RS resources used for a channel measurement X = 2*8*4 = 64. The CSI-ResourceConfig associated with the CSI report and used for a channel measurement includes 2 CSI-RS resources. For the 2 CSI-RS resources, the quantity of antenna ports corresponding to each CSI-RS resource is 32 (i.e., N=32), the CDM group type corresponding to the 2 CSI-RS resources is cdm8-FD2-TD4, the quantity of CDM groups corresponding to the 2 CSI-RS resources is 4 (j=0, 1, 2, 3), the quantity of REs included in a CDM group corresponding to the 2 CSI-RS resources is 8 (s=0, 1, ..., 7), and the antenna port offsets corresponding to the 2 CSI-RS resources are 0 and 32 respectively.

Based on the resource configuration information of the above 2 CSI-RS resources, the network device calculates the antenna port indexes of the 64 antenna ports corresponding to the 2 CSI-RS resources using the above first formula, that is, the network device consecutively numbers the 64 antenna ports corresponding to the 2 CSI-RS resources using the first formula, and finally the network device determines the 64 antenna ports corresponding to the 2 CSI-RS resources.

The correspondence between the REs occupied by the 2 CSI-RS resources in (1 slot, 1 PRB) and the respective antenna ports may be as shown in FIG. 4.

Next, the network device sends CSI-RSs to the UE on the respective antenna ports corresponding to the 2 CSI-RS resources, that is, the network device maps the CSI-RSs of the respective antenna ports corresponding to the 2 CSI-RS resources onto the antenna ports having the same antenna port indexes for transmission.

The UE receives the CSI-RSs transmitted by the network device on the respective antenna ports corresponding to the 2 CSI-RS resources.

The UE determines, based on the configured (*N*₁,*N*₂) = (8, 4), that the number of ports of the CSI-RS resources used for a channel measurement X = 2*8*4 = 64. Based on the above resource configuration information of the 2 CSI-RS resources, the UE consecutively numbers the 64 antenna ports corresponding to the 2 CSI-RS resources using the first formula, and finally the UE determines the 64 antenna ports corresponding to the 2 CSI-RS resources.

The UE generates one CSI report based on the CSI-RSs transmitted by the network device on the respective antenna ports corresponding to the 2 CSI-RS resources, and the rows of the PMI in the CSI report correspond one-to-one to the respective antenna ports corresponding to the 2 CSI-RS resources.

### Example 2:

The network device configures one CSI report through the higher layer parameter CSI-ReportConfig, where (*N*₁,*N*₂) included in the CSI-ReportConfig = (8, 4), that is, the number of ports of the CSI-RS resources used for a channel measurement X = 2*8*4 = 64. The CSI-ResourceConfig associated with the CSI report and used for a channel measurement includes 2 CSI-RS resources. For the 2 CSI-RS resources, the quantity of antenna ports corresponding to each CSI-RS resource is 32 (i.e., N=32), the CDM group type corresponding to the 2 CSI-RS resources is cdm8-FD2-TD4, the quantity of CDM groups corresponding to the 2 CSI-RS resources is 4 (j=0, 1, 2, 3), the quantity of REs included in a CDM group corresponding to the 2 CSI-RS resources is 8 (s=0, 1, ..., 7), and the resource IDs of the 2 CSI-RS resources are 1 and 2 respectively.

The network device arranges the 2 CSI-RS resources in ascending order of their resource IDs to determine their resource indexes k, that is, the resource index of the CSI-RS resource with resource ID=1 is k=0, and the resource index of the CSI-RS resource with resource ID=2 is k=1.

The network device calculates the antenna port offsets corresponding to the 2 CSI-RS resources based on the above Formula 1, where the antenna port offset corresponding to the CSI-RS resource with k=0 is 0, and the antenna port offset corresponding to the CSI-RS resource with k=1 is 32.

Based on the resource configuration information of the above 2 CSI-RS resources, the network device calculates the antenna port indexes of the 64 antenna ports corresponding to the 2 CSI-RS resources using the above first formula, that is, the network device consecutively numbers the 64 antenna ports corresponding to the 2 CSI-RS resources using the first formula, and finally the network device determines the 64 antenna ports corresponding to the 2 CSI-RS resources.

The correspondence between the REs occupied by the 2 CSI-RS resources in (1 slot, 1 PRB) and the respective antenna ports may be as shown in FIG. 13.

Next, the network device sends CSI-RSs to the UE on the respective antenna ports corresponding to the 2 CSI-RS resources, that is, the network device maps the CSI-RSs of the respective antenna ports corresponding to the 2 CSI-RS resources onto the antenna ports having the same antenna port indexes for transmission.

The UE receives the CSI-RSs transmitted by the network device on the respective antenna ports corresponding to the 2 CSI-RS resources.

The UE determines, based on the configured (*N*₁,*N*₂) = (8, 4), that the number of ports of the CSI-RS resources used for a channel measurement X = 2*8*4 = 64. Based on the above resource configuration information of the 2 CSI-RS resources, the UE consecutively numbers the 64 antenna ports corresponding to the 2 CSI-RS resources using the first formula, and finally the UE determines the 64 antenna ports corresponding to the 2 CSI-RS resources.

The UE generates one CSI report based on the CSI-RSs transmitted by the network device on the respective antenna ports corresponding to the 2 CSI-RS resources, and the rows of the PMI in the CSI report correspond one-to-one to the respective antenna ports corresponding to the 2 CSI-RS resources.

If a CSI-RS in one of the 2 CSI-RS resources cannot be transmitted, the UE generates one CSI report based on the successfully received CSI-RSs transmitted by the network device on the respective antenna ports corresponding to 1 CSI-RS resource, and the rows of the PMI in the CSI report correspond one-to-one to the respective antenna ports corresponding to the 1 CSI-RS resource; or, the UE does not report the CSI report this time.

### Example 3:

The network device configures one CSI report through the higher layer parameter CSI-ReportConfig, where (*N*₁,*N*₂) included in the CSI-ReportConfig = (8, 4), that is, the number of ports of the CSI-RS resources used for a channel measurement X = 2*8*4 = 64. The CSI-ResourceConfig associated with the CSI report and used for a channel measurement includes 2 CSI-RS resources. For the 2 CSI-RS resources, the quantity of antenna ports corresponding to each CSI-RS resource is 32 (i.e., N=32), the CDM group type corresponding to the 2 CSI-RS resources is cdm8-FD2-TD4, the quantity of CDM groups corresponding to the 2 CSI-RS resources is 4 (j=0, 1, 2, 3), the quantity of REs included in a CDM group corresponding to the 2 CSI-RS resources is 8 (s=0, 1, ..., 7), and the resource IDs of the 2 CSI-RS resources are 1 and 2 respectively.

The network device arranges the 2 CSI-RS resources in ascending order of their resource IDs to determine their resource indexes k, that is, the resource index of the CSI-RS resource with resource ID=1 is k=0, and the resource index of the CSI-RS resource with resource ID=2 is k=1.

Based on the resource configuration information of the above 2 CSI-RS resources, the network device calculates the antenna port indexes of the 64 antenna ports corresponding to the 2 CSI-RS resources using the above second formula, that is, the network device consecutively numbers the 64 antenna ports corresponding to the 2 CSI-RS resources using the second formula, and finally the network device determines the 64 antenna ports corresponding to the 2 CSI-RS resources.

The correspondence between the REs occupied by the 2 CSI-RS resources in (1 slot, 1 PRB) and the respective antenna ports may be as shown in FIG. 5, where the resource index of the CSI-RS resource with resource ID=1 is k=0, and the resource index of the CSI-RS resource with resource ID=2 is k=1.

Next, the network device sends CSI-RSs to the UE on the respective antenna ports corresponding to the 2 CSI-RS resources, that is, the network device maps the CSI-RSs of the respective antenna ports corresponding to the 2 CSI-RS resources onto the antenna ports having the same antenna port indexes for transmission.

The UE receives the CSI-RSs transmitted by the network device on the antenna ports respectively corresponding to the 2 CSI-RS resources.

The UE determines, based on the configured (*N*₁,*N*₂) = (8, 4), that the number of ports of the CSI-RS resources used for a channel measurement X = 2*8*4 = 64. Based on the above resource configuration information of the 2 CSI-RS resources, the UE consecutively numbers the 64 antenna ports corresponding to the 2 CSI-RS resources using the second formula, and finally the UE determines the 64 antenna ports corresponding to the 2 CSI-RS resources.

The UE generates one CSI report based on the CSI-RSs transmitted by the network device on the 64 antenna ports corresponding to the 2 CSI-RS resources, and the rows of the PMI in the CSI report correspond one-to-one to the 64 antenna ports corresponding to the 2 CSI-RS resources.

### Example 4:

The network device configures one CSI report through the higher layer parameter CSI-ReportConfig. A preset field X in the resource configuration information of the CSI-RS resource associated with the CSI report and used for a channel measurement is configured as X=64 (X indicates the total number of antenna ports corresponding to the plurality of CSI-RS resources used for a channel measurement), and CSI-ResourceConfig includes 3 CSI-RS resources. The quantities of antenna ports corresponding to the 3 CSI-RS resources are 32, 16, and 16 respectively.

The network device determines the resource indexes k of the 3 CSI-RS resources based on the frequency domain positions and time domain positions occupied by each of the 3 CSI-RS resources. The network device first sorts the 3 CSI-RS resources in the frequency domain in an ascending order of CRB indexes and subcarrier indexes corresponding to the 3 CSI-RS resources, and then continues to sort the 3 CSI-RS resources in the time domain in an ascending order of slot indexes corresponding to the 3 CSI-RS resources, and determines that the resource indexes of the 3 CSI-RS resources are 0, 1, and 2 in sequence. That is, the network device numbers the resource indexes of the 3 CSI-RS resources in an order of first frequency domain (CRB indexes and subcarrier indexes in ascending order) and then time domain (slot indexes in ascending order).

Based on the resource configuration information of the above 3 CSI-RS resources, the network device calculates the antenna port indexes of the 64 antenna ports corresponding to the 3 CSI-RS resources using the above third formula, that is, the network device consecutively numbers the 64 antenna ports corresponding to the 3 CSI-RS resources using the third formula, and finally the network device determines the 64 antenna ports corresponding to the 3 CSI-RS resources.

The correspondence between the REs occupied by the 3 CSI-RS resources in (1 slot, 1 PRB) and the respective antenna ports may be as shown in FIG. 6.

Next, the network device sends CSI-RSs to the UE on the respective antenna ports corresponding to the 3 CSI-RS resources, that is, the network device maps the CSI-RSs of the respective antenna ports corresponding to the 3 CSI-RS resources onto the antenna ports having the same antenna port indexes for transmission.

The UE receives the CSI-RSs transmitted by the network device on the respective antenna ports corresponding to the 3 CSI-RS resources.

The UE determines, based on the configured X=64, that the number of ports of the CSI-RS resources used for a channel measurement is 64. Based on the above resource configuration information of the 3 CSI-RS resources, the UE consecutively numbers the 64 antenna ports corresponding to the 3 CSI-RS resources using the third formula, and finally the UE determines the 64 antenna ports corresponding to the 3 CSI-RS resources.

The UE generates one CSI report based on the CSI-RSs transmitted by the network device on the 64 antenna ports corresponding to the 3 CSI-RS resources, and the rows of the PMI in the CSI report correspond one-to-one to the 64 antenna ports corresponding to the 3 CSI-RS resources.

### Example 5:

The network device configures one CSI report through the higher layer parameter CSI-ReportConfig, where (*N*₁,*N*₂) included in the CSI-ReportConfig = (8, 4), that is, the number of ports of the CSI-RS resources used for a channel measurement X = 2*8*4 = 64. The CSI-ResourceConfig associated with the CSI report and used for a channel measurement includes 2 CSI-RS resources. For the 2 CSI-RS resources, the quantity of antenna ports corresponding to each CSI-RS resource is 32 (i.e., N=32), the CDM group type corresponding to the 2 CSI-RS resources is cdm8-FD2-TD4, the quantity of CDM groups corresponding to the 2 CSI-RS resources is 4 (j=0, 1, 2, 3), the quantity of REs included in a CDM group corresponding to the 2 CSI-RS resources is 8 (s=0, 1, ..., 7), and the resource IDs of the 2 CSI-RS resources are 1 and 2 respectively.

The network device arranges the 2 CSI-RS resources in ascending order of their resource IDs to determine their resource indexes k, that is, the resource index of the CSI-RS resource with resource ID=1 is k=0, and the resource index of the CSI-RS resource with resource ID=2 is k=1.

Based on the resource configuration information of the above 2 CSI-RS resources, the network device calculates the antenna port indexes of the 64 antenna ports corresponding to the 2 CSI-RS resources using the above fourth formula or fifth formula, that is, the network device consecutively numbers the 64 antenna ports corresponding to the 2 CSI-RS resources using the fourth formula or the fifth formula, and finally the network device determines the 64 antenna ports corresponding to the 2 CSI-RS resources.

The correspondence between the REs occupied by the 2 CSI-RS resources in (1 slot, 1 PRB) and the respective antenna ports may be as shown in FIG. 7, where the resource index of the CSI-RS resource with resource ID=1 is k=0, and the resource index of the CSI-RS resource with resource ID=2 is k=1.

Next, the network device sends CSI-RSs to the UE on the respective antenna ports corresponding to the 2 CSI-RS resources, that is, the network device maps the CSI-RSs of the respective antenna ports corresponding to the 2 CSI-RS resources onto the antenna ports having the same antenna port indexes for transmission.

The UE receives the CSI-RSs transmitted by the network device on the respective antenna ports corresponding to the 2 CSI-RS resources.

The UE determines, based on the configured (*N*₁,*N*₂) = (8, 4), that the number of ports of the CSI-RS resources used for a channel measurement X = 2*8*4 = 64. Based on the above resource configuration information of the 2 CSI-RS resources, the UE consecutively numbers the 64 antenna ports corresponding to the 2 CSI-RS resources using the fourth formula or the fifth formula, and finally the UE determines the 64 antenna ports corresponding to the 2 CSI-RS resources.

The UE generates one CSI report based on the CSI-RSs transmitted by the network device on the 64 antenna ports corresponding to the 2 CSI-RS resources, and the rows of the PMI in the CSI report correspond one-to-one to the 64 antenna ports corresponding to the 2 CSI-RS resources.

It should be understood that although the respective steps in the above flowcharts are displayed in sequence as indicated by the arrows, these steps are not necessarily executed in the order indicated by the arrows. Unless explicitly stated herein, there is no strict order limitation on the execution of these steps, and these steps can be executed in other orders. Moreover, at least a part of the steps in the above flowcharts may include a plurality of steps or a plurality of stages. These steps or stages are not necessarily executed completely at the same time, but can be executed at different times. The execution order of these steps or stages is not necessarily performed in sequence, but can be performed alternately or in turn with other steps or at least a part of the steps or stages in other steps.

In an embodiment, as shown in FIG. 14, an information transmission apparatus is provided, which is applied to a network device, and the apparatus includes:
a determination module 1401 configured to determine antenna ports respectively corresponding to a plurality of CSI-RS resources, where the plurality of CSI-RS resources each correspond to different antenna ports;
a transmission module 1402 configured to send CSI-RSs to a UE through the antenna ports respectively corresponding to the plurality of CSI-RS resources, where the CSI-RSs are configured for the UE to generate a CSI report based on the CSI-RSs.

In an embodiment, the transmission module 1402 is further configured to send, to the UE, a number of ports of CSI-RS resources associated with the CSI report and used for a channel measurement, where the number of ports is equal to the total number of antenna ports corresponding to the plurality of CSI-RS resources.

In an embodiment, the determination module 1401 is specifically configured to determine the antenna ports according to resource configuration information of the plurality of CSI-RS resources and/or respective resource indexes of the plurality of CSI-RS resources.

In an embodiment, respective antenna port indexes of the antenna ports are consecutive positive integers.

In an embodiment, the determination module 1401 is specifically configured to, for each CSI-RS resource, obtain an antenna port offset corresponding to the CSI-RS resource from the resource configuration information; and determine the respective antenna ports according to the resource configuration information of the plurality of CSI-RS resources and the antenna port offsets respectively corresponding to the plurality of CSI-RS resources.

In an embodiment, the determination module 1401 is specifically configured to, for each CSI-RS resource, determine an antenna port p corresponding to the CSI-RS resource according to a first formula, and the first formula is:
$p = δ + s + j ∗ L + Δ p$
where *δ* is a preset constant, *s =* 0,1,...,*L - 1, L* is a quantity of REs included in a CDM group corresponding to the CSI-RS resource, $j = 0 , 1 , … , \frac{N}{L} - 1$, N is the number of antenna ports corresponding to the CSI-RS resource, Δ*p* is an antenna port offset corresponding to the CSI-RS resource, and *s* , *j* , *L* and Δ*p* are obtained based on the resource configuration information.

In an embodiment, the antenna port offsets respectively corresponding to the plurality of CSI-RS resources are different, and a difference between the antenna port offsets respectively corresponding to two CSI-RS resources is related to the number of antenna ports corresponding to the two CSI-RS resources; or, the antenna port offsets respectively corresponding to the plurality of CSI-RS resources are different, and the antenna port offsets respectively corresponding to the plurality of CSI-RS resources are related to the respective resource indexes of the plurality of CSI-RS resources.

In an embodiment, the determination module 1401 is specifically configured to, for each CSI-RS resource, determine an antenna port p corresponding to the CSI-RS resource according to a second formula, and the second formula is:
$p = δ + s + j ∗ L + k ∗ N$
where *δ* is a preset constant, *k* is the resource index of the CSI-RS resource, *k =* 0,1,..., *K* - 1, *K* is the resource number of the plurality of CSI-RS resources, *s =* 0,1,..., *L - 1,* L is a quantity of REs included in a CDM group corresponding to the CSI-RS resource, $j = 0 , 1 , … , \frac{N}{L} - 1$ , *N* is the number of antenna ports corresponding to the CSI-RS resource, and *s, j, L* and *N* are obtained based on the resource configuration information.

In an embodiment, the determination module 1401 is specifically configured to, for each CSI-RS resource, determine an antenna port p corresponding to the CSI-RS resource according to a third formula, and the third formula is:
$p = δ + {s}_{k} + {j}_{k} ∗ {L}_{k} + {\sum }_{i = 0}^{k - 1} {N}_{i}$
where *δ* is a preset constant, *k* is the resource index of the CSI-RS resource, *k =* 0,1,..., *K* - 1, *K* is the resource number of the plurality of CSI-RS resources, *sₖ* = 0,1,..., *Lₖ - 1, Lₖ* is a quantity of REs included in a CDM group corresponding to the k-th CSI-RS resource among the plurality of CSI-RS resources, ${j}_{k} = 0 , 1 , … , \frac{{N}_{k}}{{L}_{k}} - 1$, *Nᵢ* is the number of antenna ports corresponding to the i-th CSI-RS resource among the plurality of CSI-RS resources, and *sₖ, jₖ, Lₖ* and *Nᵢ* are obtained based on the resource configuration information.

In an embodiment, a plurality of antenna ports corresponding to each CSI-RS resource are divided into two groups, and antenna port indexes of the plurality of antenna ports in each group are consecutive positive integers.

In an embodiment, an absolute value of a difference between the smallest antenna port indexes of the two groups of antenna ports corresponding to each CSI-RS resource is equal to one half of the total number of antenna ports corresponding to the plurality of CSI-RS resources.

In an embodiment, the determination module 1401 is specifically configured to, for each CSI-RS resource, determine an antenna port p corresponding to the CSI-RS resource according to a fourth formula, and the fourth formula is:
$p = δ + s + \left(j+\left(\left⌊\frac{j}{2}\right⌋+k\right)∗\frac{\frac{N}{L}}{2}\right) ∗ L$
where *δ* is a preset constant, *k* is the resource index of the CSI-RS resource, *k =* 0,1,..., *K* - 1, *K* is the resource number of the plurality of CSI-RS resources, *s =* 0,1,..., *L - 1, L is* a quantity of REs included in a CDM group corresponding to the CSI-RS resource, $j = 0 , 1 , … , \frac{N}{L} - 1$ , *N* is the number of antenna ports corresponding to the CSI-RS resource, and *s, j, L* and *N* are obtained based on the resource configuration information.

In an embodiment, the determination module 1401 is specifically configured to, for each CSI-RS resource, determine an antenna port p corresponding to the CSI-RS resource according to a fifth formula, and the fifth formula is:
$p = \left\{\begin{matrix}δ + s + j ∗ L + \frac{N}{2} ∗ k , j = 0 , … , \frac{N}{2 L} - 1 \\ δ + s + j ∗ L + \frac{N}{2} ∗ \left(k+K-1\right) , j = \frac{N}{2 L} , … , \frac{N}{L} - 1\end{matrix}\right.$
where *δ* is a preset constant, *k* is the resource index of the CSI-RS resource, *k =* 0,1,..., *K* - 1, *K* is the resource number of the plurality of CSI-RS resources, *s =* 0,1,..., *L - 1, L is* a quantity of REs included in a CDM group corresponding to the CSI-RS resource, $j = 0 , 1 , … , \frac{N}{L} - 1$ , *N* is the number of antenna ports corresponding to the CSI-RS resource, and *s, j, L* and *N* are obtained based on the resource configuration information.

In an embodiment, the number of ports is configured through a preset field in configuration information of the CSI report, or the number of ports is configured through a preset field in resource configuration information of the CSI-RS resource associated with the CSI report and used for a channel measurement.

In an embodiment, the determination module 1401 is further configured to determine the respective resource indexes of the plurality of CSI-RS resources according to respective resource IDs of the plurality of CSI-RS resources.

In an embodiment, the determination module 1401 is further specifically configured to sort the plurality of CSI-RS resources in an ascending order or a descending order of the respective resource IDs of the plurality of CSI-RS resources to obtain a sorted sequence; and determine respective position indexes of the plurality of CSI-RS resources in the sorted sequence as the respective resource indexes of the plurality of CSI-RS resources.

In an embodiment, the determination module 1401 is further configured to determine the respective resource indexes of the plurality of CSI-RS resources according to both frequency-domain positions and time-domain positions respectively occupied by the plurality of CSI-RS resources.

In an embodiment, the determination module 1401 is further specifically configured to first sort the plurality of CSI-RS resources in the frequency domain in an ascending order of CRB indexes and subcarrier indexes respectively corresponding to the CSI-RS resources, and then continue to sort the plurality of CSI-RS resources in the time domain in an ascending order of slot indexes respectively corresponding to the CSI-RS resources, to obtain a first sorting result, and determine the respective resource indexes of the plurality of CSI-RS resources according to the first sorting result; or, first sort the plurality of CSI-RS resources in the time domain in an ascending order of slot indexes respectively corresponding to the CSI-RS resources, and then continue to sort the plurality of CSI-RS resources in the frequency domain in an ascending order of CRB indexes and subcarrier indexes respectively corresponding to the CSI-RS resources, to obtain a second sorting result, and determine the respective resource indexes of the plurality of CSI-RS resources according to the second sorting result.

In an embodiment, the apparatus further includes:
a receiving module configured to receive the CSI report sent by the UE, where the CSI report is generated by the UE based on successfully received CSI-RSs.

For specific limitations of the information transmission apparatus used in the network device, reference can be made to the above limitations on the information transmission method used in the network device, which will not be repeated here. The respective modules in the above information transmission apparatus can be implemented in whole or in part by software, hardware, and combinations thereof. The above respective modules can be embedded in or independent of the processor in the network device in the form of hardware, or can be stored in the memory in the network device in the form of software, so that the processor can call and execute the operations corresponding to the above respective modules.

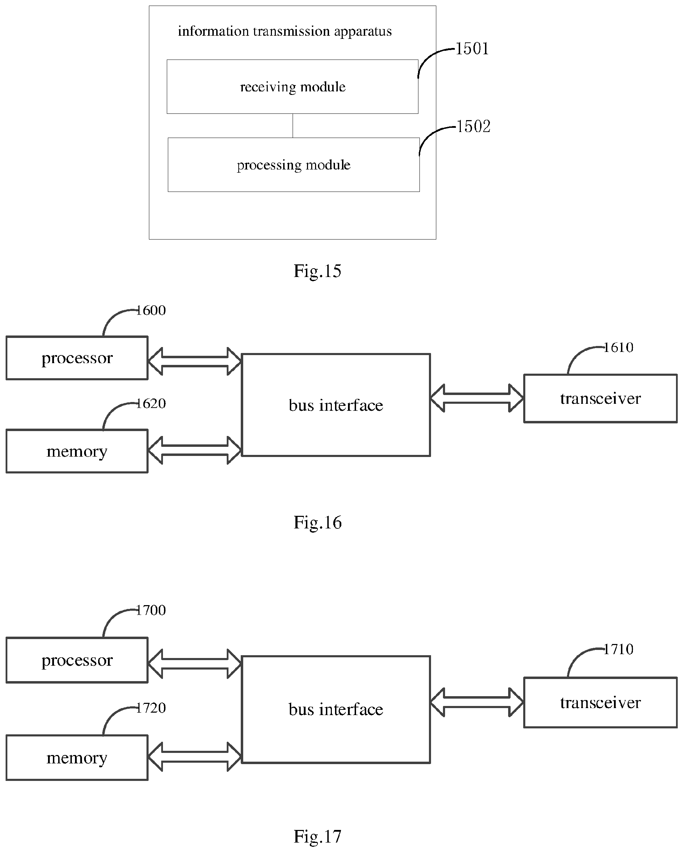

In an embodiment, as shown in FIG. 15, an information transmission apparatus is provided, which is applied to a UE, and the apparatus includes:
a receiving module 1501 configured to receive CSI-RSs sent by a network device, where the CSI-RSs are sent by the network device through antenna ports respectively corresponding to a plurality of CSI-RS resources, and the plurality of CSI-RS resources each correspond to different antenna ports;
a processing module 1502 configured to determine the antenna ports according to the CSI-RSs and generate a CSI report according to the antenna ports and the CSI-RSs.

In an embodiment, the apparatus further includes:
a receiving module configured to receive, from the network device, a number of ports of CSI-RS resources associated with the CSI report and used for a channel measurement, where the number of ports is equal to the total number of antenna ports corresponding to the plurality of CSI-RS resources;
the processing module 1502 is specifically configured to determine the respective antenna ports according to the number of ports and the CSI-RSs.

In an embodiment, the processing module 1502 is specifically configured to determine the respective antenna ports according to resource configuration information of the plurality of CSI-RS resources corresponding to the CSI-RSs and/or a resource index of each CSI-RS resource.

In an embodiment, respective antenna port indexes of the antenna ports are consecutive positive integers.

In an embodiment, the processing module 1502 is specifically configured to, for each CSI-RS resource, obtain an antenna port offset corresponding to the CSI-RS resource from the resource configuration information; and determine the respective antenna ports according to the resource configuration information of the plurality of CSI-RS resources and the antenna port offsets respectively corresponding to the plurality of CSI-RS resources.

In an embodiment, the processing module 1502 is specifically configured to, for each CSI-RS resource, determine an antenna port p corresponding to the CSI-RS resource according to a first formula, and the first formula is:
$p = δ + s + j ∗ L + Δ p$
where *δ* is a preset constant, *s =* 0,1,...,*L -* 1, *L* is a quantity of REs included in a CDM group corresponding to the CSI-RS resource, $j = 0 , 1 , … , \frac{N}{L} - 1$, N is the number of antenna ports corresponding to the CSI-RS resource, Δ*p* is an antenna port offset corresponding to the CSI-RS resource, and *s* , *j* , *L* and Δ*p* are obtained based on the resource configuration information.

In an embodiment, the antenna port offsets respectively corresponding to the plurality of CSI-RS resources are different, and a difference between the antenna port offsets respectively corresponding to two CSI-RS resources is related to the number of antenna ports corresponding to the two CSI-RS resources; or, the antenna port offsets respectively corresponding to the plurality of CSI-RS resources are different, and the antenna port offsets respectively corresponding to the plurality of CSI-RS resources are related to the respective resource indexes of the plurality of CSI-RS resources.

In an embodiment, the processing module 1502 is specifically configured to, for each CSI-RS resource, determine an antenna port p corresponding to the CSI-RS resource according to a second formula, and the second formula is:
$p = δ + s + j ∗ L + k ∗ N$
where *δ* is a preset constant, *k* is the resource index of the CSI-RS resource, *k =* 0,1,..., *K* - 1, *K* is the resource number of the plurality of CSI-RS resources, *s =* 0,1,..., *L - 1,* L is a quantity of REs included in a CDM group corresponding to the CSI-RS resource, $j = 0 , 1 , … , \frac{N}{L} - 1$ , *N* is the number of antenna ports corresponding to the CSI-RS resource, and *s, j, L* and *N* are obtained based on the resource configuration information.

In an embodiment, the processing module 1502 is specifically configured to, for each CSI-RS resource, determine an antenna port p corresponding to the CSI-RS resource according to a third formula, and the third formula is:
$p = δ + {s}_{k} + {j}_{k} ∗ {L}_{k} + {\sum }_{i = 0}^{k - 1} {N}_{i}$
where *δ* is a preset constant, *k* is the resource index of the CSI-RS resource, *k = 0,1,..., K* - 1, *K* is the resource number of the plurality of CSI-RS resources, *sₖ* = 0,1,..., *Lₖ - 1, Lₖ* is a quantity of REs included in a CDM group corresponding to the k-th CSI-RS resource among the plurality of CSI-RS resources, ${j}_{k} = 0 , 1 , … , \frac{{N}_{k}}{{L}_{k}} - 1$, *Nᵢ* is the number of antenna ports corresponding to the i-th CSI-RS resource among the plurality of CSI-RS resources, and *sₖ, jₖ, Lₖ* and *Nᵢ* are obtained based on the resource configuration information.

In an embodiment, a plurality of antenna ports corresponding to each CSI-RS resource are divided into two groups, and antenna port indexes of the plurality of antenna ports in each group are consecutive positive integers.

In an embodiment, an absolute value of a difference between the smallest antenna port indexes of the two groups of antenna ports corresponding to each CSI-RS resource is equal to one half of the total number of antenna ports corresponding to the plurality of CSI-RS resources.

In an embodiment, the processing module 1502 is specifically configured to, for each CSI-RS resource, determine an antenna port p corresponding to the CSI-RS resource according to a fourth formula, and the fourth formula is:
$p = δ + s + \left(j+\left(\left⌊\frac{j}{2}\right⌋+k\right)∗\frac{\frac{N}{L}}{2}\right) ∗ L$
where *δ* is a preset constant, *k* is the resource index of the CSI-RS resource, *k =* 0,1,..., *K* - 1, *K* is the resource number of the plurality of CSI-RS resources, *s =* 0,1,..., *L - 1, L* is a quantity of REs included in a CDM group corresponding to the CSI-RS resource, *j =* $0 , 1 , … , \frac{N}{L} - 1$ , *N* is the number of antenna ports corresponding to the CSI-RS resource, and *s, j, L* and *N* are obtained based on the resource configuration information.

In an embodiment, the processing module 1502 is specifically configured to, for each CSI-RS resource, determine an antenna port p corresponding to the CSI-RS resource according to a fifth formula, and the fifth formula is:
$p = \left\{\begin{matrix}δ + s + j ∗ L + \frac{N}{2} ∗ k , j = 0 , … , \frac{N}{2 L} - 1 \\ δ + s + j ∗ L + \frac{N}{2} ∗ \left(k+K-1\right) , j = \frac{N}{2 L} , … , \frac{N}{L} - 1\end{matrix}\right.$
where *δ* is a preset constant, *k* is the resource index of the CSI-RS resource, *k =* 0,1,..., *K* - 1, *K* is the resource number of the plurality of CSI-RS resources, *s =* 0,1,..., *L -* 1, *L* is a quantity of REs included in a CDM group corresponding to the CSI-RS resource, $j = 0 , 1 , … , \frac{N}{L} - 1$ , *N* is the number of antenna ports corresponding to the CSI-RS resource, and *s, j, L* and *N* are obtained based on the resource configuration information.

In an embodiment, the number of ports is configured through a preset field in configuration information of the CSI report, or the number of ports is configured through a preset field in resource configuration information of the CSI-RS resource associated with the CSI report and used for a channel measurement.

In an embodiment, the processing module 1502 is further configured to determine the respective resource indexes of the plurality of CSI-RS resources according to respective resource IDs of the plurality of CSI-RS resources.

In an embodiment, the processing module 1502 is further specifically configured to sort the plurality of CSI-RS resources in an ascending order or a descending order of the respective resource IDs of the plurality of CSI-RS resources to obtain a sorted sequence; and determine respective position indexes of the plurality of CSI-RS resources in the sorted sequence as the respective resource indexes of the plurality of CSI-RS resources.

In an embodiment, the processing module 1502 is further configured to determine the respective resource indexes of the plurality of CSI-RS resources according to both frequency-domain positions and time-domain positions respectively occupied by the plurality of CSI-RS resources.

In an embodiment, the processing module 1502 is further specifically configured to first sort the plurality of CSI-RS resources in the frequency domain in an ascending order of CRB indexes and subcarrier indexes respectively corresponding to the CSI-RS resources, and then continue to sort the plurality of CSI-RS resources in the time domain in an ascending order of slot indexes respectively corresponding to the CSI-RS resources, to obtain a first sorting result, and determine the respective resource indexes of the plurality of CSI-RS resources according to the first sorting result; or, first sort the plurality of CSI-RS resources in the time domain in an ascending order of slot indexes respectively corresponding to the CSI-RS resources, and then continue to sort the plurality of CSI-RS resources in the frequency domain in an ascending order of CRB indexes and subcarrier indexes respectively corresponding to the CSI-RS resources, to obtain a second sorting result, and determine the respective resource indexes of the plurality of CSI-RS resources according to the second sorting result.

For specific limitations of the information transmission apparatus used in the UE, reference can be made to the above limitations on the information transmission method used in the UE, which will not be repeated here. The respective modules in the above information transmission apparatus can be implemented in whole or in part by software, hardware, and combinations thereof. The above respective modules can be embedded in or independent of the processor in the UE in the form of hardware, or can be stored in the memory in the UE in the form of software, so that the processor can call and execute the operations corresponding to the above respective modules.

FIG. 16 is a schematic structural diagram of a network device provided by an embodiment of the present disclosure. The network device may include a processor 1600, a transceiver 1610, and a memory 1620. The transceiver 1610 is configured to receive and send data under the control of the processor 1600. The memory 1620 is configured to store a computer program.

In FIG. 16, a bus architecture may include any number of interconnected buses and bridges, specifically various circuits of one or more processors represented by the processor 1600 and a memory represented by the memory 1620 are linked together. The bus architecture can also link together various other circuits such as peripheral devices, voltage regulators, and power management circuits, which are well known in the art, and therefore, will not be further described herein. A bus interface provides an interface.

The transceiver 1610 may be a plurality of elements, that is, includes a transmitter and a receiver, providing a unit for communicating with various other apparatuses over a transmission medium, and these transmission media include wireless channels, wired channels, optical cables, and the like. The processor 1600 is responsible for managing the bus architecture and general processing, and the memory 1620 can store data used by the processor 1600 when performing operations.

The processor 1600 may be a central processing unit (CPU), an application specific integrated circuit (ASIC), a field-programmable gate array (FPGA), or a complex programmable logic device (CPLD), and the processor 1600 may also adopt a multi-core architecture.

The processor 1600 is configured to execute the following steps according to obtained executable instructions by calling the computer program stored in the memory 1620:
determining antenna ports respectively corresponding to a plurality of CSI-RS resources, where the plurality of CSI-RS resources each correspond to different antenna ports;
controlling the transceiver to send CSI-RSs to a UE through the antenna ports respectively corresponding to the plurality of CSI-RS resources, where the CSI-RSs are configured for the UE to generate a CSI report based on the CSI-RSs.

In an embodiment, the processor 1600 is configured to read the computer program in the memory 1620 and further perform the following operations:
controlling the transceiver 1610 to send, to the UE, a number of ports of CSI-RS resources associated with the CSI report and used for a channel measurement, where the number of ports is equal to the total number of antenna ports corresponding to the plurality of CSI-RS resources.

In an embodiment, the processor 1600 is configured to read the computer program in the memory 1620 and specifically perform the following operations:
determining the antenna ports according to resource configuration information of the plurality of CSI-RS resources and/or respective resource indexes of the plurality of CSI-RS resources.

In an embodiment, respective antenna port indexes of the antenna ports are consecutive positive integers.

In an embodiment, the processor 1600 is configured to read the computer program in the memory 1620 and specifically perform the following operations:
for each of the plurality of CSI-RS resources, obtaining, from the resource configuration information, antenna port offsets respectively corresponding to the plurality of CSI-RS resources;
determining the antenna ports according to the resource configuration information of the plurality of CSI-RS resources and the antenna port offsets respectively corresponding to the plurality of CSI-RS resources.

In an embodiment, the processor 1600 is configured to read the computer program in the memory 1620 and specifically perform the following operations:
for each CSI-RS resource, determining an antenna port p corresponding to the CSI-RS resource according to a first formula, and the first formula is:
   $p = δ + s + j ∗ L + Δ p$
where *δ* is a preset constant, *s =* 0,1,...,*L -* 1, *L* is a quantity of REs included in a CDM group corresponding to the CSI-RS resource, $j = 0 , 1 , … , \frac{N}{L} - 1$, N is the number of antenna ports corresponding to the CSI-RS resource, Δ*p* is an antenna port offset corresponding to the CSI-RS resource, and *s* , *j* , *L* and Δ*p* are obtained based on the resource configuration information.

In an embodiment, the antenna port offsets respectively corresponding to the plurality of CSI-RS resources are different, and a difference between the antenna port offsets respectively corresponding to two CSI-RS resources is related to the number of antenna ports corresponding to the two CSI-RS resources; or,
the antenna port offsets respectively corresponding to the plurality of CSI-RS resources are different, and the antenna port offsets respectively corresponding to the plurality of CSI-RS resources are related to the respective resource indexes of the plurality of CSI-RS resources.

In an embodiment, the processor 1600 is configured to read the computer program in the memory 1620 and specifically perform the following operations:
for each CSI-RS resource, determining an antenna port p corresponding to the CSI-RS resource according to a second formula, and the second formula is:
   $p = δ + s + j ∗ L + k ∗ N$
where *δ* is a preset constant, *k* is the resource index of the CSI-RS resource, *k =* 0,1,..., *K* - 1, *K* is the resource number of the plurality of CSI-RS resources, *s =* 0,1,..., *L - 1,* L is a quantity of REs included in a CDM group corresponding to the CSI-RS resource, $j = 0 , 1 , … , \frac{N}{L} - 1$ , *N* is the number of antenna ports corresponding to the CSI-RS resource, and *s, j, L* and *N* are obtained based on the resource configuration information.

In an embodiment, the processor 1600 is configured to read the computer program in the memory 1620 and specifically perform the following operations:
for each CSI-RS resource, determining an antenna port p corresponding to the CSI-RS resource according to a third formula, and the third formula is:
   $p = δ + {s}_{k} + {j}_{k} ∗ {L}_{k} + {\sum }_{i = 0}^{k - 1} {N}_{i}$
where *δ* is a preset constant, *k* is the resource index of the CSI-RS resource, *k =* 0,1,..., *K* - 1, *K* is the resource number of the plurality of CSI-RS resources, *sₖ* = 0,1,..., *Lₖ -* 1*, Lₖ* is a quantity of REs included in a CDM group corresponding to the k-th CSI-RS resource among the plurality of CSI-RS resources, ${j}_{k} = 0 , 1 , … , \frac{{N}_{k}}{{L}_{k}} - 1$, *Nᵢ* is the number of antenna ports corresponding to the i-th CSI-RS resource among the plurality of CSI-RS resources, and *sₖ, jₖ, Lₖ* and *Nᵢ* are obtained based on the resource configuration information.

In an embodiment, a plurality of antenna ports corresponding to each CSI-RS resource are divided into two groups, and antenna port indexes of the plurality of antenna ports in each group are consecutive positive integers.

In an embodiment, an absolute value of a difference between the smallest antenna port indexes of the two groups of antenna ports corresponding to each CSI-RS resource is equal to one half of the total number of antenna ports corresponding to the plurality of CSI-RS resources.

In an embodiment, the processor 1600 is configured to read the computer program in the memory 1620 and specifically perform the following operations:
for each CSI-RS resource, determining an antenna port p corresponding to the CSI-RS resource according to a fourth formula, and the fourth formula is:
   $p = δ + s + \left(j+\left(\left⌊\frac{j}{2}\right⌋+k\right)∗\frac{\frac{N}{L}}{2}\right) ∗ L$
where *δ* is a preset constant, *k* is the resource index of the CSI-RS resource, *k =* 0,1,..., *K* - 1, *K* is the resource number of the plurality of CSI-RS resources, *s =* 0,1,..., *L - 1,* L is a quantity of REs included in a CDM group corresponding to the CSI-RS resource, $j = 0 , 1 , … , \frac{N}{L} - 1$ , *N* is the number of antenna ports corresponding to the CSI-RS resource, and *s, j, L* and *N* are obtained based on the resource configuration information.

In an embodiment, the processor 1600 is configured to read the computer program in the memory 1620 and specifically perform the following operations:
for each CSI-RS resource, determining an antenna port p corresponding to the CSI-RS resource according to a fifth formula, and the fifth formula is:
   $p = \left\{\begin{matrix}δ + s + j ∗ L + \frac{N}{2} ∗ k , j = 0 , … , \frac{N}{2 L} - 1 \\ δ + s + j ∗ L + \frac{N}{2} ∗ \left(k+K-1\right) , j = \frac{N}{2 L} , … , \frac{N}{L} - 1\end{matrix}\right.$
where *δ* is a preset constant, *k* is the resource index of the CSI-RS resource, *k =* 0,1,..., *K* - 1, *K* is the resource number of the plurality of CSI-RS resources, *s =* 0,1,..., *L -* 1, *L* is a quantity of REs included in a CDM group corresponding to the CSI-RS resource, $j = 0 , 1 , … , \frac{N}{L} - 1$ , *N* is the number of antenna ports corresponding to the CSI-RS resource, and *s, j, L* and *N* are obtained based on the resource configuration information.

In an embodiment, the number of ports is configured through a preset field in configuration information of the CSI report, or the number of ports is configured through a preset field in resource configuration information of the CSI-RS resource associated with the CSI report and used for a channel measurement.

In an embodiment, the processor 1600 is configured to read the computer program in the memory 1620 and further perform the following operations:
determining the respective resource indexes of the plurality of CSI-RS resources according to respective resource IDs of the plurality of CSI-RS resources.

In an embodiment, the processor 1600 is configured to read the computer program in the memory 1620 and specifically perform the following operations:
sorting the plurality of CSI-RS resources in an ascending order or a descending order of the respective resource IDs of the plurality of CSI-RS resources to obtain a sorted sequence;
determining respective position indexes of the plurality of CSI-RS resources in the sorted sequence as the respective resource indexes of the plurality of CSI-RS resources.

In an embodiment, the processor 1600 is configured to read the computer program in the memory 1620 and further perform the following operations:
determining the respective resource indexes of the plurality of CSI-RS resources according to both frequency-domain positions and time-domain positions respectively occupied by the plurality of CSI-RS resources.

In an embodiment, the processor 1600 is configured to read the computer program in the memory 1620 and specifically perform the following operations:
first sorting the plurality of CSI-RS resources in the frequency domain in an ascending order of CRB indexes and subcarrier indexes respectively corresponding to the CSI-RS resources, and then continuing to sort the plurality of CSI-RS resources in the time domain in an ascending order of slot indexes respectively corresponding to the CSI-RS resources, to obtain a first sorting result, and determining the respective resource indexes of the plurality of CSI-RS resources according to the first sorting result; or,
first sorting the plurality of CSI-RS resources in the time domain in an ascending order of slot indexes respectively corresponding to the CSI-RS resources, and then continuing to sort the plurality of CSI-RS resources in the frequency domain in an ascending order of CRB indexes and subcarrier indexes respectively corresponding to the CSI-RS resources, to obtain a second sorting result, and determining the respective resource indexes of the plurality of CSI-RS resources according to the second sorting result.

In an embodiment, the processor 1600 is configured to read the computer program in the memory 1620 and further perform the following operations:
controlling the transceiver 1610 to receive the CSI report sent by the UE, where the CSI report is generated by the UE based on successfully received CSI-RSs.

FIG. 17 is a schematic structural diagram of a user equipment (UE) provided by an embodiment of the present disclosure. The UE may include a processor 1700, a transceiver 1710, and a memory 1720. The transceiver 1710 is configured to receive and send data under the control of the processor 1700, and the memory 1720 is configured to store a computer program.

In FIG. 17, a bus architecture may include any number of interconnected buses and bridges, specifically various circuits of one or more processors represented by the processor 1700 and a memory represented by the memory 1720 are linked together. The bus architecture can also link together various other circuits such as peripheral devices, voltage regulators, and power management circuits, which are well known in the art, and therefore, will not be further described herein. A bus interface provides an interface.

The transceiver 1710 may be a plurality of elements, that is, includes a transmitter and a receiver, providing a unit for communicating with various other apparatuses over a transmission medium, and these transmission media include wireless channels, wired channels, optical cables, and the like. The processor 1700 is responsible for managing the bus architecture and general processing, and the memory 1720 can store data used by the processor 1700 when performing operations.

The processor 1700 may be a central processing unit (CPU), an application specific integrated circuit (ASIC), a field-programmable gate array (FPGA), or a complex programmable logic device (CPLD), and the processor 1700 may also adopt a multi-core architecture.

The processor 1700 is configured to execute the following steps according to obtained executable instructions by calling the program stored in the memory 1720:
controlling the transceiver 1710 to receive CSI-RSs sent by a network device, where the CSI-RSs are sent by the network device through antenna ports respectively corresponding to a plurality of CSI-RS resources, and the plurality of CSI-RS resources each correspond to different antenna ports;
determining the antenna ports according to the CSI-RSs, and generating a CSI report according to the antenna ports and the CSI-RSs.

In an embodiment, the processor 1700 is configured to read the computer program in the memory 1720 and further perform the following operations:
controlling the transceiver 1710 to receive, from the network device, a number of ports of CSI-RS resources associated with the CSI report and used for a channel measurement, where the number of ports is equal to the total number of antenna ports corresponding to the plurality of CSI-RS resources;
the processor 1700 is configured to read the computer program in the memory 1720 and specifically perform the following operations:
   determining the respective antenna ports according to the number of ports and the CSI-RSs.

In an embodiment, the processor 1700 is configured to read the computer program in the memory 1720 and specifically perform the following operations:
determining the antenna ports according to resource configuration information of the plurality of CSI-RS resources corresponding to the CSI-RSs and/or respective resource indexes of the plurality of CSI-RS resources.

In an embodiment, respective antenna port indexes of the antenna ports are consecutive positive integers.

In an embodiment, the processor 1700 is configured to read the computer program in the memory 1720 and specifically perform the following operations:
for each of the plurality of CSI-RS resources, obtaining, from the resource configuration information, antenna port offsets respectively corresponding to the plurality of CSI-RS resources;
determining the antenna ports according to the resource configuration information of the plurality of CSI-RS resources and the antenna port offsets respectively corresponding to the plurality of CSI-RS resources.

In an embodiment, the processor 1700 is configured to read the computer program in the memory 1720 and specifically perform the following operations:
for each CSI-RS resource, determining an antenna port p corresponding to the CSI-RS resource according to a first formula, and the first formula is:
   $p = δ + s + j * L + Δ p$
where *δ* is a preset constant, s *= 0,1,...,L - 1,* L is a quantity of REs included in a CDM group corresponding to the CSI-RS resource, $j = 0 , 1 , … , \frac{N}{L} - 1$, N is the number of antenna ports corresponding to the CSI-RS resource, Δ*p* is an antenna port offset corresponding to the CSI-RS resource, and *s* , *j* , *L and* Δ*p* are obtained based on the resource configuration information.

In an embodiment, the antenna port offsets respectively corresponding to the plurality of CSI-RS resources are different, and a difference between the antenna port offsets respectively corresponding to two CSI-RS resources is related to the number of antenna ports corresponding to the two CSI-RS resources; or,
the antenna port offsets respectively corresponding to the plurality of CSI-RS resources are different, and the antenna port offsets respectively corresponding to the plurality of CSI-RS resources are related to the respective resource indexes of the plurality of CSI-RS resources.

In an embodiment, the processor 1700 is configured to read the computer program in the memory 1720 and specifically perform the following operations:
for each CSI-RS resource, determining an antenna port p corresponding to the CSI-RS resource according to a second formula, and the second formula is:
   $p = δ + s + j * L + k * N$
where *δ* is a preset constant, *k* is the resource index of the CSI-RS resource, *k = 0,1,..., K - 1, K* is the resource number of the plurality of CSI-RS resources, s *= 0,1,..., L - 1,* L is a quantity of REs included in a CDM group corresponding to the CSI-RS resource, $j = 0 , 1 , … , \frac{N}{L} - 1$ , *N* is the number of antenna ports corresponding to the CSI-RS resource, and *s, j, L and N* are obtained based on the resource configuration information.

In an embodiment, the processor 1700 is configured to read the computer program in the memory 1720 and specifically perform the following operations:
for each CSI-RS resource, determining an antenna port p corresponding to the CSI-RS resource according to a third formula, and the third formula is:
   $p = δ + {s}_{k} + {j}_{k} * {L}_{k} + {\sum }_{i = 0}^{k - 1} {N}_{i}$
where *δ* is a preset constant, *k* is the resource index of the CSI-RS resource, *k =* 0,1,..., *K* - 1, *K* is the resource number of the plurality of CSI-RS resources, *sₖ* = 0,1,..., *Lₖ -* 1, *Lₖ* is a quantity of REs included in a CDM group corresponding to the k-th CSI-RS resource among the plurality of CSI-RS resources, ${j}_{k} = 0 , 1 , … , \frac{{N}_{k}}{{L}_{k}} - 1$, *Nᵢ* is the number of antenna ports corresponding to the i-th CSI-RS resource among the plurality of CSI-RS resources, and *sₖ, jₖ, Lₖ* and *Nᵢ* are obtained based on the resource configuration information.

In an embodiment, a plurality of antenna ports corresponding to each CSI-RS resource are divided into two groups, and antenna port indexes of the plurality of antenna ports in each group are consecutive positive integers.

In an embodiment, an absolute value of a difference between the smallest antenna port indexes of the two groups of antenna ports corresponding to each CSI-RS resource is equal to one half of the total number of antenna ports corresponding to the plurality of CSI-RS resources.

In an embodiment, the processor 1700 is configured to read the computer program in the memory 1720 and specifically perform the following operations:
for each CSI-RS resource, determining an antenna port p corresponding to the CSI-RS resource according to a fourth formula, and the fourth formula is:
   $p = δ + s + \left(j+\left(\left⌊\frac{j}{2}\right⌋+k\right)*\frac{\frac{N}{L}}{2}\right) * L$
where *δ* is a preset constant, *k* is the resource index of the CSI-RS resource, *k =* 0,1,..., *K* - 1, *K* is the resource number of the plurality of CSI-RS resources, *s =* 0,1,*..., L -* 1, *L* is a quantity of REs included in a CDM group corresponding to the CSI-RS resource, $j = 0 , 1 , … , \frac{N}{L} - 1$ , *N* is the number of antenna ports corresponding to the CSI-RS resource, and *s, j, L* and *N* are obtained based on the resource configuration information.

In an embodiment, the processor 1700 is configured to read the computer program in the memory 1720 and specifically perform the following operations:
for each CSI-RS resource, determining an antenna port p corresponding to the CSI-RS resource according to a fifth formula, and the fifth formula is:
   $p = \left\{\begin{matrix}δ + s + j ∗ L + \frac{N}{2} ∗ k , j = 0 , … , \frac{N}{2 L} - 1 \\ δ + s + j ∗ L + \frac{N}{2} ∗ \left(k+K-1\right) , j = \frac{N}{2 L} , … , \frac{N}{L} - 1\end{matrix}\right.$
where *δ* is a preset constant, *k* is the resource index of the CSI-RS resource, *k = 0,1,..., K - 1, K* is the resource number of the plurality of CSI-RS resources, s *= 0,1,..., L - 1,* L is a quantity of REs included in a CDM group corresponding to the CSI-RS resource, $j = 0 , 1 , … , \frac{N}{L} - 1$ , *N* is the number of antenna ports corresponding to the CSI-RS resource, and *s, j, L and N* are obtained based on the resource configuration information.

In an embodiment, the number of ports is configured through a preset field in configuration information of the CSI report, or the number of ports is configured through a preset field in resource configuration information of the CSI-RS resource associated with the CSI report and used for a channel measurement.

In an embodiment, the processor 1700 is configured to read the computer program in the memory 1720 and further perform the following operations:
determining the respective resource indexes of the plurality of CSI-RS resources according to respective resource IDs of the plurality of CSI-RS resources.

In an embodiment, the processor 1700 is configured to read the computer program in the memory 1720 and specifically perform the following operations:
sorting the plurality of CSI-RS resources in an ascending order or a descending order of the respective resource IDs of the plurality of CSI-RS resources to obtain a sorted sequence;
determining respective position indexes of the plurality of CSI-RS resources in the sorted sequence as the respective resource indexes of the plurality of CSI-RS resources.

In an embodiment, the processor 1700 is configured to read the computer program in the memory 1720 and further perform the following operations:
determining the respective resource indexes of the plurality of CSI-RS resources according to both frequency-domain positions and time-domain positions respectively occupied by the plurality of CSI-RS resources.

In an embodiment, the processor 1700 is configured to read the computer program in the memory 1720 and specifically perform the following operations:
first sorting the plurality of CSI-RS resources in the frequency domain in an ascending order of CRB indexes and subcarrier indexes respectively corresponding to the CSI-RS resources, and then continuing to sort the plurality of CSI-RS resources in the time domain in an ascending order of slot indexes respectively corresponding to the CSI-RS resources, to obtain a first sorting result, and determining the respective resource indexes of the plurality of CSI-RS resources according to the first sorting result; or,
first sorting the plurality of CSI-RS resources in the time domain in an ascending order of slot indexes respectively corresponding to the CSI-RS resources, and then continuing to sort the plurality of CSI-RS resources in the frequency domain in an ascending order of CRB indexes and subcarrier indexes respectively corresponding to the CSI-RS resources, to obtain a second sorting result, and determining the respective resource indexes of the plurality of CSI-RS resources according to the second sorting result.

In an embodiment, an information transmission system is provided, including the network device shown in FIG. 16 and the user equipment UE shown in FIG. 17;
the network device is configured to perform steps of the method described in any an embodiment of the information transmission method used in the network device, which will not be repeated here.
the UE is configured to perform steps of the method described in any an embodiment of the information transmission method used in the UE, which will not be repeated here.

In an embodiment, a computer-readable storage medium is provided. The computer-readable storage medium may be any available medium or data storage device that can be accessed by a processor, including but not limited to magnetic memories (e.g., floppy disk, hard disk, magnetic tape, magneto-optical disk (MO), etc.), optical memories (e.g., CD, DVD, BD, HVD, etc.), and semiconductor memories (e.g., ROM, EPROM, EEPROM, non-volatile memory (NAND FLASH), solid state disk (SSD)), etc.

In an embodiment, a computer-readable storage medium is provided, having a computer program stored thereon, and the computer program, when executed by a processor, implements the following steps:
determining antenna ports respectively corresponding to a plurality of CSI-RS resources, where the plurality of CSI-RS resources each correspond to different antenna ports;
sending CSI-RSs to a UE through the antenna ports respectively corresponding to the plurality of CSI-RS resources, where the CSI-RSs are configured for the UE to generate a CSI report based on the CSI-RSs.

In an embodiment, the computer program, when executed by the processor, further implements the following steps:
sending, to the UE, a number of ports of CSI-RS resources associated with the CSI report and used for a channel measurement, where the number of ports is equal to the total number of antenna ports corresponding to the plurality of CSI-RS resources.

In an embodiment, the computer program, when executed by the processor, specifically implements the following steps:
determining the antenna ports according to resource configuration information of the plurality of CSI-RS resources and/or respective resource indexes of the plurality of CSI-RS resources.

In an embodiment, respective antenna port indexes of the antenna ports are consecutive positive integers.

In an embodiment, the computer program, when executed by the processor, specifically implements the following steps:
for each of the plurality of CSI-RS resources, obtaining, from the resource configuration information, antenna port offsets respectively corresponding to the plurality of CSI-RS resources;
determining the antenna ports according to the resource configuration information of the plurality of CSI-RS resources and the antenna port offsets respectively corresponding to the plurality of CSI-RS resources.

In an embodiment, the computer program, when executed by the processor, specifically implements the following steps:
for each CSI-RS resource, determining an antenna port p corresponding to the CSI-RS resource according to a first formula, and the first formula is:
   $p = δ + s + j * L + Δ p$
where *δ* is a preset constant, *s =* 0,1,...,*L -* 1, L is a quantity of REs included in a CDM group corresponding to the CSI-RS resource, $j = 0 , 1 , … , \frac{N}{L} - 1$, N is the number of antenna ports corresponding to the CSI-RS resource, Δ*p* is an antenna port offset corresponding to the CSI-RS resource, and *s* , *j* , *L* and Δ*p* are obtained based on the resource configuration information.

In an embodiment, the antenna port offsets respectively corresponding to the plurality of CSI-RS resources are different, and a difference between the antenna port offsets respectively corresponding to two CSI-RS resources is related to the number of antenna ports corresponding to the two CSI-RS resources; or,
the antenna port offsets respectively corresponding to the plurality of CSI-RS resources are different, and the antenna port offsets respectively corresponding to the plurality of CSI-RS resources are related to the respective resource indexes of the plurality of CSI-RS resources.

In an embodiment, the computer program, when executed by the processor, specifically implements the following steps:
for each CSI-RS resource, determining an antenna port p corresponding to the CSI-RS resource according to a second formula, and the second formula is:
   $p = δ + s + j * L + k * N$
where *δ* is a preset constant, *k* is the resource index of the CSI-RS resource, *k =* 0,1,..., *K* - 1, *K* is the resource number of the plurality of CSI-RS resources, *s =* 0,1,..., *L - 1, L* is a quantity of REs included in a CDM group corresponding to the CSI-RS resource, $j = 0 , 1 , … , \frac{N}{L} - 1$ , *N* is the number of antenna ports corresponding to the CSI-RS resource, and *s, j, L* and *N* are obtained based on the resource configuration information.

In an embodiment, the computer program, when executed by the processor, specifically implements the following steps:
for each CSI-RS resource, determining an antenna port p corresponding to the CSI-RS resource according to a third formula, and the third formula is:
   $p = δ + {s}_{k} + {j}_{k} * {L}_{k} + {\sum }_{i = 0}^{k - 1} {N}_{i}$
where *δ* is a preset constant, *k* is the resource index of the CSI-RS resource, *k =* 0,1,..., *K* - 1, *K* is the resource number of the plurality of CSI-RS resources, *sₖ* = 0,1,..., *Lₖ -* 1, *Lₖ* is a quantity of REs included in a CDM group corresponding to the k-th CSI-RS resource among the plurality of CSI-RS resources, ${j}_{k} = 0 , 1 , … , \frac{{N}_{k}}{{L}_{k}} - 1$, *Nᵢ* is the number of antenna ports corresponding to the i-th CSI-RS resource among the plurality of CSI-RS resources, and *sₖ, jₖ, Lₖ* and *Nᵢ* are obtained based on the resource configuration information.

In an embodiment, a plurality of antenna ports corresponding to each CSI-RS resource are divided into two groups, and antenna port indexes of the plurality of antenna ports in each group are consecutive positive integers.

In an embodiment, an absolute value of a difference between the smallest antenna port indexes of the two groups of antenna ports corresponding to each CSI-RS resource is equal to one half of the total number of antenna ports corresponding to the plurality of CSI-RS resources.

In an embodiment, the computer program, when executed by the processor, specifically implements the following steps:
for each CSI-RS resource, determining an antenna port p corresponding to the CSI-RS resource according to a fourth formula, and the fourth formula is:
   $p = δ + s + \left(j+\left(\left⌊\frac{j}{2}\right⌋+k\right)*\frac{\frac{N}{L}}{2}\right) * L$
where *δ* is a preset constant, *k* is the resource index of the CSI-RS resource, *k =* 0,1*,..., K -* 1*, K* is the resource number of the plurality of CSI-RS resources, *s =* 0,1*,..., L - 1, L is* a quantity of REs included in a CDM group corresponding to the CSI-RS resource, *j* = $0 , 1 , … , \frac{N}{L} - 1$, *N* is the number of antenna ports corresponding to the CSI-RS resource, and *s, j, L and N* are obtained based on the resource configuration information.

In an embodiment, the computer program, when executed by the processor, specifically implements the following steps:
for each CSI-RS resource, determining an antenna port p corresponding to the CSI-RS resource according to a fifth formula, and the fifth formula is:
   $p = \left\{\begin{matrix}δ + s + j ∗ L + \frac{N}{2} ∗ k , j = 0 , … , \frac{N}{2 L} - 1 \\ δ + s + j ∗ L + \frac{N}{2} ∗ \left(k+K-1\right) , j = \frac{N}{2 L} , … , \frac{N}{L} - 1\end{matrix}\right.$
where *δ* is a preset constant, *k* is the resource index of the CSI-RS resource, *k =* 0,1,*..., K -* 1*, K* is the resource number of the plurality of CSI-RS resources, *s =* 0,1*,..., L - 1, L is* a quantity of REs included in a CDM group corresponding to the CSI-RS resource, $j = 0 , 1 , … , \frac{N}{L} - 1$ , *N* is the number of antenna ports corresponding to the CSI-RS resource, and *s, j, L and N* are obtained based on the resource configuration information.

In an embodiment, the number of ports is configured through a preset field in configuration information of the CSI report, or the number of ports is configured through a preset field in resource configuration information of the CSI-RS resource associated with the CSI report and used for a channel measurement.

In an embodiment, the computer program, when executed by the processor, further implements the following steps:
determining the respective resource indexes of the plurality of CSI-RS resources according to respective resource IDs of the plurality of CSI-RS resources.

In an embodiment, the computer program, when executed by the processor, specifically implements the following steps:
sorting the plurality of CSI-RS resources in an ascending order or a descending order of the respective resource IDs of the plurality of CSI-RS resources to obtain a sorted sequence;
determining respective position indexes of the plurality of CSI-RS resources in the sorted sequence as the respective resource indexes of the plurality of CSI-RS resources.

In an embodiment, the computer program, when executed by the processor, further implements the following steps:
determining the respective resource indexes of the plurality of CSI-RS resources according to both frequency-domain positions and time-domain positions respectively occupied by the plurality of CSI-RS resources.

In an embodiment, the computer program, when executed by the processor, specifically implements the following steps:
first sorting the plurality of CSI-RS resources in the frequency domain in an ascending order of CRB indexes and subcarrier indexes respectively corresponding to the CSI-RS resources, and then continuing to sort the plurality of CSI-RS resources in the time domain in an ascending order of slot indexes respectively corresponding to the CSI-RS resources, to obtain a first sorting result, and determining the respective resource indexes of the plurality of CSI-RS resources according to the first sorting result; or,
first sorting the plurality of CSI-RS resources in the time domain in an ascending order of slot indexes respectively corresponding to the CSI-RS resources, and then continuing to sort the plurality of CSI-RS resources in the frequency domain in an ascending order of CRB indexes and subcarrier indexes respectively corresponding to the CSI-RS resources, to obtain a second sorting result, and determining the respective resource indexes of the plurality of CSI-RS resources according to the second sorting result.

In an embodiment, the computer program, when executed by the processor, further implements the following steps:
receiving the CSI report sent by the UE, where the CSI report is generated by the UE based on successfully received CSI-RSs.

In an embodiment, a computer-readable storage medium is provided, having a computer program stored thereon, and the computer program, when executed by a processor, implements the following steps:
receiving CSI-RSs sent by a network device, where the CSI-RSs are sent by the network device through antenna ports respectively corresponding to a plurality of CSI-RS resources, and the plurality of CSI-RS resources each correspond to different antenna ports;
determining the antenna ports according to the CSI-RSs, and generating a CSI report according to the antenna ports and the CSI-RSs.

In an embodiment, the computer program, when executed by the processor, further implements the following steps:
receiving, from the network device, a number of ports of CSI-RS resources associated with the CSI report and used for a channel measurement, where the number of ports is equal to the total number of antenna ports corresponding to the plurality of CSI-RS resources;
the determining the antenna ports according to the CSI-RSs includes:
   determining the respective antenna ports according to the number of ports and the CSI-RSs.

In an embodiment, the computer program, when executed by the processor, specifically implements the following steps:
determining the antenna ports according to resource configuration information of the plurality of CSI-RS resources corresponding to the CSI-RSs and/or respective resource indexes of the plurality of CSI-RS resources.

In an embodiment, respective antenna port indexes of the antenna ports are consecutive positive integers.

In an embodiment, the computer program, when executed by the processor, specifically implements the following steps:
for each of the plurality of CSI-RS resources, obtaining, from the resource configuration information, antenna port offsets respectively corresponding to the plurality of CSI-RS resources;
determining the antenna ports according to the resource configuration information of the plurality of CSI-RS resources and the antenna port offsets respectively corresponding to the plurality of CSI-RS resources.

In an embodiment, the computer program, when executed by the processor, specifically implements the following steps:
for each CSI-RS resource, determining an antenna port p corresponding to the CSI-RS resource according to a first formula, and the first formula is:
   $p = δ + s + j * L + Δ p$
where *δ* is a preset constant, *s =* 0,1*,...,L -* 1*, L* is a quantity of REs included in a CDM group corresponding to the CSI-RS resource, $j = 0 , 1 , … , \frac{N}{L} - 1$, N is the number of antenna ports corresponding to the CSI-RS resource, Δ*p* is an antenna port offset corresponding to the CSI-RS resource, and *s, j, L* and Δ*p* are obtained based on the resource configuration information.

In an embodiment, the antenna port offsets respectively corresponding to the plurality of CSI-RS resources are different, and a difference between the antenna port offsets respectively corresponding to two CSI-RS resources is related to the number of antenna ports corresponding to the two CSI-RS resources; or,
the antenna port offsets respectively corresponding to the plurality of CSI-RS resources are different, and the antenna port offsets respectively corresponding to the plurality of CSI-RS resources are related to the respective resource indexes of the plurality of CSI-RS resources.

In an embodiment, the computer program, when executed by the processor, specifically implements the following steps:
for each CSI-RS resource, determining an antenna port p corresponding to the CSI-RS resource according to a second formula, and the second formula is:
   $p = δ + s + j * L + k * N$
where *δ* is a preset constant, *k* is the resource index of the CSI-RS resource, *k =* 0,1*,..., K -* 1*, K* is the resource number of the plurality of CSI-RS resources, *s* = 0,1*,..., L - 1, L is* a quantity of REs included in a CDM group corresponding to the CSI-RS resource, $j = 0 , 1 , … , \frac{N}{L} - 1$ , *N* is the number of antenna ports corresponding to the CSI-RS resource, and *s, j, L and N* are obtained based on the resource configuration information.

In an embodiment, the computer program, when executed by the processor, specifically implements the following steps:
for each CSI-RS resource, determining an antenna port p corresponding to the CSI-RS resource according to a third formula, and the third formula is:
   $p = δ + {s}_{k} + {j}_{k} * {L}_{k} + {\sum }_{i = 0}^{k - 1} {N}_{i}$
where *δ* is a preset constant, *k* is the resource index of the CSI-RS resource, *k =* 0,1*,..., K* - 1, *K* is the resource number of the plurality of CSI-RS resources, *sₖ* = 0,1,..., *Lₖ -* 1*, Lₖ* is a quantity of REs included in a CDM group corresponding to the k-th CSI-RS resource among the plurality of CSI-RS resources, ${j}_{k} = 0 , 1 , … , \frac{{N}_{k}}{{L}_{k}} - 1$, *Nᵢ* is the number of antenna ports corresponding to the i-th CSI-RS resource among the plurality of CSI-RS resources, and *sₖ, jₖ, Lₖ* and *Nᵢ* are obtained based on the resource configuration information.

In an embodiment, a plurality of antenna ports corresponding to each CSI-RS resource are divided into two groups, and antenna port indexes of the plurality of antenna ports in each group are consecutive positive integers.

In an embodiment, an absolute value of a difference between the smallest antenna port indexes of the two groups of antenna ports corresponding to each CSI-RS resource is equal to one half of the total number of antenna ports corresponding to the plurality of CSI-RS resources.

In an embodiment, the computer program, when executed by the processor, specifically implements the following steps:
for each CSI-RS resource, determining an antenna port p corresponding to the CSI-RS resource according to a fourth formula, and the fourth formula is:
   $p = δ + s + \left(j+\left(\left⌊\frac{j}{2}\right⌋+k\right)*\frac{\frac{N}{L}}{2}\right) * L$
where *δ* is a preset constant, *k* is the resource index of the CSI-RS resource, *k =* 0,1,*..., K -* 1, *K* is the resource number of the plurality of CSI-RS resources, *s =* 0,1*,..., L - 1, L is* a quantity of REs included in a CDM group corresponding to the CSI-RS resource, $j = 0 , 1 , … , \frac{N}{L} - 1$ , *N* is the number of antenna ports corresponding to the CSI-RS resource, and *s, j, L and N* are obtained based on the resource configuration information.

In an embodiment, the computer program, when executed by the processor, specifically implements the following steps:
for each CSI-RS resource, determining an antenna port p corresponding to the CSI-RS resource according to a fifth formula, and the fifth formula is:
   $p = \left\{\begin{matrix}δ + s + j ∗ L + \frac{N}{2} ∗ k , j = 0 , … , \frac{N}{2 L} - 1 \\ δ + s + j ∗ L + \frac{N}{2} ∗ \left(k+K-1\right) , j = \frac{N}{2 L} , … , \frac{N}{L} - 1\end{matrix}\right.$
where *δ* is a preset constant, *k* is the resource index of the CSI-RS resource, *k =* 0,1,.*.., K* - 1, *K* is the resource number of the plurality of CSI-RS resources, *s =* 0,1*,..., L - 1, L is* a quantity of REs included in a CDM group corresponding to the CSI-RS resource, $j = 0 , 1 , … , \frac{N}{L} - 1$ , *N* is the number of antenna ports corresponding to the CSI-RS resource, and *s, j, L and N* are obtained based on the resource configuration information.

In an embodiment, the number of ports is configured through a preset field in configuration information of the CSI report, or the number of ports is configured through a preset field in resource configuration information of the CSI-RS resource associated with the CSI report and used for a channel measurement.

In an embodiment, the computer program, when executed by the processor, further implements the following steps:
determining the respective resource indexes of the plurality of CSI-RS resources according to respective resource IDs of the plurality of CSI-RS resources.

In an embodiment, the computer program, when executed by the processor, specifically implements the following steps:
sorting the plurality of CSI-RS resources in an ascending order or a descending order of the respective resource IDs of the plurality of CSI-RS resources to obtain a sorted sequence;
determining respective position indexes of the plurality of CSI-RS resources in the sorted sequence as the respective resource indexes of the plurality of CSI-RS resources.

In an embodiment, the computer program, when executed by the processor, further implements the following steps:
determining the respective resource indexes of the plurality of CSI-RS resources according to both frequency-domain positions and time-domain positions respectively occupied by the plurality of CSI-RS resources.

In an embodiment, the computer program, when executed by the processor, specifically implements the following steps:
first sorting the plurality of CSI-RS resources in the frequency domain in an ascending order of CRB indexes and subcarrier indexes respectively corresponding to the CSI-RS resources, and then continuing to sort the plurality of CSI-RS resources in the time domain in an ascending order of slot indexes respectively corresponding to the CSI-RS resources, to obtain a first sorting result, and determining the respective resource indexes of the plurality of CSI-RS resources according to the first sorting result; or,
first sorting the plurality of CSI-RS resources in the time domain in an ascending order of slot indexes respectively corresponding to the CSI-RS resources, and then continuing to sort the plurality of CSI-RS resources in the frequency domain in an ascending order of CRB indexes and subcarrier indexes respectively corresponding to the CSI-RS resources, to obtain a second sorting result, and determining the respective resource indexes of the plurality of CSI-RS resources according to the second sorting result.

In an embodiment, a computer program product is provided, including a computer program, and the computer program, when executed by a processor, implements the following steps:
determining antenna ports respectively corresponding to a plurality of CSI-RS resources, where the plurality of CSI-RS resources each correspond to different antenna ports;
sending CSI-RSs to a UE through the antenna ports respectively corresponding to the plurality of CSI-RS resources, where the CSI-RSs are configured for the UE to generate a CSI report based on the CSI-RSs.

In an embodiment, the computer program, when executed by the processor, further implements the following steps:
sending, to the UE, a number of ports of CSI-RS resources associated with the CSI report and used for a channel measurement, where the number of ports is equal to the total number of antenna ports corresponding to the plurality of CSI-RS resources.

In an embodiment, the computer program, when executed by the processor, specifically implements the following steps:
determining the antenna ports according to resource configuration information of the plurality of CSI-RS resources and/or respective resource indexes of the plurality of CSI-RS resources.

In an embodiment, respective antenna port indexes of the antenna ports are consecutive positive integers.

In an embodiment, the computer program, when executed by the processor, specifically implements the following steps:
for each of the plurality of CSI-RS resources, obtaining, from the resource configuration information, antenna port offsets respectively corresponding to the plurality of CSI-RS resources;
determining the antenna ports according to the resource configuration information of the plurality of CSI-RS resources and the antenna port offsets respectively corresponding to the plurality of CSI-RS resources.

In an embodiment, the computer program, when executed by the processor, specifically implements the following steps:
for each CSI-RS resource, determining an antenna port p corresponding to the CSI-RS resource according to a first formula, and the first formula is:
   $p = δ + s + j * L + Δ p$
where *δ* is a preset constant, *s* = 0,1,.*..,L* - 1, *L* is a quantity of REs included in a CDM group corresponding to the CSI-RS resource, $j = 0 , 1 , … , \frac{N}{L} - 1$, N is the number of antenna ports corresponding to the CSI-RS resource, Δ*p* is an antenna port offset corresponding to the CSI-RS resource, and *s, j, L* and Δ*p* are obtained based on the resource configuration information.

In an embodiment, the antenna port offsets respectively corresponding to the plurality of CSI-RS resources are different, and a difference between the antenna port offsets respectively corresponding to two CSI-RS resources is related to the number of antenna ports corresponding to the two CSI-RS resources; or,
the antenna port offsets respectively corresponding to the plurality of CSI-RS resources are different, and the antenna port offsets respectively corresponding to the plurality of CSI-RS resources are related to the respective resource indexes of the plurality of CSI-RS resources.

In an embodiment, the computer program, when executed by the processor, specifically implements the following steps:
for each CSI-RS resource, determining an antenna port p corresponding to the CSI-RS resource according to a second formula, and the second formula is:
   $p = δ + s + j * L + k * N$
where *δ* is a preset constant, *k* is the resource index of the CSI-RS resource, *k =* 0,1*,..., K -* 1*, K* is the resource number of the plurality of CSI-RS resources, *s =* 0,1,*..., L -* 1, *L* is a quantity of REs included in a CDM group corresponding to the CSI-RS resource, $j = 0 , 1 , … , \frac{N}{L} - 1$ , *N* is the number of antenna ports corresponding to the CSI-RS resource, and *s, j, L and N* are obtained based on the resource configuration information.

In an embodiment, the computer program, when executed by the processor, specifically implements the following steps:
for each CSI-RS resource, determining an antenna port p corresponding to the CSI-RS resource according to a third formula, and the third formula is:
   $p = δ + {s}_{k} + {j}_{k} * {L}_{k} + {\sum }_{i = 0}^{k - 1} {N}_{i}$
where *δ* is a preset constant, *k* is the resource index of the CSI-RS resource, *k =* 0,1,*..., K* - 1, *K* is the resource number of the plurality of CSI-RS resources, *sₖ* = 0,1,..., *Lₖ - 1, Lₖ* is a quantity of REs included in a CDM group corresponding to the k-th CSI-RS resource among the plurality of CSI-RS resources, ${j}_{k} = 0 , 1 , … , \frac{{N}_{k}}{{L}_{k}} - 1$, *Nᵢ* is the number of antenna ports corresponding to the i-th CSI-RS resource among the plurality of CSI-RS resources, and *sₖ, jₖ, Lₖ* and *Nᵢ* are obtained based on the resource configuration information.

In an embodiment, a plurality of antenna ports corresponding to each CSI-RS resource are divided into two groups, and antenna port indexes of the plurality of antenna ports in each group are consecutive positive integers.

In an embodiment, an absolute value of a difference between the smallest antenna port indexes of the two groups of antenna ports corresponding to each CSI-RS resource is equal to one half of the total number of antenna ports corresponding to the plurality of CSI-RS resources.

In an embodiment, the computer program, when executed by the processor, specifically implements the following steps:
for each CSI-RS resource, determining an antenna port p corresponding to the CSI-RS resource according to a fourth formula, and the fourth formula is:
   $p = δ + s + \left(j+\left(\left⌊\frac{j}{2}\right⌋+k\right)*\frac{\frac{N}{L}}{2}\right) * L$
where *δ* is a preset constant, *k* is the resource index of the CSI-RS resource, *k =* 0,1*,..., K -* 1, *K* is the resource number of the plurality of CSI-RS resources, *s =* 0,1*,..., L -* 1, *L* is a quantity of REs included in a CDM group corresponding to the CSI-RS resource, $j = 0 , 1 , … , \frac{N}{L} - 1$ , *N* is the number of antenna ports corresponding to the CSI-RS resource, and *s, j, L and N* are obtained based on the resource configuration information.

In an embodiment, the computer program, when executed by the processor, specifically implements the following steps:
for each CSI-RS resource, determining an antenna port p corresponding to the CSI-RS resource according to a fifth formula, and the fifth formula is:
   $p = \left\{\begin{matrix}δ + s + j ∗ L + \frac{N}{2} ∗ k , j = 0 , … , \frac{N}{2 L} - 1 \\ δ + s + j ∗ L + \frac{N}{2} ∗ \left(k+K-1\right) , j = \frac{N}{2 L} , … , \frac{N}{L} - 1\end{matrix}\right.$
where *δ* is a preset constant, *k* is the resource index of the CSI-RS resource, *k =* 0,1,*..., K -* 1*, K* is the resource number of the plurality of CSI-RS resources, *s =* 0,1*,..., L -* 1*, L* is a quantity of REs included in a CDM group corresponding to the CSI-RS resource, $j = 0 , 1 , … , \frac{N}{L} - 1$ , *N* is the number of antenna ports corresponding to the CSI-RS resource, and *s, j, L and N* are obtained based on the resource configuration information.

In an embodiment, the number of ports is configured through a preset field in configuration information of the CSI report, or the number of ports is configured through a preset field in resource configuration information of the CSI-RS resource associated with the CSI report and used for a channel measurement.

In an embodiment, the computer program, when executed by the processor, further implements the following steps:
determining the respective resource indexes of the plurality of CSI-RS resources according to respective resource IDs of the plurality of CSI-RS resources.

In an embodiment, the computer program, when executed by the processor, specifically implements the following steps:
sorting the plurality of CSI-RS resources in an ascending order or a descending order of the respective resource IDs of the plurality of CSI-RS resources to obtain a sorted sequence;
determining respective position indexes of the plurality of CSI-RS resources in the sorted sequence as the respective resource indexes of the plurality of CSI-RS resources.

In an embodiment, the computer program, when executed by the processor, further implements the following steps:
determining the respective resource indexes of the plurality of CSI-RS resources according to both frequency-domain positions and time-domain positions respectively occupied by the plurality of CSI-RS resources.

In an embodiment, the computer program, when executed by the processor, specifically implements the following steps:
first sorting the plurality of CSI-RS resources in the frequency domain in an ascending order of CRB indexes and subcarrier indexes respectively corresponding to the CSI-RS resources, and then continuing to sort the plurality of CSI-RS resources in the time domain in an ascending order of slot indexes respectively corresponding to the CSI-RS resources, to obtain a first sorting result, and determining the respective resource indexes of the plurality of CSI-RS resources according to the first sorting result; or,
first sorting the plurality of CSI-RS resources in the time domain in an ascending order of slot indexes respectively corresponding to the CSI-RS resources, and then continuing to sort the plurality of CSI-RS resources in the frequency domain in an ascending order of CRB indexes and subcarrier indexes respectively corresponding to the CSI-RS resources, to obtain a second sorting result, and determining the respective resource indexes of the plurality of CSI-RS resources according to the second sorting result.

In an embodiment, the computer program, when executed by the processor, further implements the following steps:
receiving the CSI report sent by the UE, where the CSI report is generated by the UE based on successfully received CSI-RSs.

In an embodiment, a computer program product is provided, including a computer program, and the computer program, when executed by a processor, implements the following steps:
receiving CSI-RSs sent by a network device, where the CSI-RSs are sent by the network device through antenna ports respectively corresponding to a plurality of CSI-RS resources, and the plurality of CSI-RS resources each correspond to different antenna ports;
determining the antenna ports according to the CSI-RSs, and generating a CSI report according to the antenna ports and the CSI-RSs.

In an embodiment, the computer program, when executed by the processor, further implements the following steps:
receiving, from the network device, a number of ports of CSI-RS resources associated with the CSI report and used for a channel measurement, where the number of ports is equal to the total number of antenna ports corresponding to the plurality of CSI-RS resources;
the determining the antenna ports according to the CSI-RSs includes:
   determining the respective antenna ports according to the number of ports and the CSI-RSs.

In an embodiment, the computer program, when executed by the processor, specifically implements the following steps:
determining the antenna ports according to resource configuration information of the plurality of CSI-RS resources corresponding to the CSI-RSs and/or respective resource indexes of the plurality of CSI-RS resources.

In an embodiment, respective antenna port indexes of the antenna ports are consecutive positive integers.

In an embodiment, the computer program, when executed by the processor, specifically implements the following steps:
for each of the plurality of CSI-RS resources, obtaining, from the resource configuration information, antenna port offsets respectively corresponding to the plurality of CSI-RS resources;
determining the antenna ports according to the resource configuration information of the plurality of CSI-RS resources and the antenna port offsets respectively corresponding to the plurality of CSI-RS resources.

In an embodiment, the computer program, when executed by the processor, specifically implements the following steps:
for each CSI-RS resource, determining an antenna port p corresponding to the CSI-RS resource according to a first formula, and the first formula is:
   $p = δ + s + j * L + Δ p$
where *δ* is a preset constant, *s =* 0,1,*...,L -* 1*, L* is a quantity of REs included in a CDM group corresponding to the CSI-RS resource, $j = 0 , 1 , … , \frac{N}{L} - 1$, N is the number of antenna ports corresponding to the CSI-RS resource, Δ*p* is an antenna port offset corresponding to the CSI-RS resource, and *s, j, L* and Δ*p* are obtained based on the resource configuration information.

In an embodiment, the antenna port offsets respectively corresponding to the plurality of CSI-RS resources are different, and a difference between the antenna port offsets respectively corresponding to two CSI-RS resources is related to the number of antenna ports corresponding to the two CSI-RS resources; or,
the antenna port offsets respectively corresponding to the plurality of CSI-RS resources are different, and the antenna port offsets respectively corresponding to the plurality of CSI-RS resources are related to the respective resource indexes of the plurality of CSI-RS resources.

In an embodiment, the computer program, when executed by the processor, specifically implements the following steps:
for each CSI-RS resource, determining an antenna port p corresponding to the CSI-RS resource according to a second formula, and the second formula is:
   $p = δ + s + j * L + k * N$
where *δ* is a preset constant, *k* is the resource index of the CSI-RS resource, *k =* 0,1*,..., K -* 1*, K* is the resource number of the plurality of CSI-RS resources, *s* = 0,1*,..., L -* 1*, L* is a quantity of REs included in a CDM group corresponding to the CSI-RS resource, $j = 0 , 1 , … , \frac{N}{L} - 1$ , *N* is the number of antenna ports corresponding to the CSI-RS resource, and *s, j, L and N* are obtained based on the resource configuration information.

In an embodiment, the computer program, when executed by the processor, specifically implements the following steps:
for each CSI-RS resource, determining an antenna port p corresponding to the CSI-RS resource according to a third formula, and the third formula is:
   $p = δ + {s}_{k} + {j}_{k} * {L}_{k} + {\sum }_{i = 0}^{k - 1} {N}_{i}$
where *δ* is a preset constant, *k* is the resource index of the CSI-RS resource, *k =* 0,1*,..., K* - 1, *K* is the resource number of the plurality of CSI-RS resources, *sₖ* = 0,1,..., *Lₖ -* 1*, Lₖ* is a quantity of REs included in a CDM group corresponding to the k-th CSI-RS resource among the plurality of CSI-RS resources, ${j}_{k} = 0 , 1 , … , \frac{{N}_{k}}{{L}_{k}} - 1$, *Nᵢ* is the number of antenna ports corresponding to the i-th CSI-RS resource among the plurality of CSI-RS resources, and *sₖ, jₖ, Lₖ* and *Nᵢ* are obtained based on the resource configuration information.

In an embodiment, a plurality of antenna ports corresponding to each CSI-RS resource are divided into two groups, and antenna port indexes of the plurality of antenna ports in each group are consecutive positive integers.

In an embodiment, an absolute value of a difference between the smallest antenna port indexes of the two groups of antenna ports corresponding to each CSI-RS resource is equal to one half of the total number of antenna ports corresponding to the plurality of CSI-RS resources.

In an embodiment, the computer program, when executed by the processor, specifically implements the following steps:
for each CSI-RS resource, determining an antenna port p corresponding to the CSI-RS resource according to a fourth formula, and the fourth formula is:
   $p = δ + s + \left(j+\left(\left⌊\frac{j}{2}\right⌋+k\right)*\frac{\frac{N}{L}}{2}\right) * L$
where *δ* is a preset constant, *k* is the resource index of the CSI-RS resource, *k =* 0,1*,..., K -* 1*, K* is the resource number of the plurality of CSI-RS resources, *s* = 0,1*,..., L -* 1, *L* is a quantity of REs included in a CDM group corresponding to the CSI-RS resource, $j = 0 , 1 , … , \frac{N}{L} - 1$ , *N* is the number of antenna ports corresponding to the CSI-RS resource, and *s, j, L and N* are obtained based on the resource configuration information.

In an embodiment, the computer program, when executed by the processor, specifically implements the following steps:
for each CSI-RS resource, determining an antenna port p corresponding to the CSI-RS resource according to a fifth formula, and the fifth formula is:
   $p = \left\{\begin{matrix}δ + s + j ∗ L + \frac{N}{2} ∗ k , j = 0 , … , \frac{N}{2 L} - 1 \\ δ + s + j ∗ L + \frac{N}{2} ∗ \left(k+K-1\right) , j = \frac{N}{2 L} , … , \frac{N}{L} - 1\end{matrix}\right.$
where *δ* is a preset constant, *k* is the resource index of the CSI-RS resource, *k =* 0,1*,..., K -* 1*, K* is the resource number of the plurality of CSI-RS resources, *s =* 0,1*,..., L -* 1*, L* is a quantity of REs included in a CDM group corresponding to the CSI-RS resource, $j = 0 , 1 , … , \frac{N}{L} - 1$ , *N* is the number of antenna ports corresponding to the CSI-RS resource, and *s, j, L and N* are obtained based on the resource configuration information.

In an embodiment, the number of ports is configured through a preset field in configuration information of the CSI report, or the number of ports is configured through a preset field in resource configuration information of the CSI-RS resource associated with the CSI report and used for a channel measurement.

In an embodiment, the computer program, when executed by the processor, further implements the following steps:
determining the respective resource indexes of the plurality of CSI-RS resources according to respective resource IDs of the plurality of CSI-RS resources.

In an embodiment, the computer program, when executed by the processor, specifically implements the following steps:
sorting the plurality of CSI-RS resources in an ascending order or a descending order of the respective resource IDs of the plurality of CSI-RS resources to obtain a sorted sequence;
determining respective position indexes of the plurality of CSI-RS resources in the sorted sequence as the respective resource indexes of the plurality of CSI-RS resources.

In an embodiment, the computer program, when executed by the processor, further implements the following steps:
determining the respective resource indexes of the plurality of CSI-RS resources according to both frequency-domain positions and time-domain positions respectively occupied by the plurality of CSI-RS resources.

In an embodiment, the computer program, when executed by the processor, specifically implements the following steps:
first sorting the plurality of CSI-RS resources in the frequency domain in an ascending order of CRB indexes and subcarrier indexes respectively corresponding to the CSI-RS resources, and then continuing to sort the plurality of CSI-RS resources in the time domain in an ascending order of slot indexes respectively corresponding to the CSI-RS resources, to obtain a first sorting result, and determining the respective resource indexes of the plurality of CSI-RS resources according to the first sorting result; or,
first sorting the plurality of CSI-RS resources in the time domain in an ascending order of slot indexes respectively corresponding to the CSI-RS resources, and then continuing to sort the plurality of CSI-RS resources in the frequency domain in an ascending order of CRB indexes and subcarrier indexes respectively corresponding to the CSI-RS resources, to obtain a second sorting result, and determining the respective resource indexes of the plurality of CSI-RS resources according to the second sorting result.

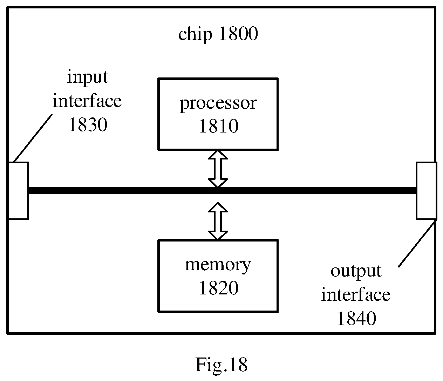

FIG. 18 is a schematic structural diagram of a chip of an embodiment of the present disclosure. The chip 1800 shown in FIG. 18 includes a processor 1810, and the processor 1810 can call and run a computer program from a memory to implement the method in the embodiments of the present disclosure.

In some embodiments, as shown in FIG. 18, the chip 1800 may further include a memory 1820. The processor 1810 can call and run a computer program from the memory 1820 to implement the method in the embodiments of the present disclosure.

The memory 1820 may be a separate device independent of the processor 1810, or may be integrated in the processor 1810.

In some embodiments, the chip 1800 may further include an input interface 1830. The processor 1810 can control the input interface 1830 to communicate with other devices or chips, and specifically, can acquire information or data sent by other devices or chips.

In some embodiments, the chip 1800 may further include an output interface 1840. The processor 1810 can control the output interface 1840 to communicate with other devices or chips, and specifically, can output information or data to other devices or chips.

In some embodiments, the chip 1800 can be applied to the network device or the UE in the embodiments of the present disclosure, and the chip 1800 can implement the corresponding processes implemented in the respective methods of the embodiments of the present disclosure, which will not be repeated here for brevity.

It should be understood that the chip 1800 mentioned in the embodiments of the present disclosure may also be referred to as a system-on-chip, a system chip, a chip system, or a system-on-a-chip, etc.

Those of ordinary skill in the art can understand that all or part of the processes in the methods of the above embodiments can be implemented by instructing relevant hardware through a computer program, and the computer program can be stored in a non-volatile computer-readable storage medium. When the computer program is executed, it can include the processes of the embodiments of the above methods. Any reference to memory, storage, database, or other media used in the embodiments provided in the present disclosure may include at least one of non-volatile and volatile memories. The non-volatile memory may include a read-only memory (ROM), a magnetic tape, a floppy disk, a flash memory, or an optical memory, etc. The volatile memory may include a random access memory (RAM) or an external cache memory. By way of illustration and not limitation, the RAM can be in various forms, such as a static random access memory (SRAM) or a dynamic random access memory (DRAM), etc.

The technical features of the above embodiments can be combined arbitrarily. To make the description concise, not all possible combinations of the technical features in the above embodiments are described. However, as long as there is no contradiction in the combination of these technical features, they should be considered as the scope recorded in this specification.

The above embodiments only express several implementation modes of the present disclosure, and the description thereof is relatively specific and detailed, but it cannot be understood as limiting the scope of the invention patent. It should be pointed out that for those of ordinary skill in the art, without departing from the concept of the present disclosure, several modifications and improvements can also be made, and these all belong to the protection scope of the present disclosure. Therefore, the scope of the present disclosure shall be subject to the appended claims.

Finally, it should be noted that the above embodiments are only used to illustrate the technical solutions of the present disclosure, but not to limit them. Although the present disclosure has been described in detail with reference to the foregoing embodiments, those of ordinary skill in the art should understand that they can still modify the technical solutions recorded in the foregoing embodiments, or equivalently replace some or all of the technical features therein; and these modifications or replacements do not make the essence of the corresponding technical solutions depart from the scope of the technical solutions of the embodiments of the present disclosure, and they should all be covered within the scope of the claims and the specification of the present disclosure. In particular, as long as there is no structural conflict, the various technical features mentioned in the respective embodiments can be combined in any manner. The present disclosure is not limited to the specific embodiments disclosed herein, but includes all technical solutions falling within the scope of the claims.

## Claims

1. An information transmission method, applied to a network device, comprising:
determining antenna ports respectively corresponding to a plurality of channel state information reference signal (CSI-RS) resources, wherein the plurality of CSI-RS resources each correspond to different antenna ports; and
sending CSI-RSs to a user equipment (UE) through the antenna ports respectively corresponding to the plurality of CSI-RS resources, wherein the CSI-RSs are configured for the UE to generate a CSI report based on the CSI-RSs.

2. The method according to claim 1, further comprising:
sending, to the UE, a number of ports of CSI-RS resources associated with the CSI report and used for a channel measurement, wherein the number of ports is equal to a total number of the antenna ports respectively corresponding to the plurality of CSI-RS resources.

3. The method according to claim 1, wherein the determining the antenna ports respectively corresponding to the plurality of CSI-RS resources comprises:
determining the antenna ports according to resource configuration information of the plurality of CSI-RS resources and/or respective resource indexes of the plurality of CSI-RS resources.

4. The method according to claim 3, wherein antenna port indexes of the antenna ports are consecutive positive integers.

5. The method according to claim 4, wherein the determining the antenna ports according to the resource configuration information of the plurality of CSI-RS resources and/or the respective resource indexes of the plurality of CSI-RS resources comprises:
for each of the plurality of CSI-RS resources, obtaining, from the resource configuration information, antenna port offsets respectively corresponding to the plurality of CSI-RS resources; and
determining the antenna ports according to the resource configuration information of the plurality of CSI-RS resources and the antenna port offsets respectively corresponding to the plurality of CSI-RS resources.

6. The method according to claim 5, wherein the determining the antenna ports according to the resource configuration information of the plurality of CSI-RS resources and the antenna port offsets respectively corresponding to the plurality of CSI-RS resources comprises:
for each of the plurality of CSI-RS resources, determining an antenna port p corresponding to the CSI-RS resource according to a first formula, wherein the first formula is: $p = δ + s + j ∗ L + Δ p$
wherein δ is a preset constant, s=0,1,...,L-1, L is a quantity of resource elements (REs) in a code division multiplexing (CDM) group corresponding to the CSI-RS resource, j=0,1,...,(N/L)-1, N is the number of antenna ports corresponding to the CSI-RS resource, Δp is an antenna port offset corresponding to the CSI-RS resource, and s, j, L and Δp are obtained based on the resource configuration information.

7. The method according to claim 5, wherein
the antenna port offsets respectively corresponding to the plurality of CSI-RS resources are different, and a difference between the antenna port offsets respectively corresponding to two of the plurality of CSI-RS resources is related to the numbers of the antenna ports respectively corresponding to the two of the plurality of CSI-RS resources; or
the antenna port offsets respectively corresponding to the plurality of CSI-RS resources are different, and the antenna port offsets respectively corresponding to the plurality of CSI-RS resources are related to the respective resource indexes of the plurality of CSI-RS resources.

8. The method according to claim 4, wherein the determining the antenna ports according to the resource configuration information of the plurality of CSI-RS resources and/or the respective resource indexes of the plurality of CSI-RS resources comprises:
for each of the plurality of CSI-RS resources, determining an antenna port p corresponding to the CSI-RS resource according to a second formula, wherein the second formula is: $p = δ + s + j ∗ L + k ∗ N$
wherein δ is a preset constant, k is a resource index of the CSI-RS resource, k=0,1,...,K-1, K is the number of the plurality of CSI-RS resources, s=0,1,...,L-1, L is a quantity of REs in a CDM group corresponding to the CSI-RS resource, j=0,1,...,(N/L)-1, N is the number of antenna ports corresponding to the CSI-RS resource, and s, j, L and N are obtained based on the resource configuration information.

9. The method according to claim 4, wherein the determining the antenna ports according to the resource configuration information of the plurality of CSI-RS resources and/or the respective resource indexes of the plurality of CSI-RS resources comprises:
for each of the plurality of CSI-RS resources, determining an antenna port p corresponding to the CSI-RS resource according to a third formula, wherein the third formula is: $p = δ + {s}_{k} + {j}_{k} * {L}_{k} + {\sum }_{i = 0}^{k - 1} {N}_{i}$
wherein δ is a preset constant, k is a resource index of the CSI-RS resource, k=0,1,...,K-1, K is the number of the plurality of CSI-RS resources, Sₖ=0,1,...,Lₖ₋₁, Lₖ is a quantity of REs in a CDM group corresponding to a k-th CSI-RS resource among the plurality of CSI-RS resources, jₖ=0,1,...,(Nₖ/Lₖ)-1, Nᵢ is the number of antenna ports corresponding to the i-th CSI-RS resource among the plurality of CSI-RS resources, and Sₖ, jₖ, Lₖ and Nᵢ are obtained based on the resource configuration information.

10. The method according to claim 3, wherein the antenna ports corresponding to each of the plurality of CSI-RS resources are divided into two groups, and antenna port indexes of a plurality of antenna ports in each of the two groups are consecutive positive integers.

11. The method according to claim 10, wherein an absolute value of a difference between respective smallest antenna port indexes of the two groups of antenna ports corresponding to each of the plurality of CSI-RS resources is equal to one half of a total number of the antenna ports respectively corresponding to the plurality of CSI-RS resources.

12. The method according to claim 10, wherein the determining the antenna ports according to the resource configuration information of the plurality of CSI-RS resources and/or the respective resource indexes of the plurality of CSI-RS resources comprises:
for each of the plurality of CSI-RS resources, determining an antenna port p corresponding to the CSI-RS resource according to a fourth formula, wherein the fourth formula is: $p = δ + s + \left(j+\left(\left⌊\frac{j}{2}\right⌋+k\right)∗\frac{\frac{N}{L}}{2}\right) ∗ L$
wherein δ is a preset constant, k is a resource index of the CSI-RS resource, k=0,1,...,K-1, K is the number of the plurality of CSI-RS resources, s=0,1,...,L-1, L is a quantity of REs in a CDM group corresponding to the CSI-RS resource, j=0,1,...,(N/L)-1, N is the number of antenna ports corresponding to the CSI-RS resource, and s, j, L and N are obtained based on the resource configuration information.

13. The method according to claim 10, wherein the determining the antenna ports according to the resource configuration information of the plurality of CSI-RS resources and/or the respective resource indexes of the plurality of CSI-RS resources comprises:
for each of the plurality of CSI-RS resources, determining an antenna port p corresponding to the CSI-RS resource according to a fifth formula, wherein the fifth formula is: $p = \left\{\begin{matrix}δ + s + j ∗ L + \frac{N}{2} ∗ k , j = 0 , … , \frac{N}{2 L} - 1 \\ δ + s + j ∗ L + \frac{N}{2} ∗ \left(k+K-1\right) , j = \frac{N}{2 L} , … , \frac{N}{L} - 1\end{matrix}\right.$
wherein δ is a preset constant, k is a resource index of the CSI-RS resource, k=0,1,...,K-1, K is the number of the plurality of CSI-RS resources, s=0,1,...,L-1, L is a quantity of REs in a CDM group corresponding to the CSI-RS resource, j=0,1,...,(N/L)-1, N is the number of antenna ports corresponding to the CSI-RS resource, and s, j, L and N are obtained based on the resource configuration information.

14. The method according to claim 2, wherein the number of ports is configured through a preset field in configuration information of the CSI report, or the number of ports is configured through a preset field in resource configuration information of the CSI-RS resource associated with the CSI report and used for the channel measurement.

15. The method according to any one of claims 3 to 13, further comprising:
determining the respective resource indexes of the plurality of CSI-RS resources according to respective resource identities (IDs) of the plurality of CSI-RS resources.

16. The method according to claim 15, wherein the determining the respective resource indexes of the plurality of CSI-RS resources according to the respective resource IDs of the plurality of CSI-RS resources comprises:
sorting the plurality of CSI-RS resources in an ascending order or a descending order of the respective resource IDs of the plurality of CSI-RS resources to obtain a sorted sequence of the plurality of CSI-RS resources; and
determining respective position indexes of the plurality of CSI-RS resources in the sorted sequence as the respective resource indexes of the plurality of CSI-RS resources.

17. The method according to any one of claims 3 to 13, further comprising:
determining the respective resource indexes of the plurality of CSI-RS resources according to both frequency-domain positions and time-domain positions respectively occupied by the plurality of CSI-RS resources.

18. The method according to claim 17, wherein the determining the respective resource indexes of the plurality of CSI-RS resources according to both the frequency-domain positions and the time-domain positions respectively occupied by the plurality of CSI-RS resources comprises:
sorting, in a frequency domain, the plurality of CSI-RS resources in an ascending order of both common resource block (CRB) indexes and subcarrier indexes respectively corresponding to the plurality of CSI-RS resources, sorting, in a time domain, the plurality of CSI-RS resources in an ascending order of slot indexes respectively corresponding to the plurality of CSI-RS resources to obtain a first sorting result, and determining the respective resource indexes of the plurality of CSI-RS resources according to the first sorting result;
or
sorting, in a time domain, the plurality of CSI-RS resources in an ascending order of slot indexes respectively corresponding to the plurality of CSI-RS resources, and sorting, in a frequency domain, the plurality of CSI-RS resources in an ascending order of both CRB indexes and subcarrier indexes respectively corresponding to the plurality of CSI-RS resources to obtain a second sorting result, and determining the respective resource indexes of the plurality of CSI-RS resources according to the second sorting result.

19. The method according to any one of claims 1 to 18, further comprising:
receiving the CSI report sent by the UE, wherein the CSI report is generated by the UE based on successfully received CSI-RSs.

20. An information transmission method, applied to a user equipment (UE), comprising:
receiving channel state information reference signals (CSI-RSs) sent by a network device, wherein the CSI-RSs are sent by the network device through antenna ports respectively corresponding to a plurality of CSI-RS resources, and the plurality of CSI-RS resources each correspond to different antenna ports; and
determining the antenna ports according to the CSI-RSs, and generating a CSI report according to the antenna ports and the CSI-RSs.

21. The method according to claim 20, further comprising:
receiving, from the network device, a number of ports of CSI-RS resources associated with the CSI report and used for a channel measurement, wherein the number of ports is equal to a total number of the antenna ports respectively corresponding to the plurality of CSI-RS resources;
wherein the determining the antenna ports according to the CSI-RSs comprises:
determining the antenna ports according to the number of ports and the CSI-RSs.

22. The method according to claim 20, wherein the determining the antenna ports according to the CSI-RSs comprises:
determining the antenna ports according to resource configuration information of the plurality of CSI-RS resources corresponding to the CSI-RSs and/or respective resource indexes of the plurality of CSI-RS resources.

23. The method according to claim 22, wherein antenna port indexes of the antenna ports are consecutive positive integers.

24. The method according to claim 23, wherein the determining the antenna ports according to the resource configuration information of the plurality of CSI-RS resources corresponding to the CSI-RSs and/or the respective resource indexes of the plurality of CSI-RS resources comprises:
for each of the plurality of CSI-RS resources, obtaining, from the resource configuration information, antenna port offsets respectively corresponding to the plurality of CSI-RS resources; and
determining the antenna ports according to the resource configuration information of the plurality of CSI-RS resources and the antenna port offsets respectively corresponding to the plurality of CSI-RS resources.

25. The method according to claim 24, wherein the determining the antenna ports according to the resource configuration information of the plurality of CSI-RS resources and the antenna port offsets respectively corresponding to the plurality of CSI-RS resources comprises:
for each of the plurality of CSI-RS resources, determining an antenna port p corresponding to the CSI-RS resource according to a first formula, wherein the first formula is: $p = δ + s + j ∗ L + Δ p$
wherein δ is a preset constant, s=0,1,...,L-1, L is a quantity of REs in a CDM group corresponding to the CSI-RS resource, j=0,1,...,(N/L)-1, N is the number of antenna ports corresponding to the CSI-RS resource, Δp is an antenna port offset corresponding to the CSI-RS resource, and s, j, L and Δp are obtained based on the resource configuration information.

26. The method according to claim 24, wherein
the antenna port offsets respectively corresponding to the plurality of CSI-RS resources are different, and a difference between the antenna port offsets respectively corresponding to two of the plurality of CSI-RS resources is related to the numbers of the antenna ports respectively corresponding to the two of the plurality of CSI-RS resources; or
the antenna port offsets respectively corresponding to the plurality of CSI-RS resources are different, and the antenna port offsets respectively corresponding to the plurality of CSI-RS resources are related to the respective resource indexes of the plurality of CSI-RS resources.

27. The method according to claim 23, wherein the determining the antenna ports according to the resource configuration information of the plurality of CSI-RS resources corresponding to the CSI-RSs and/or the respective resource indexes of the plurality of CSI-RS resources comprises:
for each of the plurality of CSI-RS resources, determining an antenna port p corresponding to the CSI-RS resource according to a second formula, wherein the second formula is: $p = δ + s + j ∗ L + k ∗ N$
wherein δ is a preset constant, k is a resource index of the CSI-RS resource, k = 0,1,...,K-1, K is the number of the plurality of CSI-RS resources, s = 0,1,...,L-1, L is a quantity of REs in a CDM group corresponding to the CSI-RS resource, j=0,1,...,(N/L)-1, N is the number of antenna ports corresponding to the CSI-RS resource, and s, j, L and N are obtained based on the resource configuration information.

28. The method according to claim 23, wherein the determining the antenna ports according to the resource configuration information of the plurality of CSI-RS resources corresponding to the CSI-RSs and/or the respective resource indexes of the plurality of CSI-RS resources comprises:
for each of the plurality of CSI-RS resources, determining an antenna port p corresponding to the CSI-RS resource according to a third formula, wherein the third formula is: $p = δ + {s}_{k} + {j}_{k} * {L}_{k} + {\sum }_{i = 0}^{k - 1} {N}_{i}$
wherein δ is a preset constant, k is a resource index of the CSI-RS resource, k = 0,1,...,K-1, K is the number of the plurality of CSI-RS resources, Sₖ = 0,1,...,Lₖ₋₁, Lₖ is a quantity of REs in a CDM group corresponding to a k-th CSI-RS resource among the plurality of CSI-RS resources, jₖ = 0,1,...,(Nₖ/Lₖ)-1, Nᵢ is the number of antenna ports corresponding to the i-th CSI-RS resource among the plurality of CSI-RS resources, and Sₖ, jₖ, Lₖ and Nᵢ are obtained based on the resource configuration information.

29. The method according to claim 22, wherein the antenna ports corresponding to each of the plurality of CSI-RS resources are divided into two groups, and antenna port indexes of a plurality of antenna ports in each of the two groups are consecutive positive integers.

30. The method according to claim 29, wherein an absolute value of a difference between respective smallest antenna port indexes of the two groups of antenna ports corresponding to each of the plurality of CSI-RS resources is equal to one half of a total number of the antenna ports respectively corresponding to the plurality of CSI-RS resources.

31. The method according to claim 29, wherein the determining the antenna ports according to the resource configuration information of the plurality of CSI-RS resources corresponding to the CSI-RSs and/or the respective resource indexes of the plurality of CSI-RS resources comprises:
for each of the plurality of CSI-RS resources, determining an antenna port p corresponding to the CSI-RS resource according to a fourth formula, wherein the fourth formula is: $p = δ + s + \left(j+\left(\left⌊\frac{j}{2}\right⌋+k\right)∗\frac{\frac{N}{L}}{2}\right) ∗ L$
wherein δ is a preset constant, k is a resource index of the CSI-RS resource, k = 0,1,...,K-1, K is the number of the plurality of CSI-RS resources, s = 0,1,...,L-1, L is a quantity of REs in a CDM group corresponding to the CSI-RS resource, j=0,1,...,(N/L)-1, N is the number of antenna ports corresponding to the CSI-RS resource, and s, j, L and N are obtained based on the resource configuration information.

32. The method according to claim 29, wherein the determining the antenna ports according to the resource configuration information of the plurality of CSI-RS resources corresponding to the CSI-RSs and/or the respective resource indexes of the plurality of CSI-RS resources comprises:
for each of the plurality of CSI-RS resources, determining an antenna port p corresponding to the CSI-RS resource according to a fifth formula, wherein the fifth formula is: $p = \left\{\begin{matrix}δ + s + j ∗ L + \frac{N}{2} ∗ k , j = 0 , … , \frac{N}{2 L} - 1 \\ δ + s + j ∗ L + \frac{N}{2} ∗ \left(k+K-1\right) , j = \frac{N}{2 L} , … , \frac{N}{L} - 1\end{matrix}\right.$
wherein δ is a preset constant, k is a resource index of the CSI-RS resource, k=0,1,...,K-1, K is the number of the plurality of CSI-RS resources, s=0,1,...,L-1, L is a quantity of REs in a CDM group corresponding to the CSI-RS resource, j=0,1,...,(N/L)-1, N is the number of antenna ports corresponding to the CSI-RS resource, and s, j, L and N are obtained based on the resource configuration information.

33. The method according to claim 21, wherein the number of ports is configured through a preset field in configuration information of the CSI report, or the number of ports is configured through a preset field in resource configuration information of the CSI-RS resource associated with the CSI report and used for the channel measurement.

34. The method according to any one of claims 22 to 32, further comprising:
determining the respective resource indexes of the plurality of CSI-RS resources according to respective resource identities (IDs) of the plurality of CSI-RS resources.

35. The method according to claim 34, wherein the determining the respective resource indexes of the plurality of CSI-RS resources according to the respective resource IDs of the plurality of CSI-RS resources comprises:
sorting the plurality of CSI-RS resources in an ascending order or a descending order of the respective resource IDs of the plurality of CSI-RS resources to obtain a sorted sequence of the plurality of CSI-RS resources; and
determining respective position indexes of the plurality of CSI-RS resources in the sorted sequence as the respective resource indexes of the plurality of CSI-RS resources.

36. The method according to any one of claims 22 to 32, further comprising:
determining the respective resource indexes of the plurality of CSI-RS resources according to both frequency-domain positions and time-domain positions respectively occupied by the plurality of CSI-RS resources.

37. The method according to claim 36, wherein the determining the respective resource indexes of the plurality of CSI-RS resources according to both the frequency-domain positions and the time-domain positions respectively occupied by the plurality of CSI-RS resources comprises:
sorting, in a frequency domain, the plurality of CSI-RS resources in an ascending order of both common resource block (CRB) indexes and subcarrier indexes respectively corresponding to the plurality of CSI-RS resources, sorting, in a time domain, the plurality of CSI-RS resources in an ascending order of slot indexes respectively corresponding to the plurality of CSI-RS resources to obtain a first sorting result, and determining the respective resource indexes of the plurality of CSI-RS resources according to the first sorting result;
or
sorting, in a time domain, the plurality of CSI-RS resources in an ascending order of slot indexes respectively corresponding to the plurality of CSI-RS resources, and sorting, in a frequency domain, the plurality of CSI-RS resources in an ascending order of both CRB indexes and subcarrier indexes respectively corresponding to the plurality of CSI-RS resources to obtain a second sorting result, and determining the respective resource indexes of the plurality of CSI-RS resources according to the second sorting result.

38. An information transmission apparatus, applied to a network device, comprising:
a determining module configured to determine antenna ports respectively corresponding to a plurality of channel state information reference signal (CSI-RS) resources, wherein the plurality of CSI-RS resources each correspond to different antenna ports; and
a transmitting module configured to send CSI-RSs to a user equipment (UE) through the antenna ports respectively corresponding to the plurality of CSI-RS resources, wherein the CSI-RSs are configured for the UE to generate a CSI report based on the CSI-RSs.

39. An information transmission apparatus, applied to a UE, comprising:
a receiving module configured to receive channel state information reference signals (CSI-RSs) sent by a network device, wherein the CSI-RSs are sent by the network device through antenna ports respectively corresponding to a plurality of CSI-RS resources, and the plurality of CSI-RS resources each correspond to different antenna ports; and
a processing module configured to determine the antenna ports according to the CSI-RSs and generate a CSI report according to the antenna ports and the CSI-RSs.

40. A network device, comprising a memory, a transceiver, and a processor, wherein
the memory is configured to store a computer program, the transceiver is configured to send and receive data under a control of the processor, and the processor is configured to read the computer program in the memory and perform:
determining antenna ports respectively corresponding to a plurality of channel state information reference signal (CSI-RS) resources, wherein the plurality of CSI-RS resources each correspond to different antenna ports; and
controlling the transceiver to send CSI-RSs to a user equipment (UE) through the antenna ports respectively corresponding to the plurality of CSI-RS resources, wherein the CSI-RSs are configured for the UE to generate a CSI report based on the CSI-RSs.

41. A user equipment (UE), comprising a memory, a transceiver, and a processor, wherein
the memory is configured to store a computer program, the transceiver is configured to send and receive data under a control of the processor, and the processor is configured to read the computer program in the memory and perform:
controlling the transceiver to receive channel state information reference signals (CSI-RSs) sent by a network device, wherein the CSI-RSs are sent by the network device through antenna ports respectively corresponding to a plurality of CSI-RS resources, and the plurality of CSI-RS resources each correspond to different antenna ports; and
determining the antenna ports according to the CSI-RSs, and generating a CSI report according to the antenna ports and the CSI-RSs.

42. An information transmission system, comprising a network device and a user equipment (UE), wherein:
the network device is configured to perform the method according to any one of claims 1 to 19; and
the UE is configured to perform the method according to any one of claims 20 to 37.

43. A computer-readable storage medium, having stored therein a computer program that, when executed by a processor, perform the method according to any one of claims 1 to 37.
